(19) Europäisches Patentamt
European Patent Office
Office européen des brevets

(11) EP 2 688 980 B1

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(21) Anmeldenummer: **12709512.3**

(22) Anmeldetag: **07.03.2012**

(51) Int Cl.:
***C09K 19/18*** *(2006.01)* ***C09K 19/32*** *(2006.01)*
***C09K 19/30*** *(2006.01)*

(86) Internationale Anmeldenummer:
**PCT/EP2012/001015**

(87) Internationale Veröffentlichungsnummer:
**WO 2012/126576 (27.09.2012 Gazette 2012/39)**

(54) **MESOGENE VERBINDUNGEN, FLÜSSIGKRISTALLINE MEDIEN UND BAUTEILE FÜR DIE HOCHFREQUENZTECHNIK**

MESOGEN COMPOUNDS, LIQUID CRYSTALLINE MEDIA AND COMPONENTS FOR HIGH FREQUENCY TECHNOLOGY

COMPOSÉS MÉSOGÈNES, MILIEUX À BASE DE CRISTAUX LIQUIDES ET COMPOSANTS POUR LA TECHNIQUE HAUTE FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2011 DE 102011015037**

(43) Veröffentlichungstag der Anmeldung:
**29.01.2014 Patentblatt 2014/05**

(73) Patentinhaber: **Merck Patent GmbH**
**64293 Darmstadt (DE)**

(72) Erfinder:
- **MANABE, Atsutaka**
  **64625 Bensheim (DE)**
- **JASPER, Christian**
  **64283Darmstadt (DE)**
- **REIFFENRATH, Volker**
  **64380 Rossdorf (DE)**
- **MONTENEGRO, Elvira**
  **69469 Weinheim (DE)**
- **PAULUTH, Detlef**
  **64372 Ober-Ramstadt (DE)**
- **KLASS, Dagmar**
  **64291 Darmstadt (DE)**

(56) Entgegenhaltungen:
**EP-A1- 0 968 988** **DE-A1- 10 120 024**
**DE-A1- 19 907 941** **DE-A1-102004 029 429**
**JP-A- 2003 207 631** **US-A- 5 356 558**

- **HSU C S ET AL: "SYNTHESIS OF LATERALLY SUBSTITUTED BISTOLANE LIQUID CRYSTALS", LIQUID CRYSTALS: AN INTERNATIONAL JOURNAL OF SCIENCE AND TECHNOLOGY, TAYLOR & FRANCIS, GB, Bd. 27, Nr. 2, 1. Februar 2000 (2000-02-01), Seiten 283-287, XP000932257, ISSN: 0267-8292, DOI: 10.1080/026782900203100 in der Anmeldung erwähnt**
- **WU SHIN-TSON ET AL: "High birefringence and wide nematic range bis-tolane liquid crystals", APPLIED PHYSICS LETTERS, AIP, AMERICAN INSTITUTE OF PHYSICS, MELVILLE, NY, US, Bd. 74, Nr. 3, 18. Januar 1999 (1999-01-18), Seiten 344-346, XP012023047, ISSN: 0003-6951, DOI: 10.1063/1.123066 in der Anmeldung erwähnt**
- **ZHENLIN ZHANGA ET AL: "Synthesis and properties of highly birefringent liquid crystalline materials: 2,5-bis(5-alkyl-2-butadinylthiophene-yl) styrene monomers", LIQUID CRYSTALS: AN INTERNATIONAL JOURNAL OF SCIENCE AND TECHNOLOGY, TAYLOR & FRANCIS, GB, Bd. 37, Nr. 1, 1. Januar 2010 (2010-01-01) , Seiten 69-76, XP001553170, ISSN: 0267-8292, DOI: 10.1080/02678290903370272**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- LIU K ET AL: "SYNTHESIS AND CHARACTERIZATION OF NOVEL FLUORINATED BISTOLANE-TYPE LIQUID CRYSTALS", LIQUID CRYSTALS: AN INTERNATIONAL JOURNAL OF SCIENCE AND TECHNOLOGY, TAYLOR & FRANCIS, GB, Bd. 28, Nr. 10, 1. Oktober 2001 (2001-10-01), Seiten 1463-1467, XP001117376, ISSN: 0267-8292, DOI: 10.1080/02678290110068451

**Beschreibung**

Gebiet der Erfindung

Die vorliegende Erfindung betrifft flüssigkristalline Medien insbesondere für Bauteile für die Hochfrequenztechnik, speziell Bauteile für Hochfrequenzvorrichtungen, insbesondere Antennen, speziell für den Gigahertzbereich und den Terahertzbereich, die im Mikrowellen- oder im Millimeterwellenbereich betrieben werden. Diese Bauteile verwenden besondere mesogene, bevorzugt flüssigkristalline, chemische Verbindungen oder damit zusammengestellte flüssigkristalline Medien beispielsweise zur Phasenschiebung von Mikrowellen für abstimmbare "phased-array" Antennen oder für abstimmbare Zellen von Mikrowellenantennen basierend auf "reflect arrays". Außerdem betrifft die vorliegende Erfindung neue mesogene Verbindungen.

Stand der Technik und zu lösendes Problem

Flüssigkristalline Medien werden seit längerem in elektrooptischen Anzeigen (Liquid Crystal Displays - LCDs) genutzt, um Informationen anzuzeigen.

Bistolanverbindungen, auch Triphenyldiacetylene genannt, mit einer zusätzlichen Alkylsubstitution am zentralen Phenylenring sind dem Fachmann hinlänglich bekannt.

Z.B. Wu, S.-T., Hsu, C.-S. und Shyu, K.-F., Appl. Phys. Lett., 74 (3), (1999), Seiten 344 - 346 offenbart verschiedene flüssigkristalline Bistolanverbindungen mit einer lateralen Methylgruppe der Formel

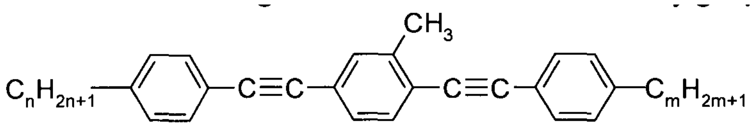

Hsu, C. S. Shyu, K. F., Chuang, Y. Y. und Wu, S.-T., Liq. Cryst., 27 (2), (2000), Seiten 283 - 287 offenbart, neben solchen flüssigkristallinen Bistolanverbindungen mit einer lateralen Methylgruppe, auch entsprechende Verbindungen mit einer lateralen Ethylgruppe und schlägt deren Verwendung u. a. in "liquid crystal optically phased arrays" vor.

Auch lateral fluorierte Bistolane für die Anwendung in Flüssigkristallanzeigen sind aus dem Stand der Technik bekannt und finden besonders dann Anwendung, wenn eine hohe Doppelbrechung erwünscht ist: In der DE 199 07941 A1 sind Bistolane beschrieben, die in beliebigen lateralen Positionen sowohl durch Fluor als auch durch Alkyl substituiert sind; ensprechende durch Alkoxy anstelle von Alkyl substituierte Verbindungen sind in DE 101 20024 A1 offengelegt.

Entsprechende Verbindungen zur Verwendung als Komponente in Flüssigkristallmischungen mit positiver dielektrische Anisotropie und hoher Doppelbrechung sind auch in EP0968988A1 beschrieben.

Ausschließlich im mittleren Ring fluorierte Bistolanderivate für Displayanwendungen sind in US 5,356,558 A offenbart.

Ein vom Styrol abgeleitetes Bistolanderivat der Formel

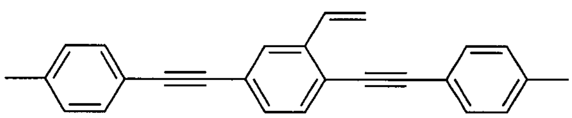

ist in Z. Zhang et al., Liquid Crystals 2009, 37(1), 69-76 veröffentlicht.

Ebenfalls lateral fluorierte Bistolane mit Alkoxy-Seitenketten für die potentielle Anwendung in Flüssigkristallanzeigen, wie beispielsweise die Verbindung der folgenden Struktur

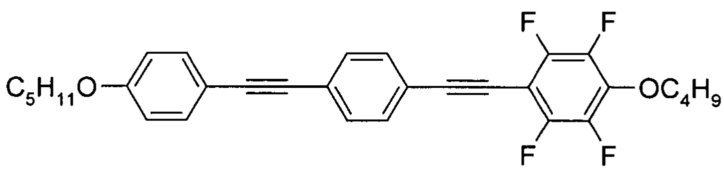

sind in K. Liu et al., Liquid Crystals 2001, 28(10), 1463-1467 beschrieben und zeichnen sich neben einer hohen optischen Anisotropie durch breite nematische Phasen aus.

In Dabrowski, R., Kula, P. Gauza, S., Dziadiszek, J. Urban, S. und Wu, S.-T., IDRC 08, (2008), Seiten 35 - 38 werden dielektrisch neutrale Bistolanverbindungen mit und ohne lateraler Methylgruppe am mittleren Ring neben den stark dielektrisch positiven Isothiocyanatbistolanverbindungen der Formel

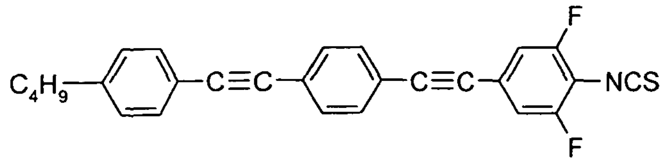

erwähnt.

Verbindungen mit drei C-C-Dreifachbindungen wie z.B. die Verbindung

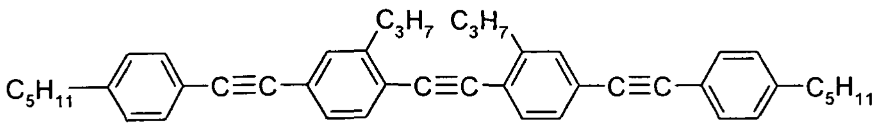

werden in JP 2003-207631 A) erwähnt und für die Anwendung in optischen Filmen, Polarisatoren und in Flüssigkristallen vom Licht streuenden Typ vorgeschlagen.

In neuerer Zeit werden flüssigkristalline Medien jedoch auch für die Verwendung in Komponenten, bzw. in Bauteilen, für die Mikrowellentechnik vorgeschlagen, wie z.B. in DE 10 2004 029 429 A und in JP 2005-120208 (A) beschrieben.

Eine technisch wertvolle Anwendung der flüssigkristallinen Medien in der Hochfrequenztechnik beruht auf ihrer Eigenschaft, dass sie sich durch eine variable Spannung in ihren dielektrischen Eigenschaften steuern lassen, besonders für den Gigahertzbereich und den Terahertzbereich. Somit lassen sich abstimmbare Antennen konstruieren, die keine mechanisch beweglichen Teile beinhalten (A. Gaebler, A. Moessinger, F. Goelden, et al., "Liquid Crystal-Reconfigurable Antenna Concepts for Space Applications at Microwave and Millimeter Waves", International Journal of Antennas and Propagation, Band 2009, Artikel ID 876989, (2009), Seiten 1 - 7, doi:10.1155/2009/876989.

A. Penirschke, S. Müller, P. Scheele, C. Weil, M. Wittek, C. Hock und R. Jakoby: "Cavity Perturbation Method for Characterization of Liquid Crystals up to 35 GHz", 34th European Microwave Conference - Amsterdam, S. 545 - 548, beschreibt unter anderem die Eigenschaften der bekannten, flüssigkristallinen Einzelsubstanz K15 (auch 4-n-Pentyl-4'-cyanobiphenyl oder PP-5-N genannt, Merck KGaA, Deutschland) bei einer Frequenz von 9 GHz.

DE 10 2004 029 429 A beschreibt die Anwendung von Flüssigkristallmedien in der Mikrowellentechnik unter anderem in Phasenschiebern. In DE 10 2004 029 429 A werden bereits flüssigkristalline Medien bezüglich ihrer Eigenschaften im entsprechenden Frequenzbereich untersucht.

Für die Anwendung in der Hochfrequenztechnik werden flüssigkristalline Medien mit besonderen, bislang eher ungewöhnlichen, ungebräuchlichen Eigenschaften, bzw. Kombinationen von Eigenschaften benötigt.

A. Gaebler, F. Goelden, S. Müller, A. Penirschke und R. Jakoby "Direct Simulation of Material Permittivities using an Eigen-Susceptibility Formulation of the Vector Variational Approach", 12MTC 2009 - International Instrumentation and Measurement Technology Conference, Singapur, 2009 (IEEE), S. 463-467 beschreibt die entsprechenden Eigenschaften der bekannten Flüssigkristallmischung E7 (ebenfalls Merck KGaA, Deutschland).

DE 10 2004 029 429 A beschreibt die Anwendung von Flüssigkristallmedien in der Mikrowellentechnik unter anderem in Phasenschiebern. In DE 10 2004 029 429 A werden bereits flüssigkristalline Medien bezüglich ihrer Eigenschaften im entsprechenden Frequenzbereich untersucht. Außerdem werden dort flüssigkristalline Medien, die Verbindungen der Formeln

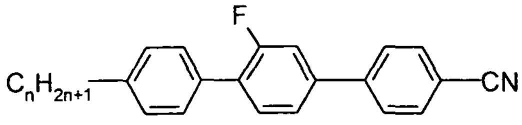

neben Verbindungen der Formeln

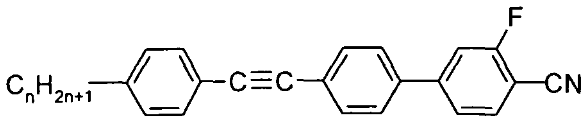

und

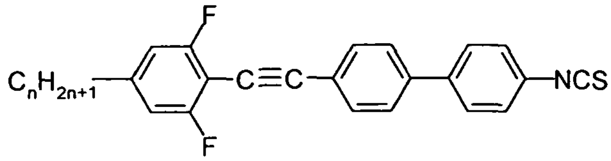

enthalten, erwähnt.

Flüssigkristallmedien, die z.B. Verbindungen der Formel

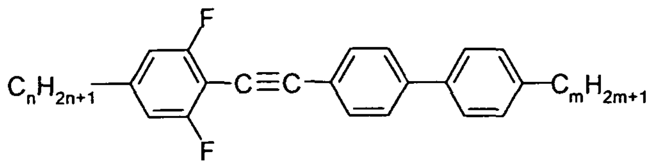

enthalten, werden für die Anwendung in Bauteilen für die Hochfrequenztechnik z.B. in A. Lapanik, "Single compounds and mixtures for microwave applications, Dielectric, microwave studies on selected systems", Dissertation, Technische Universität Darmstadt, 2009, (D17) vorgeschlagen.

Die bisher bekannten Zusammensetzungen sind jedoch mit gravierenden Nachteilen behaftet. Die meisten von ihnen führen, neben anderen Mängeln, zu unvorteilhaft hohen Verlusten und/oder unzureichenden Phasenverschiebungen bzw. zu geringer Materialgüte (η).

Somit sind neue flüssigkristalline Medien mit verbesserten Eigenschaften erforderlich. Insbesondere müssen der Verlust im Mikrowellenbereich und/oder Millimeterwellenbereich verringert und die Materialgüte verbessert werden.

Außerdem besteht der Bedarf das Tieftemperaturverhalten der Flüssigkristallmedien und somit auch der Bauteile zu verbessern. Hier sind sowohl eine Verbesserung der Betriebseigenschaften, wie auch der Lagerfähigkeit nötig.

Es besteht daher ein erheblicher Bedarf an flüssigkristallinen Medien mit geeigneten Eigenschaften für entsprechende praktische Anwendungen.

Vorliegende Erfindung

Überraschenderweise wurde nun gefunden, dass Bauteile für die Hochfrequenztechnik realisiert werden können, welche die Nachteile der Materialien des Standes der Technik nicht oder zumindest nur in erheblich geringerem Maße aufweisen, wenn ausgewählte, flüssigkristalline Medien eingesetzt werden.

Gegenstand der vorliegenden Erfindung sind somit flüssigkristalline Medien die eine oder mehrere Verbindungen der Formel X enthalten,

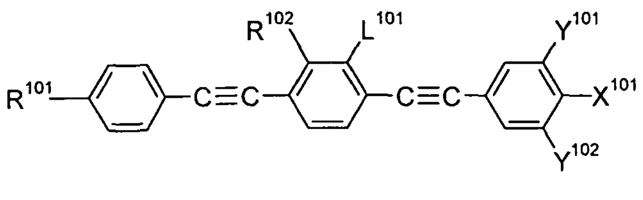

X

worin

$X^{101}$ halogeniertes Alkyl, Alkenyl, Alkoxy oder Alkenyloxy mit 1, 2 oder 3 C-Atomen, CN, NCS, $SF_5$ oder Halogen, bevorzugt $CF_3$, $OCF_3$, CN, NCS, F oder Cl, besonders bevorzugt $CF_3$, $OCF_3$, oder F und ganz besonders bevorzugt F,

$L^{101}$ Alkyl mit 1 bis 6 C-Atomen, Cycloalkyl mit 3 bis 6 C-Atomen, Cycloalkenyl mit 4 bis 6 C-Atomen oder

Halogen, bevorzugt $CH_3$, $C_2H_5$, *n*-$C_3H_7$ (-$(CH_2)_2CH_3$), *i*-$C_3H_7$ (-$CH(CH_3)_2$) Cyclopropyl, Cyclobutyl, Cyclopentyl, Cyclohexyl, Cyclopent-1-enyl, Cyclohex-1-enyl, F oder Cl und besonders bevorzugt $CH_3$, $C_2H_5$, Cyclopropyl, Cyclobutyl oder F und ganz besonders bevorzugt F,

$Y^{101}$ und $Y^{102}$ unabhängig voneinander H, F oder Cl, bevorzugt H oder F, besonders bevorzugt einer F und der andere H oder F,

$R^{101}$ und $R^{102}$ unabhängig voneinander unfluoriertes Alkyl oder unfluoriertes Alkoxy jeweils mit 1 bis 15 C-Atomen, unfluoriertes Alkenyl, unfluoriertes Alkenyloxy oder unfluoriertes Alkoxyalkyl jeweils mit 2 bis 15 C-Atomen, oder Cycloalkyl, Alkylcycloalkyl, Cycloalkenyl, Alkylcycloalkenyl, Alkylcycloalkylalkyl oder Alkycycloalkenylalkyl, jeweils mit bis zu 15 C-Atomen,

bevorzugt

$R^{101}$ unabhängig voneinander unfluoriertes Alkyl oder unfluoriertes Alkoxy jeweils mit 1 bis 7 C-Atomen oder unfluoriertes Alkenyl, unfluoriertes Alkenyloxy oder unfluoriertes Alkoxyalkyl jeweils mit 2 bis 7 C-Atomen,

besonders bevorzugt

$R^{101}$ unfluoriertes Alkyl mit 1 bis 7 C-Atomen oder unfluoriertes Alkenyl, unfluoriertes Alkenyloxy oder unfluoriertes Alkoxyalkyl jeweils mit 2 bis 7 C-Atomen, und

bevorzugt

$R^{102}$ unfluoriertes Alkyl mit 1 bis 5 C-Atomen, unfluoriertes Cycloalkyl oder Cycloalkenyl mit 3 bis 7 C-Atomen, unfluoriertes Alkylcyclohexyl oder unfluoriertes Cyclohexylalkyl jeweils mit 4 bis 12 C-Atomen oder unfluoriertes Alkylcyclohexylalkyl mit 5 bis 15 C-Atomen, besonders bevorzugt Cyclopropyl, Cyclopentyl oder Cyclohexyl und ganz besonders bevorzugt $R^2$ *n*-Alkyl, besonders bevorzugt Methyl, Ethyl oder *n*-Propyl, oder Cycloalkyl, besonders bevorzugt Cyclopropyl,

bedeuten.

Die erfindungsgemäßen Flüssigkristallmedien eignen sich hervorragend zur Verwendung in Bauteilen für die Hochfrequenztechnik, bzw. für den Mikrowellenbereich und/oder den Millimeterbereich des elektromagnetischen Spektrums. Diese Verwendung der Medien, sowie diese Bauteile sind Gegenstand der vorliegenden Erfindung.

In einer ersten bevorzugten Ausführungsform der vorliegenden Erfindung enthält das Bauteil für die Hochfrequenztechnik ein Flüssigkristallmedium, das eine Komponente A enthält, die aus einer Verbindung, aus zwei Verbindungen oder mehreren Verbindungen der Formel X besteht.

Gemäß einer weiteren bevorzugten Ausführungsform der vorliegenden Erfindung enthält das Bauteil für die Hochfrequenztechnik ein flüssigkristallines Medium, enthaltend

- eine erste Komponente, Komponente A, die eine oder mehrere Verbindungen der oben gegebenen Formel X enthält, und
- eine oder mehrere weitere Komponenten ausgewählt aus der Gruppe der im Folgenden definierten Komponenten B bis F,
- einer stark dielektrisch positiven Komponente, Komponente B, die eine dielektrische Anisotropie von 10,0 oder mehr aufweist,
- einer stark dielektrisch negativen Komponente, Komponente C, die eine dielektrische Anisotropie von -5,0 oder weniger aufweist,
- einer weiteren Komponente, Komponente D, die eine dielektrische Anisotropie im Bereich von mehr als -5,0 und von weniger als 10,0 aufweist und aus Verbindungen mit sieben oder mehr, bevorzugt acht oder mehr, fünf- oder sechsgliedrigen Ringen besteht,
- einer weiteren Komponente, Komponente E, die ebenfalls eine dielektrische Anisotropie im Bereich von mehr als -5,0 und von weniger als 10,0 aufweist und aus Verbindungen mit bis zu sechs fünf- oder sechsgliedrigen Ringen besteht und

- einer weiteren Komponente, Komponente F, die ebenfalls eine dielektrische Anisotropie im Bereich von mehr als -5,0 und von weniger als 10,0 aufweist und aus Verbindungen der unten angegebenen Formel I besteht.

Typische Beispiele für fünfgliedrige Ringe sind

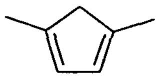 , 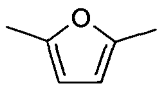 , 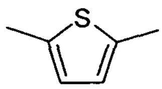 , 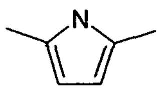 ,

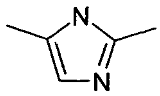

und andere.

Typische Beispiele für sechsgliedrige Ringe sind

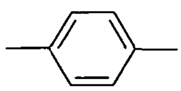 , 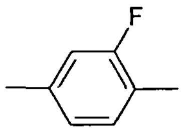 , 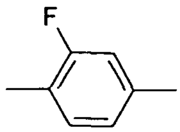 ,

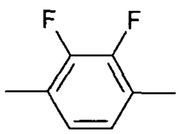 , 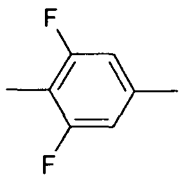 , 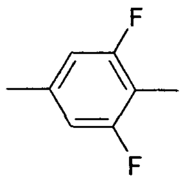 ,

und

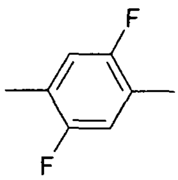 .

Die fünf- und sechsgliedrigen Ringe umfassen auch gesättigte, sowie teilgesättigte Ringe, ebenso wie heterocyclische Ringe.

Im Sinne der vorliegenden Anmeldung werden kondensierte Ringsysteme, die aus zwei dieser Ringe, i. e. aus zwei fünfgliedrigen, einem fünfgliedrigen oder aus zwei sechsgliedrigen Ringen, bestehen, wie z. B.

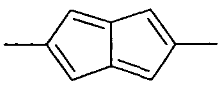 , 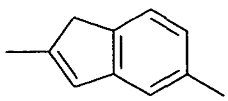 und 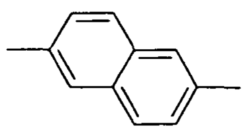

bei der Zuordnung der Verbindungen zu den Komponenten D bzw. E als einer dieser fünf- bzw. sechsgliedrigen Ringe gezählt.

Entsprechend werden kondensierte Ringsysteme, die aus einer Kombination von dreien oder mehreren dieser Ringe bestehen, die in Längsrichtung im Molekül eingebaut sind, wie z.B.

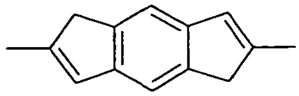
,
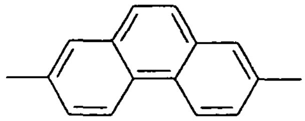

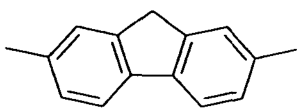
und
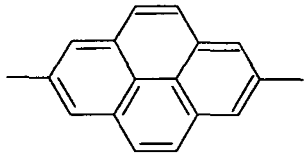

als zwei dieser fünf- bzw. sechsgliedrigen Ringe gezählt.

Im Gegensatz dazu, werden kondensierte Ringsysteme, die in Querrichtung im Molekül eingebaut sind, wie z. B.

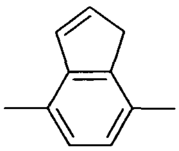
,
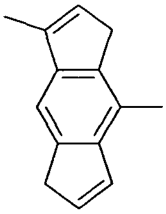
,
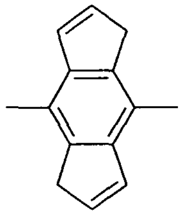
,
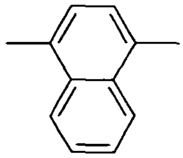
,

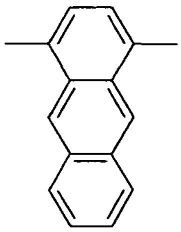
,
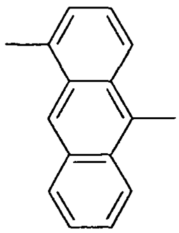
,
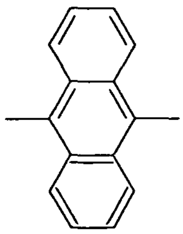
,

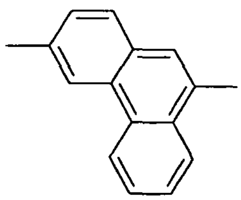
,
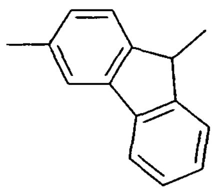
und
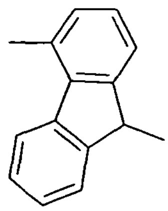

als einer dieser fünf- bzw. sechsgliedrigen Ringe gezählt.

Gegenstand der vorliegenden Erfindung sind ebenfalls die direkt vorhergehend, sowie weiter unten beschriebenen, flüssigkristallinen Medien, sowie deren Verwendung in elektro-optischen Anzeigen und insbesondere in Bauteilen für die Hochfrequenztechnik.

In einer bevorzugten Ausführungsform der vorliegenden Erfindung enthält das Flüssigkristallmedium eine oder mehrere Verbindungen der Formel X, bevorzugt ausgewählt aus den Verbindungen der Formel X-2:

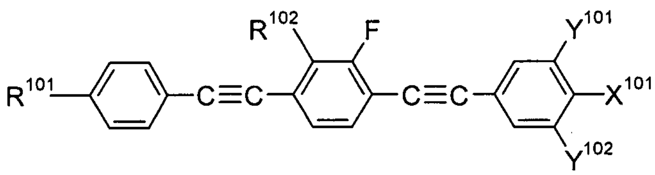
X-2

worin die Parameter die oben unter Formel X angegebenen Bedeutungen haben und bevorzugt

$R^{102}$ Alkyl mit 1 bis 6 C-Atomen, Alkenyl mit 2 bis 6 C-Atomen, Cycloalkyl mit 3 bis 6 C-Atomen oder Cycloalkenyl mit 4 bis 6 C-Atomen, bevorzugt $CH_3$, $C_2H_5$, $n$-$C_3H_7$ (-$(CH_2)_2CH_3$), $i$-$C_3H_7$ (-$CH(CH_3)_2$), -$CH=CH_2$, Cyclopropyl, Cyclobutyl, Cyclopentyl, Cyclohexyl, Cyclopent-1-enyl oder Cyclohex-1-enyl, und besonders bevorzugt $CH_3$, $C_2H_5$, Cyclopropyl oder Cyclobutyl,

bedeutet und die anderen Parameter die jeweiligen oben bei Formel X angegebenen Bedeutungen haben und bevorzugt

$R^{101}$ unfluoriertes Alkyl mit 1 bis 7 C-Atomen,
$Y^{101}$ F und

$X^{101}$ F und $Y^{102}$ F oder $X^{101}$ $OCF_3$ und $Y^{102}$ H,
bedeutet.

In einer weiteren bevorzugten Ausführungsform enthält die Komponente A zusätzlich zu den Verbindungen der Formel X eine oder mehrere Verbindungen der Formel X-1

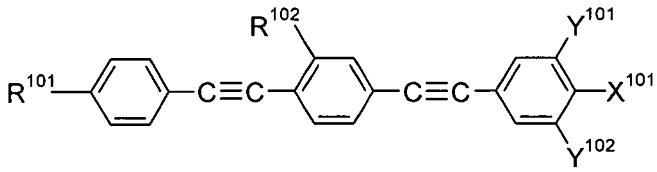

X-1

worin die Parameter die für Formel X-2 angegebenen Bedeutungen haben.

In einer bevorzugten Ausführungsform der vorliegenden Erfindung besteht die Komponente A überwiegend, noch stärker bevorzugt bestehen sie im Wesentlichen und ganz besonders bevorzugt bestehen sie vollständig aus Verbindungen der Formel X.

Besonders bevorzugte Verbindungen der Formeln X-1 und X-2 sind ausgewählt aus den Unterformeln X-1a bis X-1c und X-2a bis X-2c.

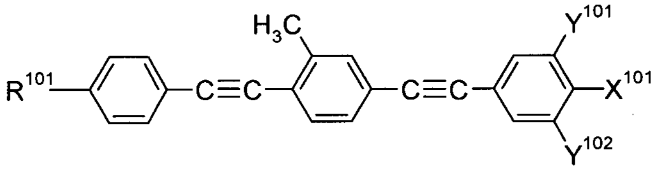

X-1a

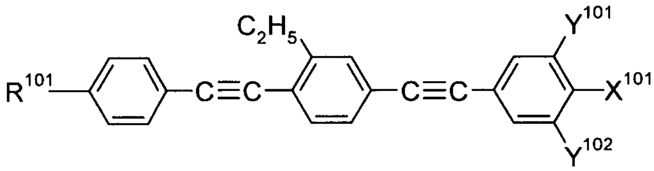

X-1b

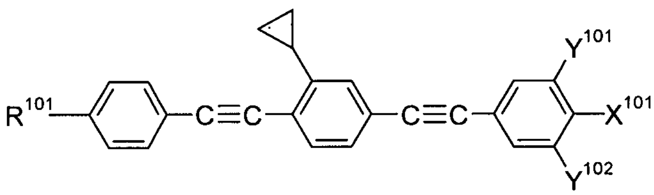

X-1c

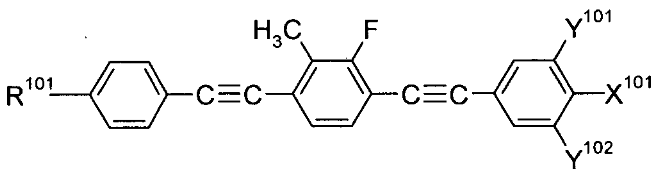

X-2a

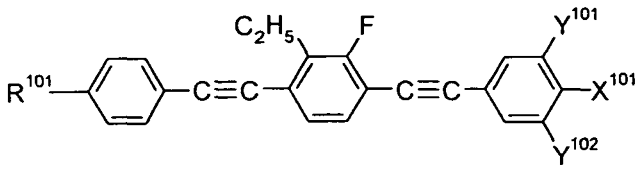

X-2b

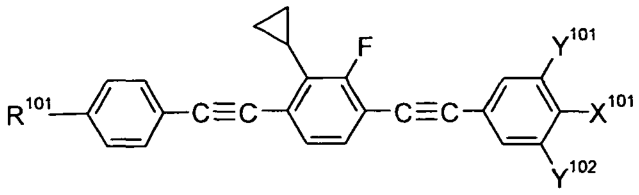

X-2c

worin die Parameter die oben unter Formel X-1 bzw. unter Formel X-2 gegebenen Bedeutungen besitzen und bevorzugt $R^{101}$ einen Alkylrest mit 2 bis 7 C-Atomen, beispielsweise einen Propyl- und Hexylrest oder jeweils einen Propyl-, Butyl-, Pentyl- oder Hexylrest bedeuten.

Gegebenenfalls enthält das Flüssigkristallmedium eine Komponente F, die aus einer oder mehreren Verbindungen der Formel I besteht,

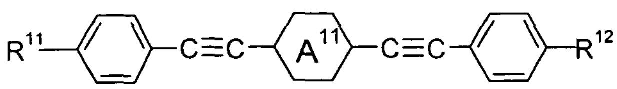

I

worin

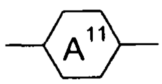

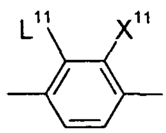

,

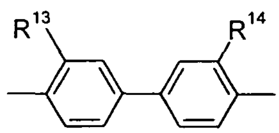

,

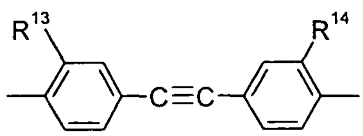

oder

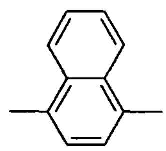

,

bevorzugt

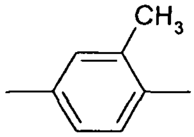

,

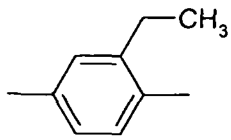

,

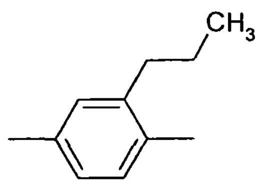

,

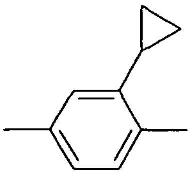, 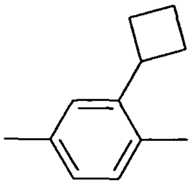, 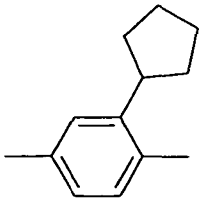,

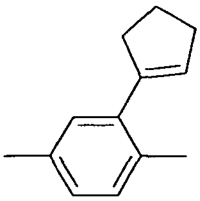, 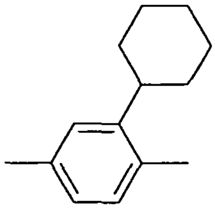, 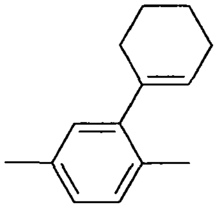,

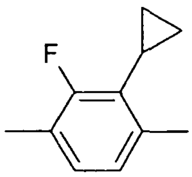, 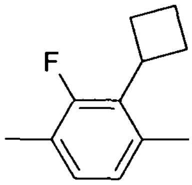, 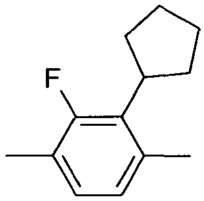,

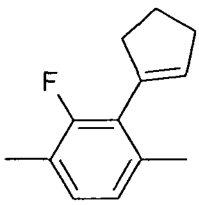, 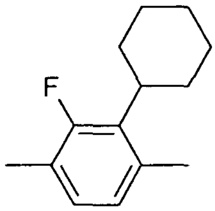, 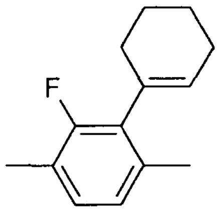,

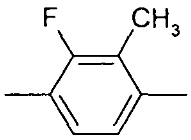, 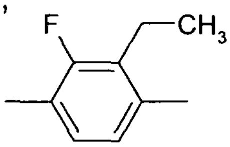,

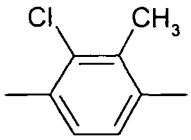, 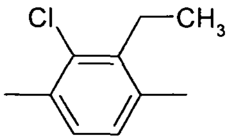,

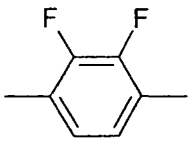, 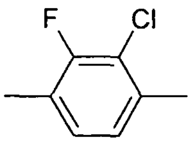,

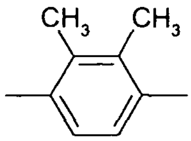, 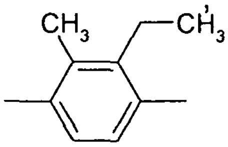, 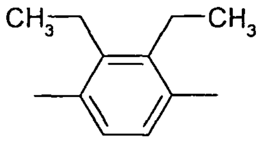,

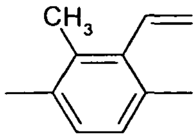 , 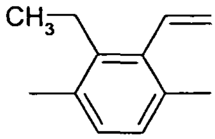 ,

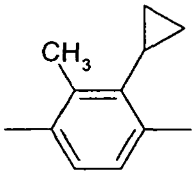 , 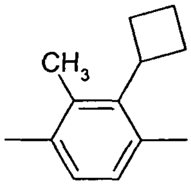 , 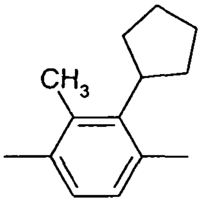 ,

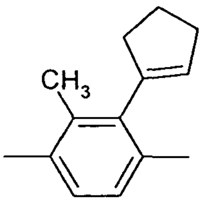 , 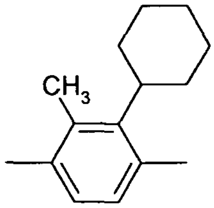 , 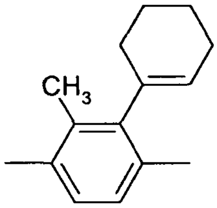 ,

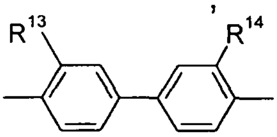 , 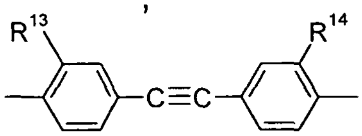 ,

oder

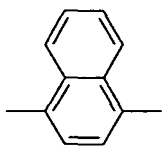 ,

besonders bevorzugt

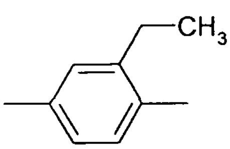 , 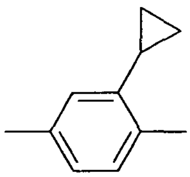 , 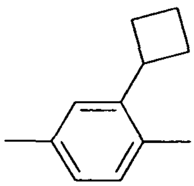 ,

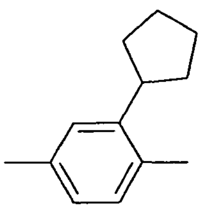 , 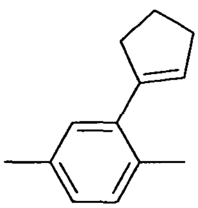 , 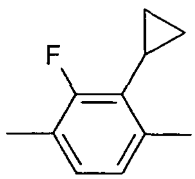 ,

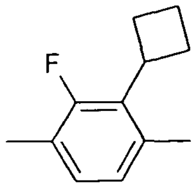, 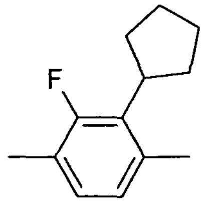, 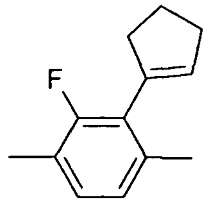,

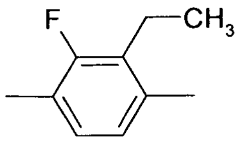, 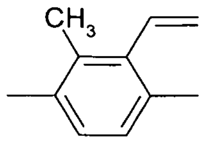, 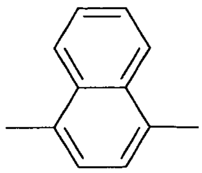,

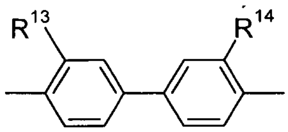 oder 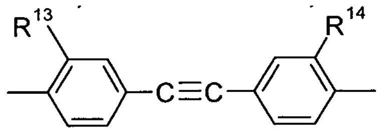,

$L^{11}$ Alkyl mit 1 bis 6 C-Atomen, Cycloalkyl mit 3 bis 6 C-Atomen oder Cycloalkenyl mit 4 bis 6 C-Atomen, bevorzugt $CH_3$, $C_2H_5$, *n*-$C_3H_7$ (-$(CH_2)_2CH_3$), *i*-$C_3H_7$ (-$CH(CH_3)_2$) Cyclopropyl, Cyclobutyl, Cyclopentyl, Cyclohexyl, Cyclopent-1-enyl oder Cyclohex-1-enyl, und besonders bevorzugt $CH_3$, $C_2H_5$, Cyclopropyl oder Cyclobutyl,

$X^{11}$ H, Alkyl mit 1 bis 3 C-Atomen oder Halogen, bevorzugt H, F oder Cl, und besonders bevorzugt H oder F und ganz besonders bevorzugt F,

$R^{11}$ bis $R^{14}$ unabhängig voneinander unfluoriertes Alkyl oder unfluoriertes Alkoxy jeweils mit 1 bis 15 C-Atomen, unfluoriertes Alkenyl, unfluoriertes Alkenyloxy oder unfluoriertes Alkoxyalkyl jeweils mit 2 bis 15 C-Atomen, oder Cycloalkyl, Alkylcycloalkyl, Cycloalkenyl, Alkylcycloalkenyl, Alkylcycloalkylalkyl oder Alkycycloalkenylalkyl, jeweils mit bis zu 15 C-Atomen, und alternativ einer von $R^{13}$ und $R^{14}$ oder beide auch H,

bevorzugt

$R^{11}$ und $R^{12}$ unabhängig voneinander unfluoriertes Alkyl oder unfluoriertes Alkoxy jeweils mit 1 bis 7 C-Atomen oder unfluoriertes Alkenyl, unfluoriertes Alkenyloxy oder unfluoriertes Alkoxyalkyl jeweils mit 2 bis 7 C-Atomen,

besonders bevorzugt

$R^{11}$ unfluoriertes Alkyl mit 1 bis 7 C-Atomen oder unfluoriertes Alkenyl, unfluoriertes Alkenyloxy oder unfluoriertes Alkoxyalkyl jeweils mit 2 bis 7 C-Atomen, und

besonders bevorzugt

$R^{12}$ unfluoriertes Alkyl oder unfluoriertes Alkoxy jeweils mit 1 bis 7 C-Atomen, und

bevorzugt

$R^{13}$ und $R^{14}$ H, unfluoriertes Alkyl mit 1 bis 5 C-Atomen, unfluoriertes Cycloalkyl oder Cycloalkenyl mit 3 bis 7 C-Atomen, unfluoriertes Alkylcyclohexyl oder unfluoriertes Cyclohexylalkyl jeweils mit 4 bis 12 C-Atomen oder unfluoriertes Alkylcyclohexylalkyl mit 5 bis 15 C-Atomen, besonders bevorzugt Cyclopropyl, Cyclopentyl, Cyclobutyl, Cyclopentyl, oder Cyclohexyl und ganz besonders bevorzugt mindestens einer von $R^{13}$ und $R^{14}$ *n*-Alkyl, besonders bevorzugt Methyl, Ethyl oder *n*-Propyl, und der andere H oder *n*-Alkyl, besonders bevorzugt H, Methyl, Ethyl oder *n*-Propyl,

bedeuten.

In einer besonders bevorzugten Ausführungsform der vorliegenden Erfindung enthält die Komponente F eine oder mehrere Verbindungen der Formel I, bevorzugt besteht die Komponente F überwiegend, noch stärker bevorzugt bestehen sie im Wesentlichen und ganz besonders bevorzugt bestehen sie vollständig aus Verbindungen der Formeln I.

Bevorzugt sind die Verbindungen der Formel I Verbindungen ausgewählt aus der Gruppe der Verbindungen der Formeln I-1 bis I-4

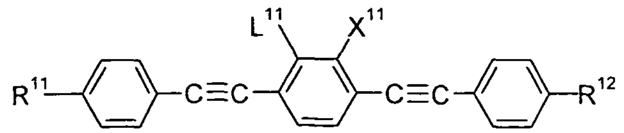

I-1

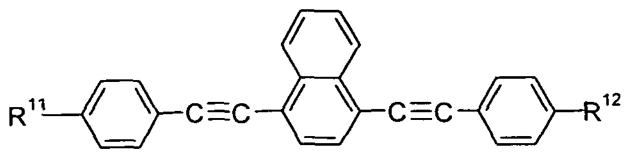

I-2

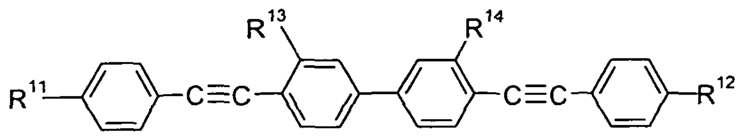

I-3

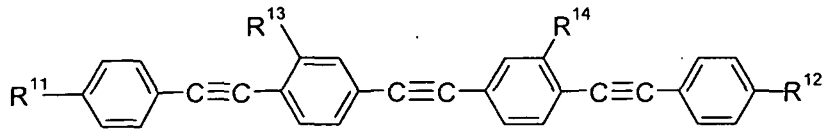

I-4

worin

$L^{11}$ Alkyl mit 1 bis 6 C-Atomen, Alkenyl mit 2 bis 6 C-Atomen, Cycloalkyl mit 3 bis 6 C-Atomen oder Cycloalkenyl mit 4 bis 6 C-Atomen, bevorzugt $CH_3$, $C_2H_5$, *n*-$C_3H_7$ (-$(CH_2)_2CH_3$), *i*-$C_3H_7$ (-$CH(CH_3)_2$), -$CH{=}CH_2$, Cyclopropyl, Cyclobutyl, Cyclopentyl, Cyclopentyl, Cyclohexyl, Cyclopent-1-enyl oder Cyclohex-1-enyl, und besonders bevorzugt $CH_3$, $C_2H_5$, Cyclopropyl oder Cyclobutyl,

$X^{11}$ H, Alkyl mit 1 bis 3 C-Atomen oder Halogen, bevorzugt H, F oder Cl, und besonders bevorzugt H, F oder $CH_3$, noch stärker bevorzugt H oder F und ganz besonders bevorzugt F,

bedeutet und die anderen Parameter die jeweiligen oben bei Formel I angegebenen Bedeutungen haben und bevorzugt

$R^{11}$ unfluoriertes Alkyl mit 1 bis 7 C-Atomen, und

$R^{12}$ unfluoriertes Alkyl mit 1 bis 7 C-Atomen oder unfluoriertes Alkoxy mit 1 bis 7 C-Atomen,

bedeutet.

In einer besonders bevorzugten Ausführungsform der vorliegenden Erfindung enthält das Flüssigkristallmedium eine oder mehrere Verbindungen der Formeln I-1, bevorzugt ausgewählt aus der Gruppe der Verbindungen der Formeln I-1a-1 bis I-1a-12 und I-1b-1 bis I-1b-12

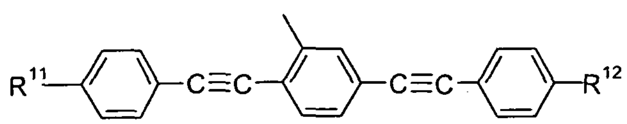

I-1a-1

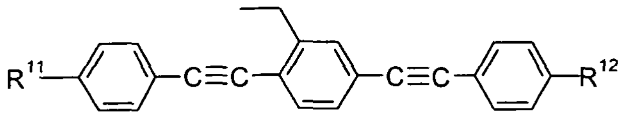

I-1a-2

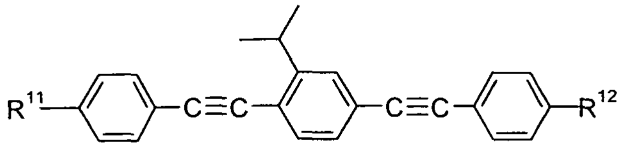

I-1a-3

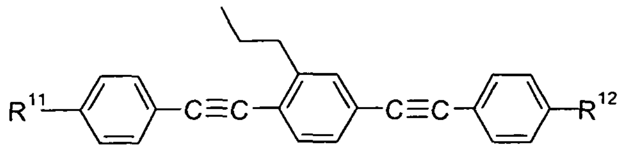

I-1a-4

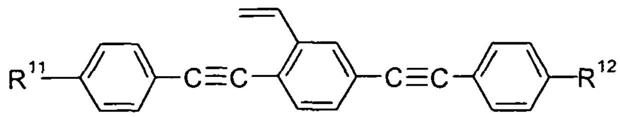

I-1a-5

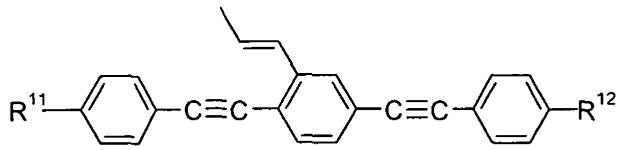

I-1a-6

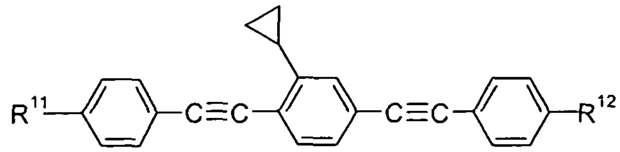

I-1a-7

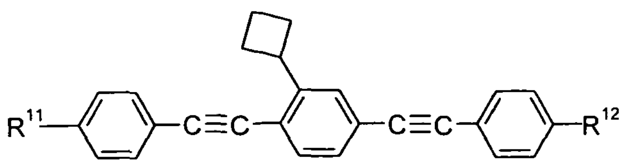

I-1a-8

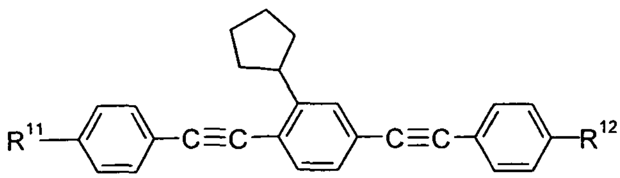

I-1a-9

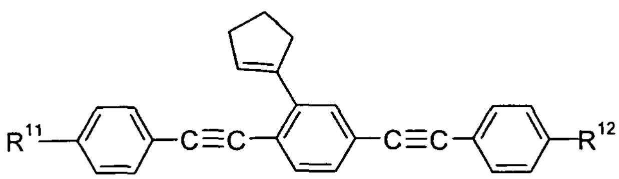

I-1a-10

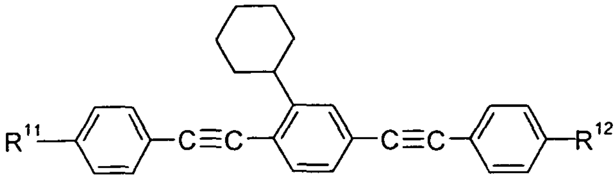

I-1a-11

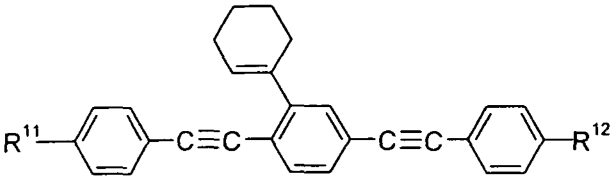

I-1a-12

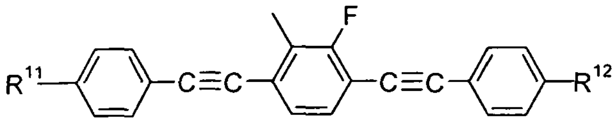

I-1b-1

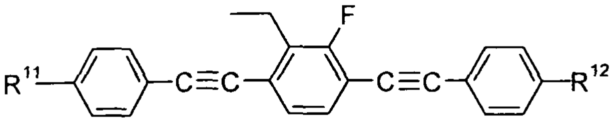

I-1b-2

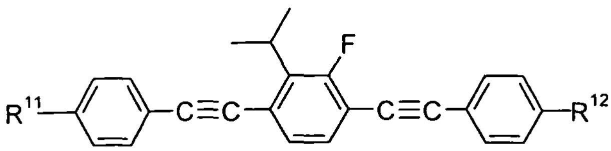

I-1b-3

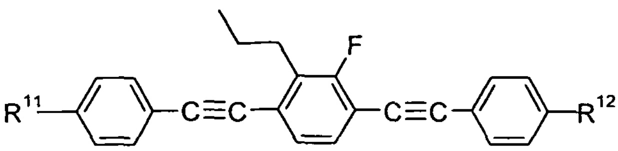

I-1b-4

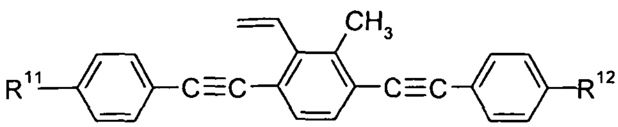

I-1b-5

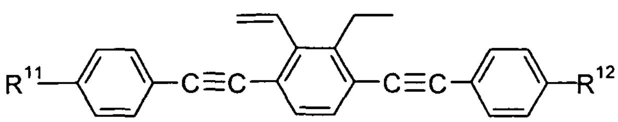

I-1b-6

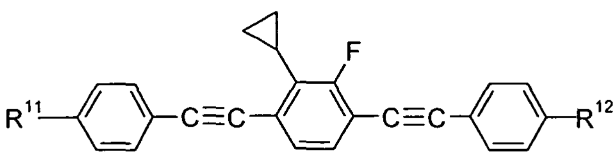

I-1b-7

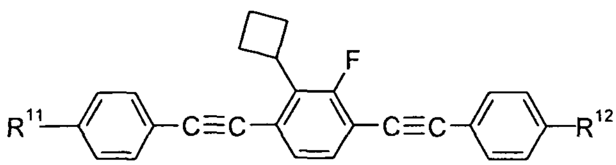

I-1b-8

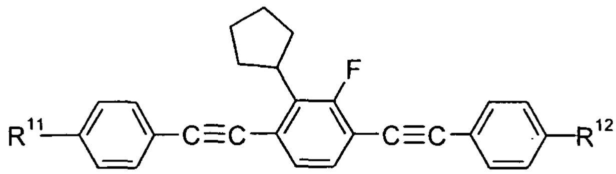

I-1b-9

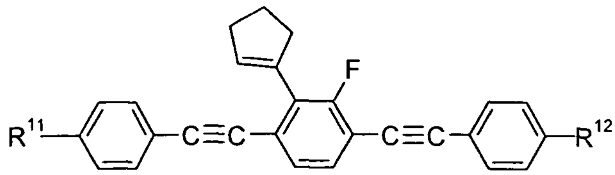

I-1b-10

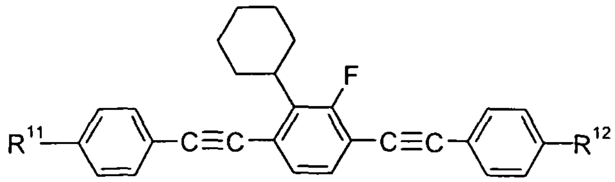

I-1b-11

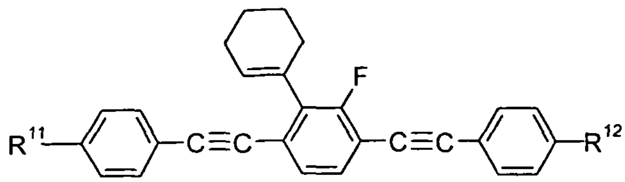

I-1b-12

worin die Parameter die oben unter Formel I-1 gegebenen Bedeutungen besitzen und bevorzugt $R^{11}$ und $R^{12}$ unabhängig voneinander einen Alkylrest mit 2 bis 7 C-Atomen, beispielsweise einen Propyl- und Hexylrest oder jeweils einen Propyl-, Butyl-, Pentyl- oder Hexylrest bedeuten.

In einer ganz besonders bevorzugten Ausführungsform der vorliegenden Erfindung enthält das Flüssigkristallmedium, bzw. die Komponente F des Flüssigkristallmediums, eine oder mehrere Verbindungen der Formel I, bevorzugt ausgewählt aus der Gruppe der Verbindungen der Formeln I-1a-2, I-1a-5, I-1a-7, I-1a-8, I-1a-9, I-1a-10, I-1b-5, I-1b-7, I-1b-8, I-1b-9 und I-1b-10, wobei die Parameter die oben gegebenen Bedeutung haben und besonders bevorzugt

$R^{11}$ und $R^{12}$ unabhängig voneinander unfluoriertes Alkyl mit 1 bis 7 C-Atomen oder unfluoriertes Alkoxy mit 1 bis 6 C-Atomen,

insbesondere bevorzugt einer von

$R^{11}$ und $R^{12}$ Alkyl und der andere Alkyl oder Alkoxy

bedeutet und ganz besonders bevorzugt $R^{11}$ und $R^{12}$ voneinander verschiedene Bedeutungen haben.

In einer bevorzugten Ausführungsform der vorliegenden Erfindung enthält das Flüssigkristallmedium, bzw. die Komponente F des Flüssigkristallmediums, eine oder mehrere Verbindungen der Formeln I-2, worin bevorzugt

$R^{11}$ und $R^{12}$ unabhängig voneinander einen Alkylrest mit 2 bis 7 C-Atomen, beispielsweise einen Propyl- und Hexylrest oder jeweils einen Propyl-, Butyl-, Pentyl- oder Hexylrest bedeuten.

In einer bevorzugten Ausführungsform der vorliegenden Erfindung enthält das Flüssigkristallmedium, bzw. die Komponente F des Flüssigkristallmediums, eine oder mehrere Verbindungen der Formeln I-3, bevorzugt ausgewählt aus der Gruppe der Verbindungen der Formeln I-3a-1 bis I-3a-3 und I-3b-1 bis I-3b-3, bevorzugt I-3a-2, I-3b-2

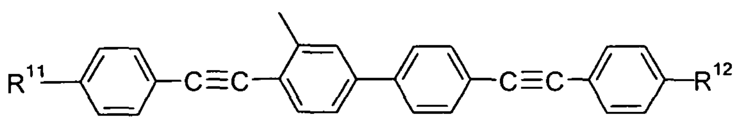

I-3a-1

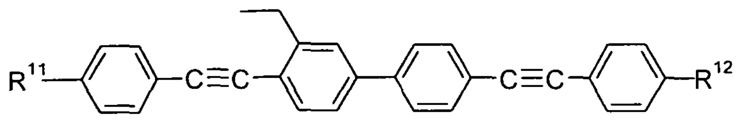

I-3a-2

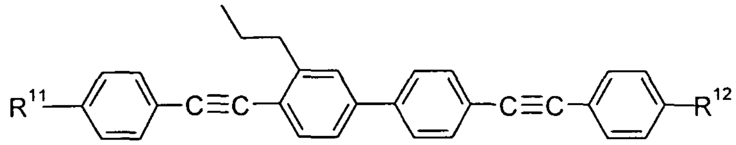

I-3a-3

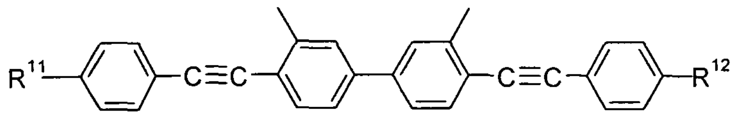

I-3b-1

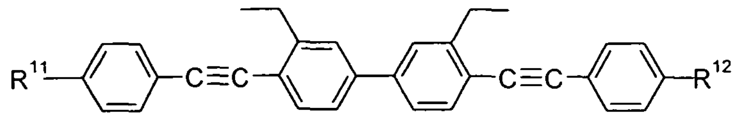

I-3b-2

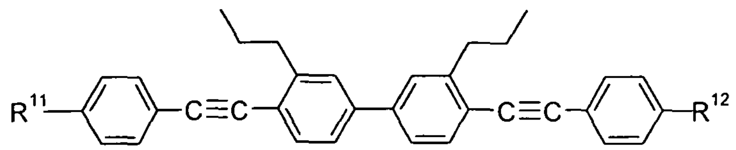

I-3b-3

worin die Parameter die oben unter Formel I-3 gegebenen Bedeutungen besitzen und bevorzugt $R^{11}$ und $R^{12}$ unabhängig voneinander einen Alkylrest mit 2 bis 7 C-Atomen, beispielsweise einen Propyl- und Hexylrest oder jeweils einen Propyl-, Butyl-, Pentyl- oder Hexylrest bedeuten.

In einer bevorzugten Ausführungsform der vorliegenden Erfindung enthält das Flüssigkristallmedium, bzw. die Komponente F des Flüssigkristallmediums, eine oder mehrere Verbindungen der Formeln I-4, bevorzugt ausgewählt aus der Gruppe der Verbindungen der Formeln I-4a-1 bis I-4a-3 und I-4b-1 bis I-4b-3, bevorzugt I-4b-2,

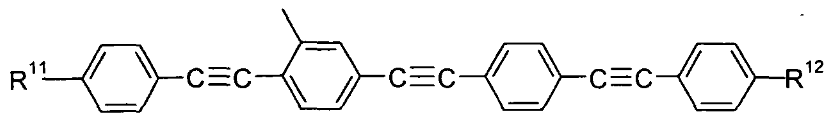

I-4a-1

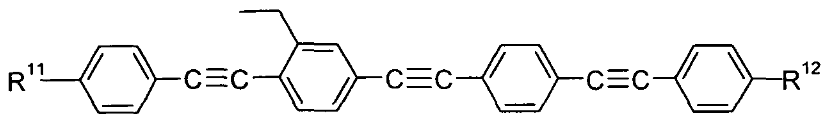

I-4a-2

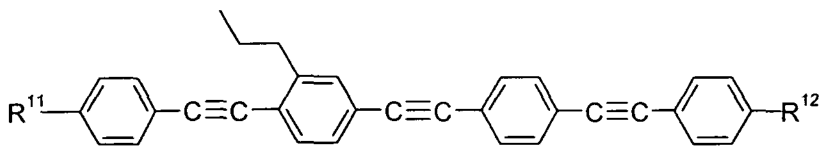

I-4a-3

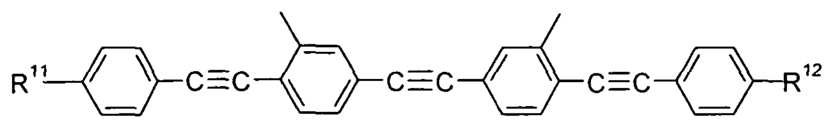

I-4b-1

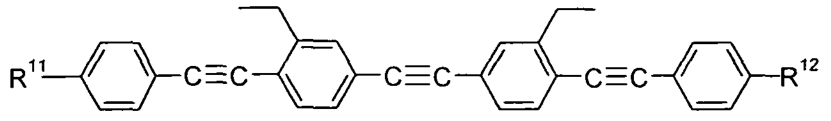

I-4b-2

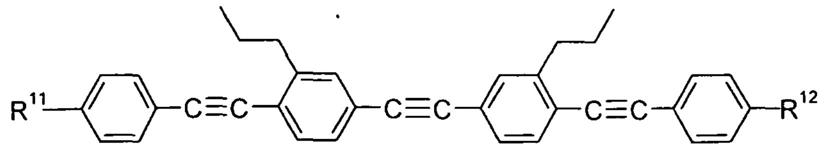

I-4b-3

worin die Parameter die oben unter Formel I-4 gegebenen Bedeutungen besitzen und bevorzugt
$R^{11}$ und $R^{12}$ unabhängig voneinander einen Alkylrest mit 2 bis 7 C-Atomen, beispielsweise einen Propyl- und Hexylrest oder jeweils einen Propyl-, Butyl-, Pentyl- oder Hexylrest bedeuten.

Die Verbindungen der Formel X können vorteilhaft, wie an den folgenden beispielhaften Synthesen ersichtlich, hergestellt werden (Schema 1 und 2):

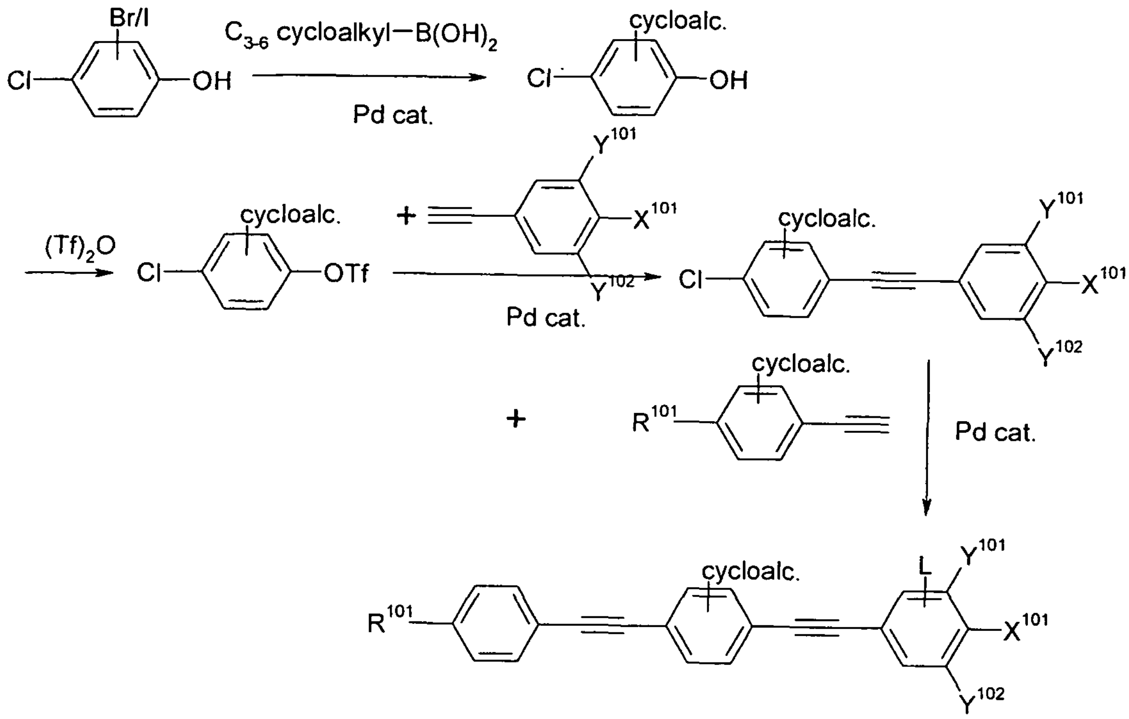


**Schema 1**. Beispielhafte Synthese der Verbindungen der Formel X.

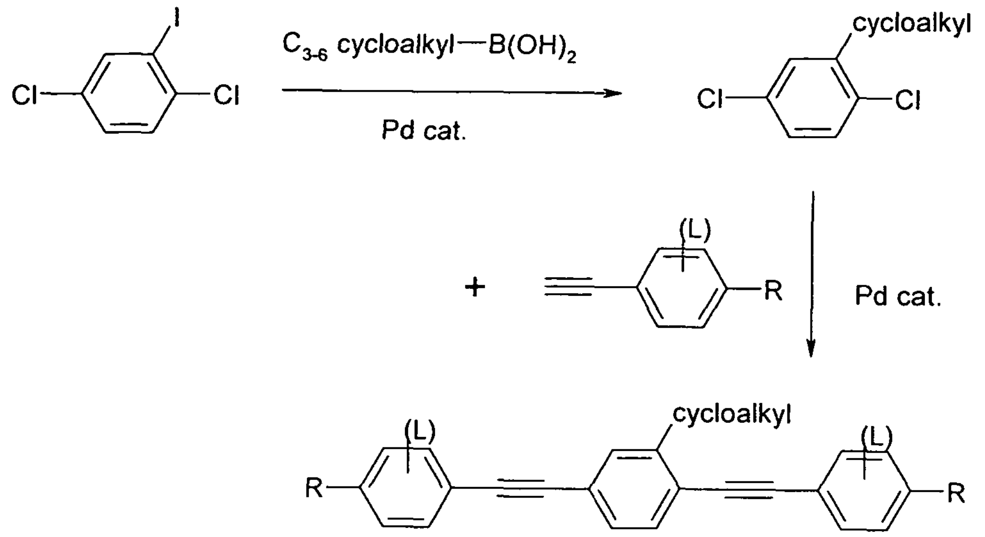


**Schema 2**. Beispielhafte Synthese der Verbindungen der Formel X-1c, wobei R die Bedeutung von $R^{101}$ hat.

Die Verbindungen der Formel I-1a können vorteilhaft, wie an der folgenden beispielhaften Synthese ersichtlich, hergestellt werden (Schema 3-6):

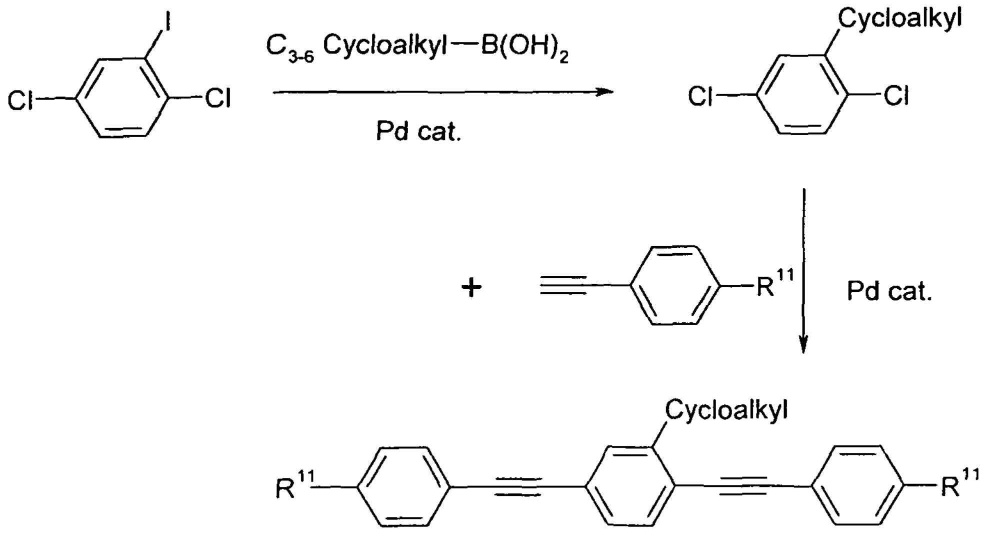


**Schema 3**. Beispielhafte Synthese der Verbindungen der Formel I-1 (z.B. I-1a-7 bis I-1a-12) mit symmetrischen Endgruppen, wobei Cycloalkyl auch Cycloalkenyl bedeutet.

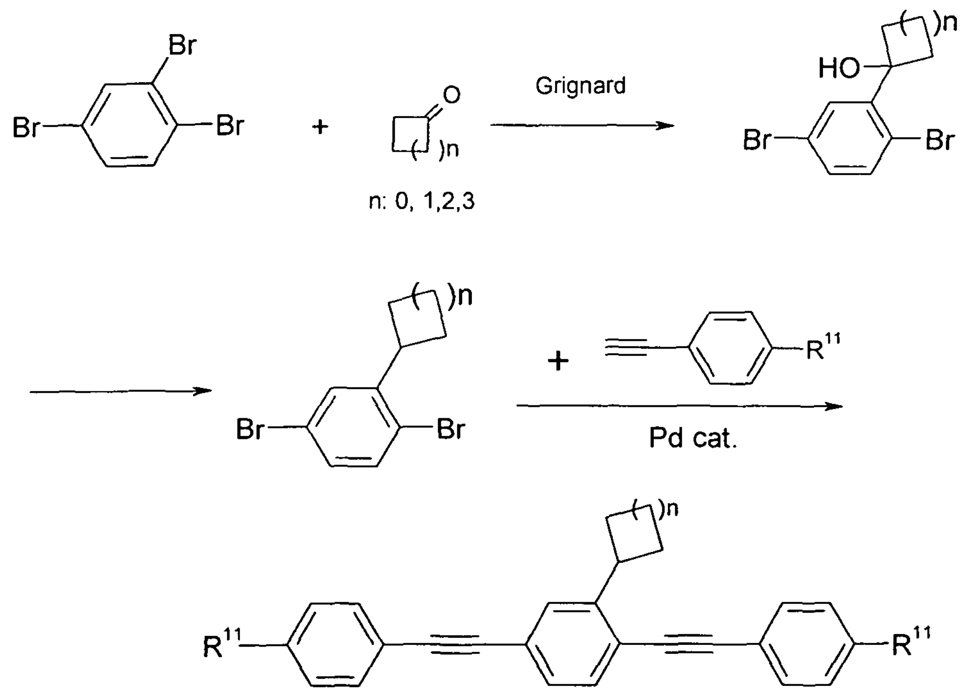


**Schema 4**. Beispielhafte Synthese der Verbindungen der Formel I-1 (z.B. I-1a-7, I-1a-8, I-1a-9 und I-1a-11) mit symmetrischen Endgruppen.

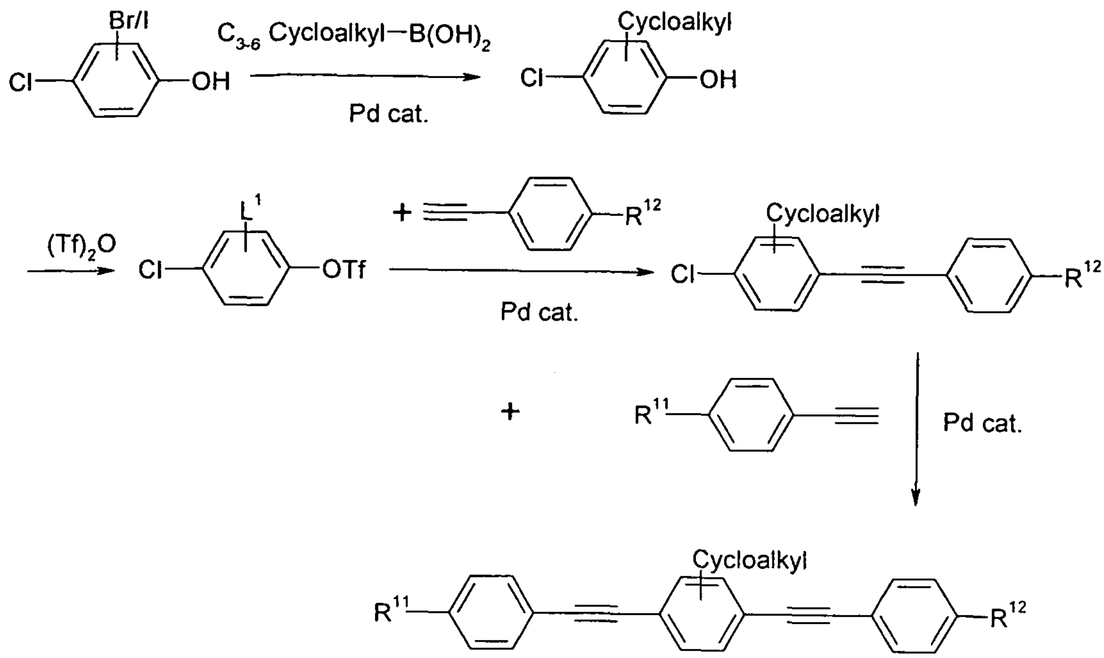


**Schema 5**. Beispielhafte Synthese der Verbindungen der Formel I-1 (z.B. I-1a-7 bis I-1a-12) mit asymmetrischen Endgruppen, wobei Cycloalkyl auch Cycloalkenyl bedeutet.

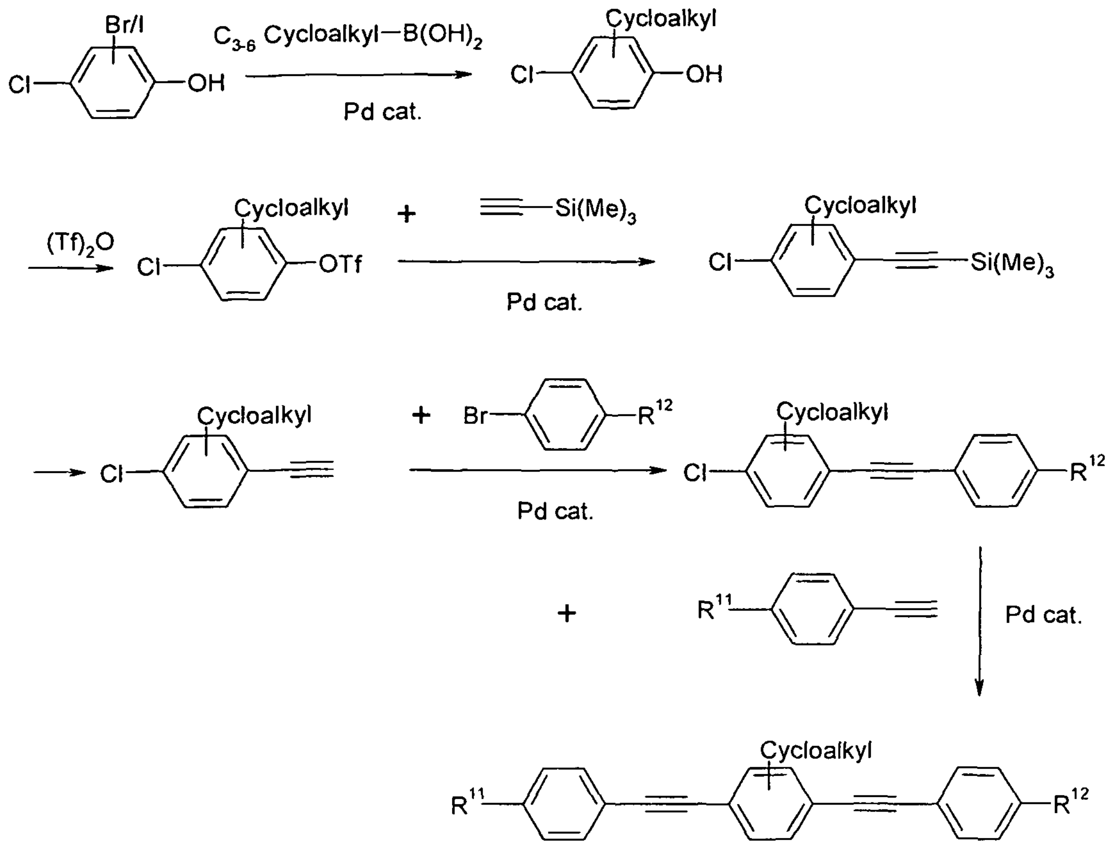


**Schema 6**. Beispielhafte Synthese der Verbindungen der Formel I-1 (z.B. I-1a-7 bis I-1a-12) mit asymmetrischen Endgruppen, wobei Cycloalkyl auch Cycloalkenyl bedeutet.

Die Verbindungen der Formel I-1b können vorteilhaft nach den folgenden allgemeinen Reaktionsschemata (Reaktionsschema 5 bis 11) erhalten werden. Die Parameter $L^{11}$, $R^{11}$, $R^{101}$ und $X^{11}$ sind darin wie vor- und nachstehend definiert. R hat die Bedeutung von $R^{11}$ bzw. $R^{12}$.

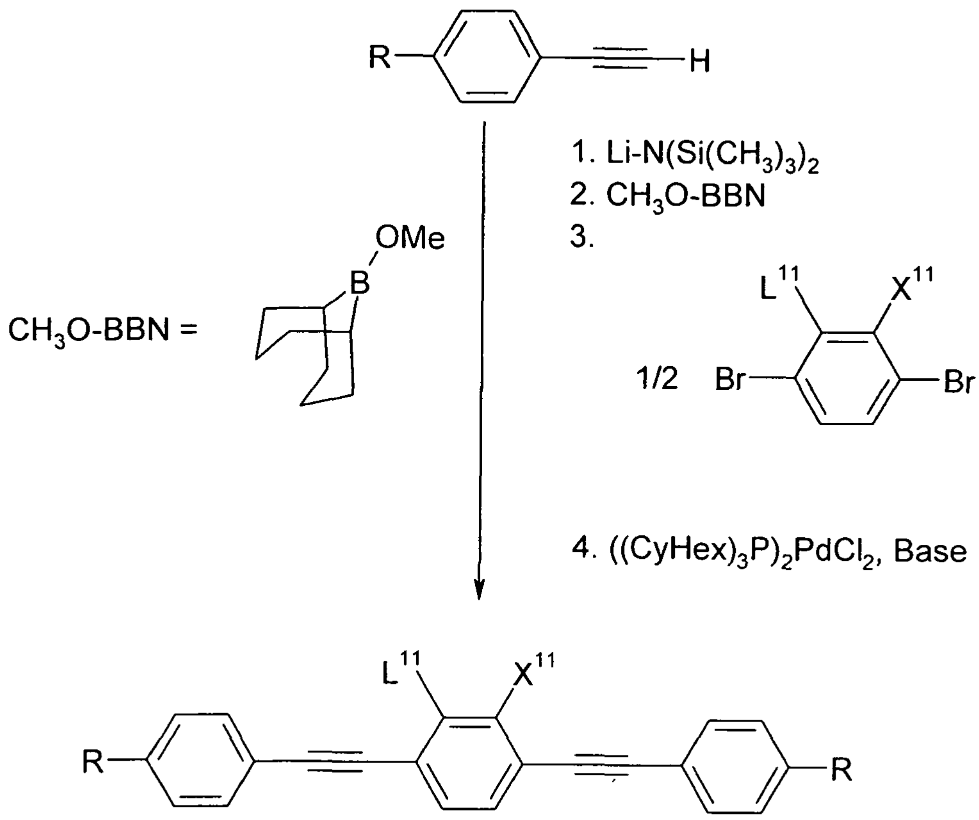


**Schema 7**. Beispielhafte Synthese der Verbindungen der Formel I-1 mit asymmetrischer Substitution, wobei R die Bedeutung von $R^{11}$ hat.

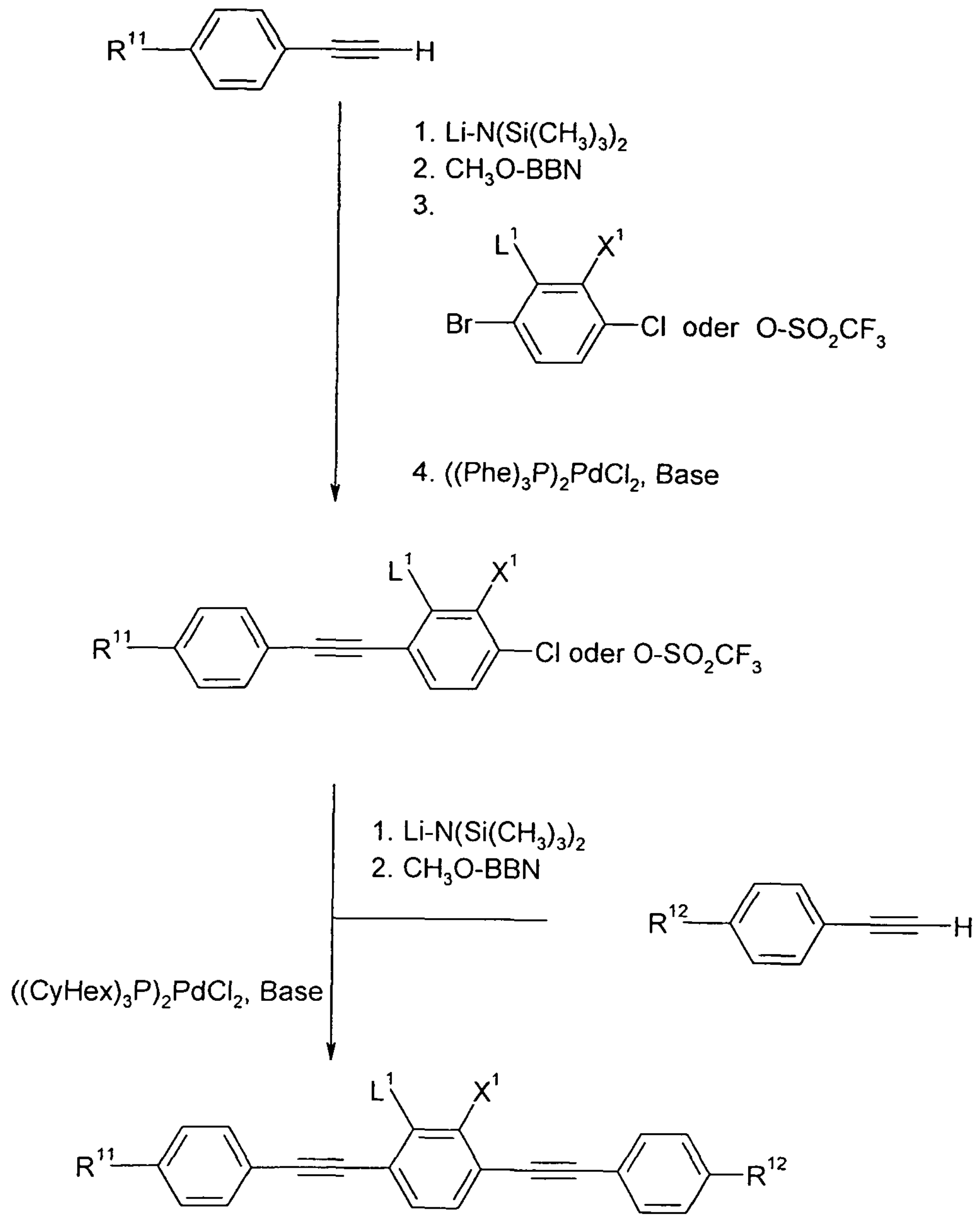


**Schema 8**. Beispielhafte Synthese der Verbindungen der Formel I-1 mit asymmetrischer Substitution.

In Schema 9 bis 13 wird die Synthese von verschieden substituierten zentralen Ringen wiedergegeben. Die Phenylalkinylreste lassen sich dabei auf beliebige substituierte Phenylalkinylreste verallgemeinern.

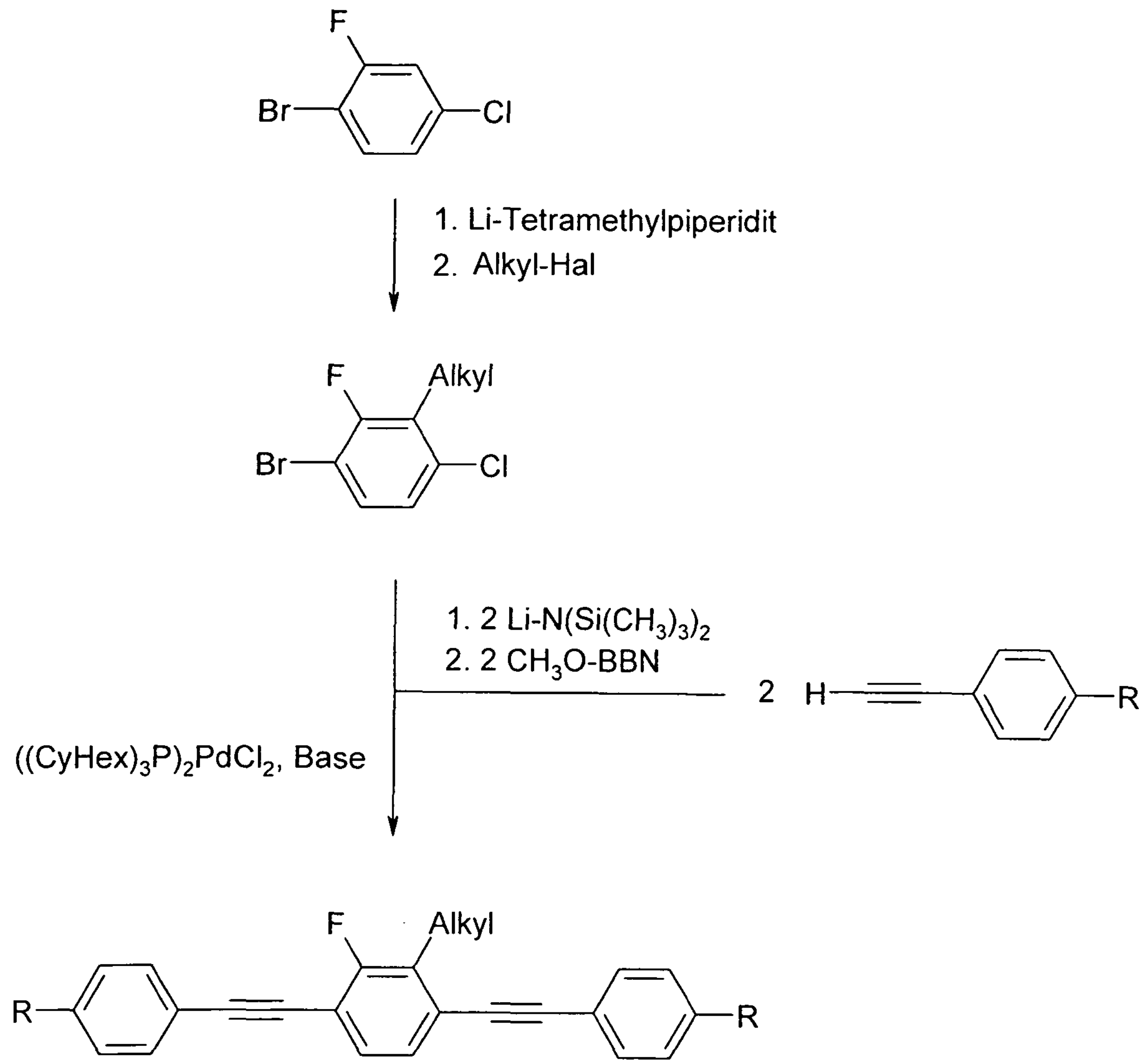


**Schema 9**. Beispielhafte Synthese der Verbindungen der Formel I-1 (z.B. I-1b-1 bis I-1b-4) mit symmetrischen Endgruppen, wobei R die Bedeutung von $R^{11}$ hat.

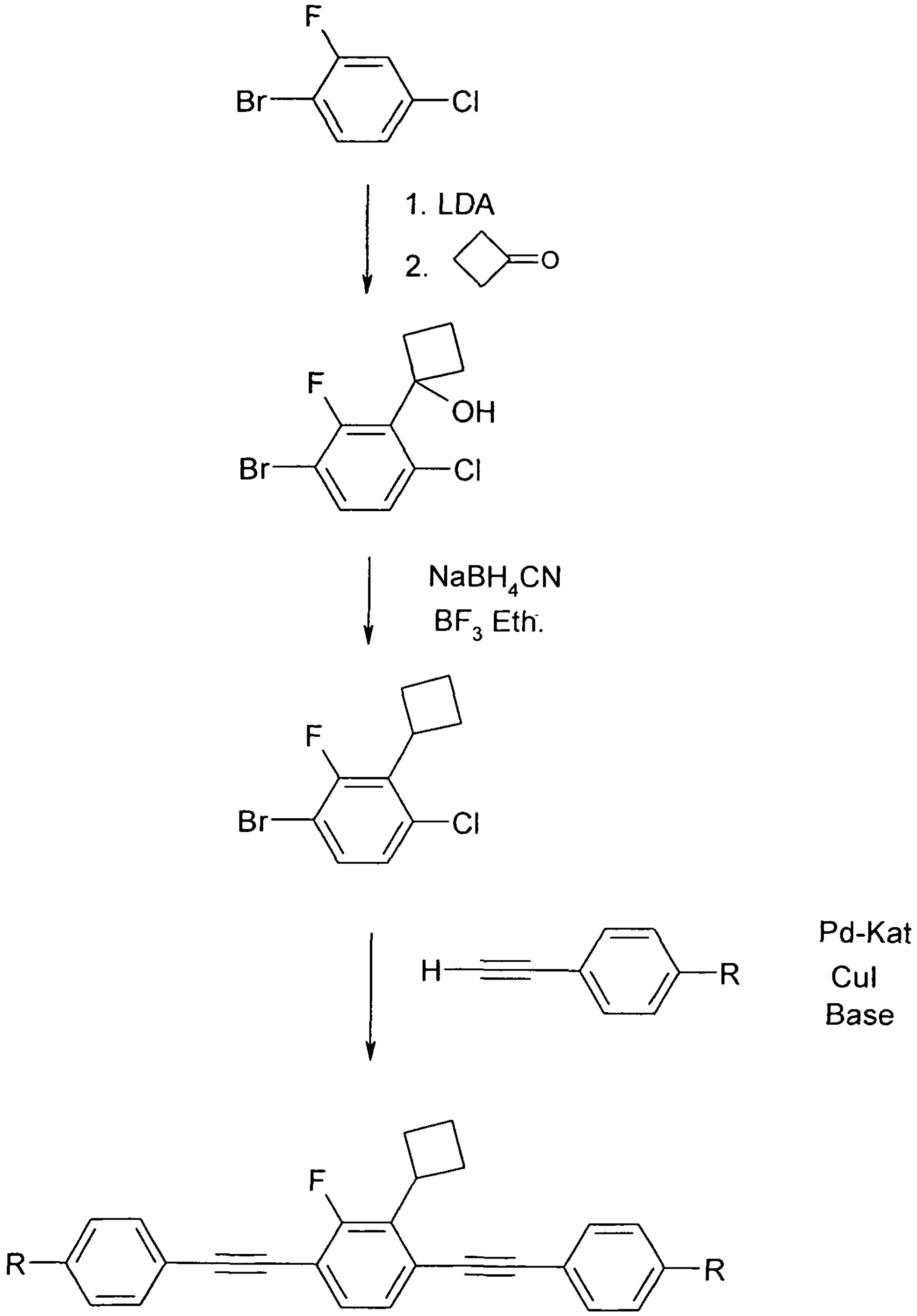


**Schema 10**. Beispielhafte Synthese der Verbindungen der Formel I-1b-8 mit symmetrischen Endgruppen, wobei R die Bedeutung von $R^{11}$ hat.

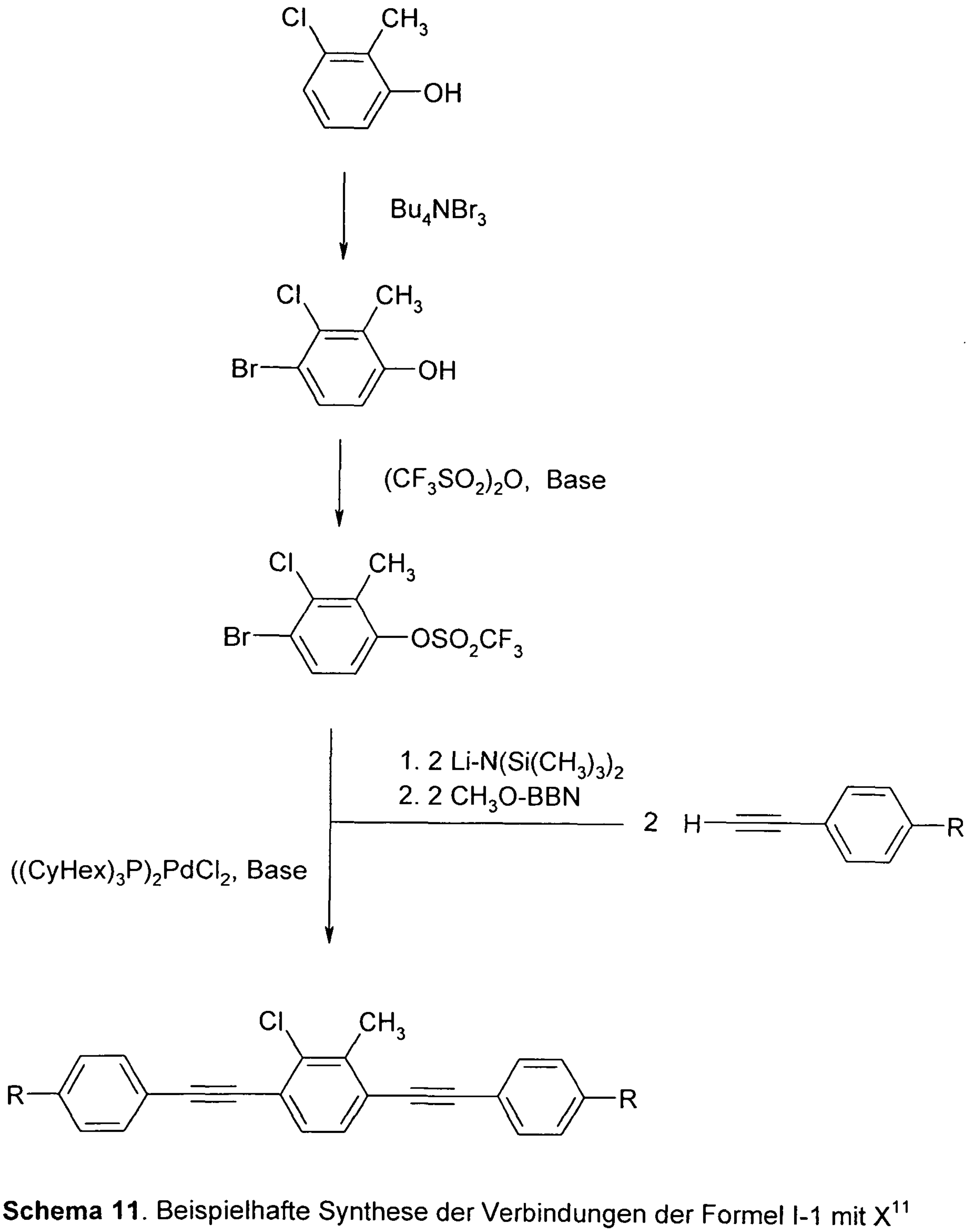


**Schema 11**. Beispielhafte Synthese der Verbindungen der Formel I-1 mit $X^{11}$ = Cl, $L^{11}$ = $CH_3$ und symmetrischen Endgruppen, wobei R die Bedeutung von $R^{11}$ hat.

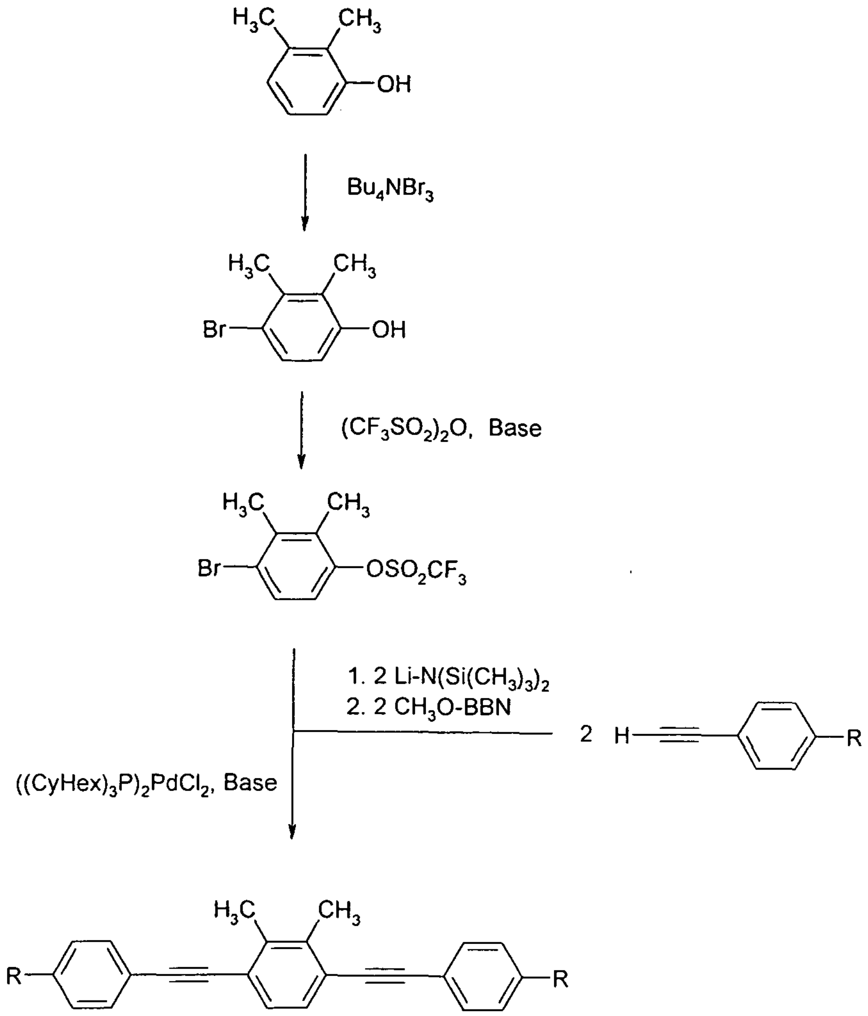


**Schema 12**. Beispielhafte Synthese der Verbindungen der Formel I-1 mit $X^{11}$ = $L^{11}$ = $CH_3$ und symmetrischen Endgruppen, wobei R die Bedeutung von $R^{11}$ hat.

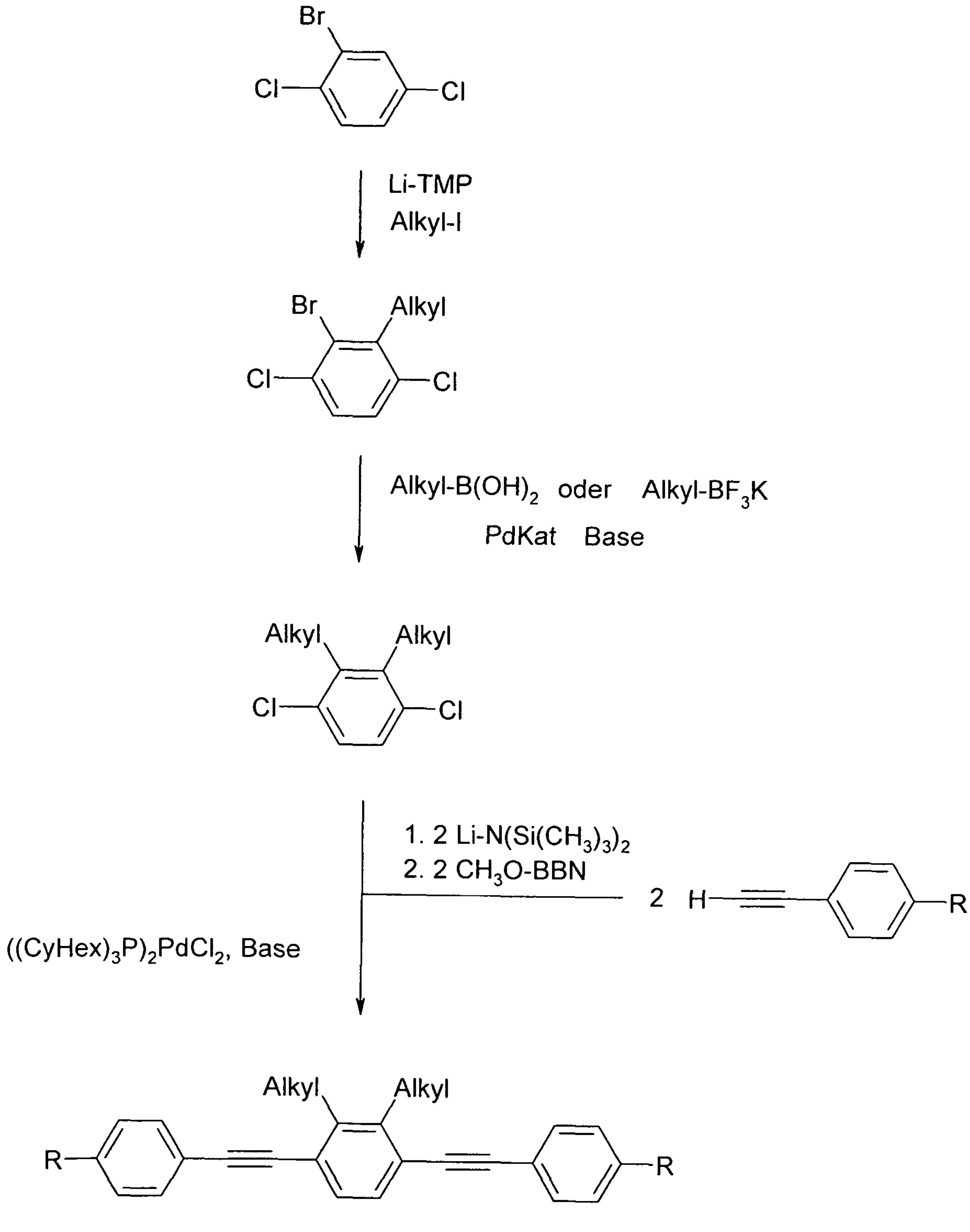


**Schema 13**. Beispielhafte Synthese der Verbindungen der Formel I-1 mit $X^{11}$ = $L^{11}$ = Alkyl und symmetrischen Endgruppen, wobei R die Bedeutung von $R^{11}$ hat und wobei die beiden Alkylgruppen „Alkyl" gleich oder verscheiden voneinander sein können und auch eine oder alle beide eine Alkenylgruppe sein können.

Die Verbindungen der Formel I-2 können vorteilhaft wie an der folgenden beispielhaften Synthese ersichtlich hergestellt werden (Schema 14):

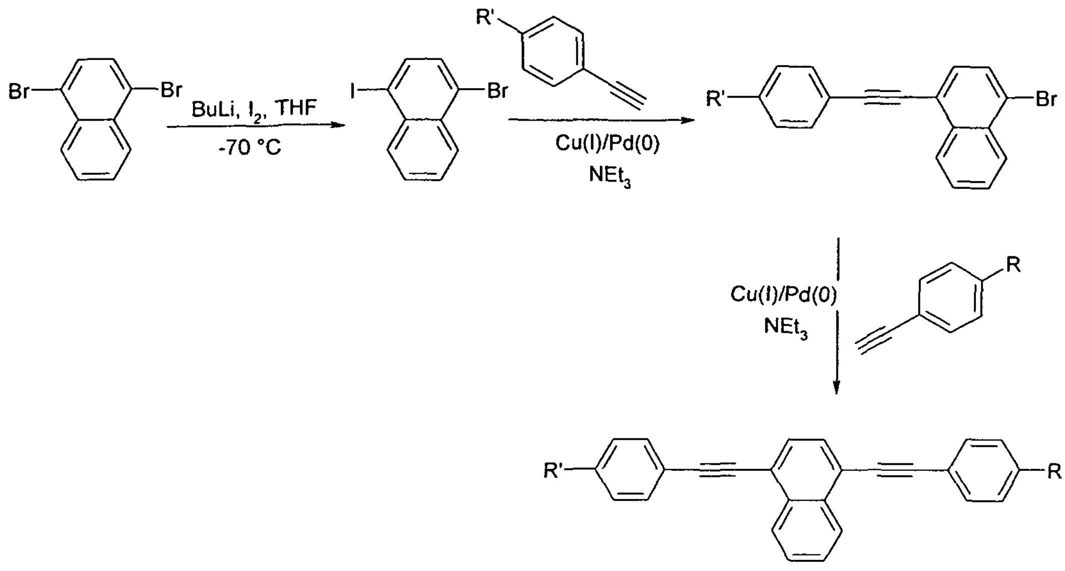


**Schema 14**. Beispielhafte Synthese der Verbindungen der Formel I-2 mit asymmetrischen Endgruppen; wobei R entsprechend $R^{11}$ und R' entsprechend $R^{12}$ definiert ist.

Die Verbindungen der Formeln I-3 und I-4 können vorteilhaft nach dem folgenden allgemeinen Reaktionsschema (Reaktionsschema 15) erhalten werden.

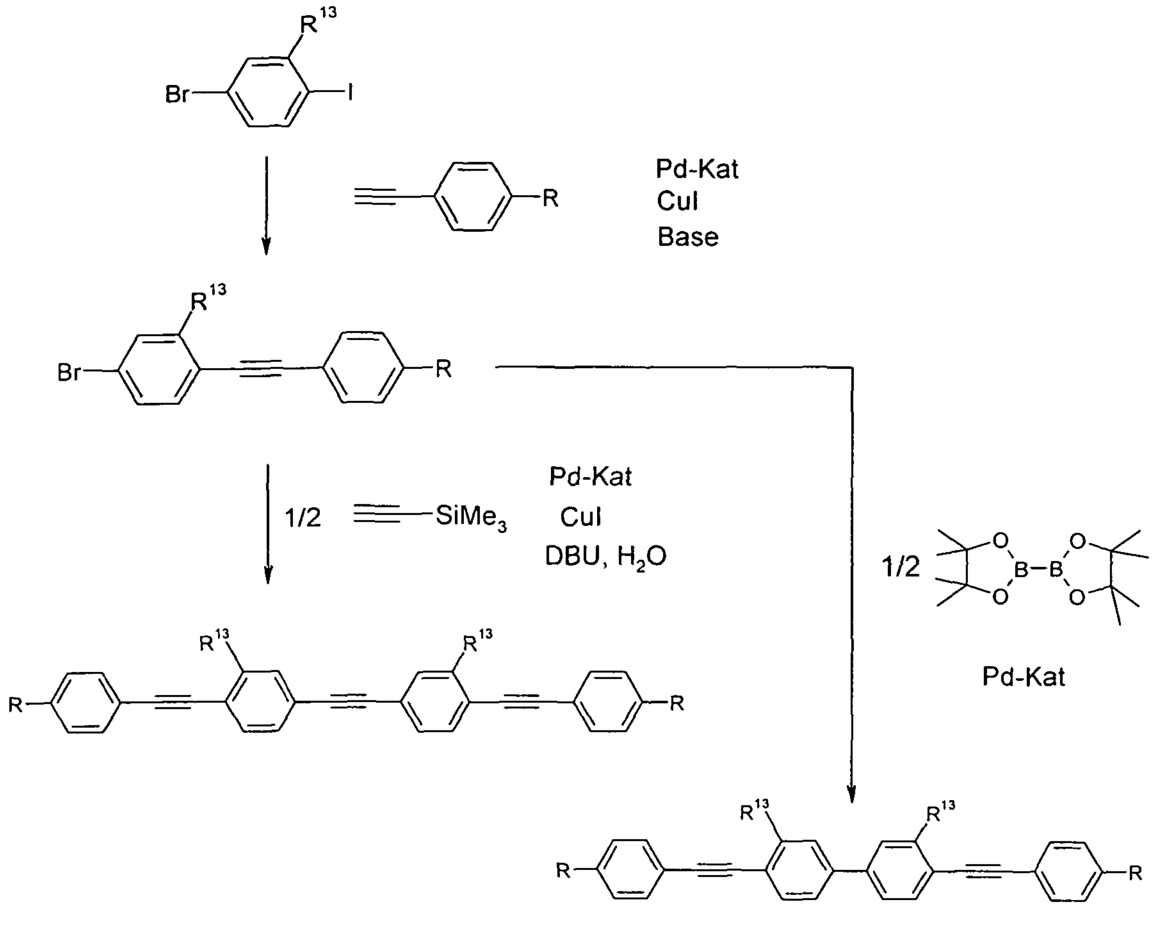


**Schema 15**. Beispielhafte Synthese der Verbindungen der Formeln I-3 und I-4 mit symmetrischen Endgruppen, worin R die Bedeutung von $R^{11}$ bzw. $R^{12}$ hat.

Bevorzugt enthalten diese erfindungsgemäßen Medien neben der Komponente A eine Komponente ausgewählt aus den beiden Komponenten B und C und gegebenenfalls zusätzlich die Komponente D und/oder die Komponente E.

Bevorzugt enthalten diese erfindungsgemäßen Medien zwei, drei oder vier, besonders bevorzugt zwei oder drei Komponenten ausgewählt aus der Gruppe der Komponenten A bis E. Bevorzugt enthalten diese Medien

- Komponente A und Komponente F oder
- Komponente A und Komponente D oder
- Komponente A und Komponente B und Komponente F und/oder Komponente D und/oder Komponente E, oder

Bevorzugt enthalten diese erfindungsgemäßen Medien eine Komponente B und keine Komponente C oder umgekehrt.

Bevorzugt hat die stark dielektrisch positive Komponente, Komponente B, eine dielektrische Anisotropie von 20,0 oder mehr, stärker bevorzugt von 25,0 oder mehr, besonders bevorzugt von 30,0 oder mehr und ganz besonders bevorzugt von 40,0 oder mehr.

Bevorzugt hat die stark dielektrisch negative Komponente, Komponente C, eine dielektrische Anisotropie von -7,0 oder weniger, stärker bevorzugt von-8,0 oder weniger, besonders bevorzugt von -10,0 oder weniger und ganz besonders bevorzugt von -15,0 oder weniger.

In einer bevorzugten Ausführungsform der vorliegenden Erfindung enthält die Komponente B eine oder mehrere Verbindungen ausgewählt aus der Gruppe der Verbindungen der Formeln IIA und IIB

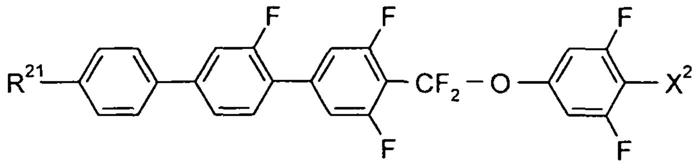

IIA

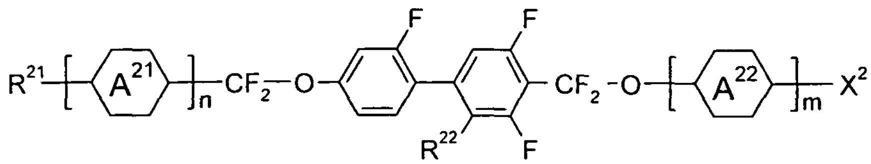

IIB

$R^{21}$ unfluoriertes Alkyl oder unfluoriertes Alkoxy jeweils mit 1 bis 15 C-Atomen oder unfluoriertes Alkenyl, unfluoriertes Alkenyloxy oder unfluoriertes Alkoxyalkyl jeweils mit 2 bis 15 C-Atomen, bevorzugt Alkyl, besonders bevorzugt *n*-Alkyl,

$R^{22}$ H, unfluoriertes Alkyl oder unfluoriertes Alkoxy jeweils mit 1 bis 5, bevorzugt mit 1 bis 3, besonders bevorzugt mit 3 C-Atomen,

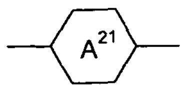

bis

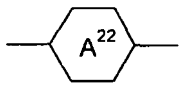

unabhängig voneinander und bei mehrfachem Auftreten auch diese untereinander jeweils unabhängig voneinander

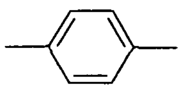 , 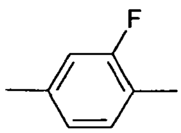 , 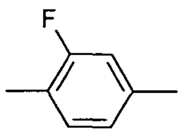 ,

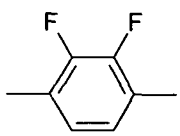 , 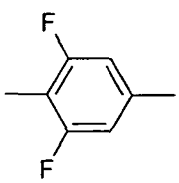 , 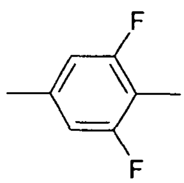 ,

oder

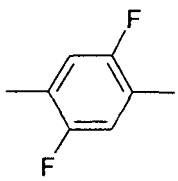 ,

vorzugsweise

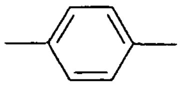
,
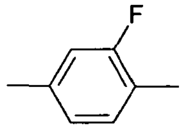

oder

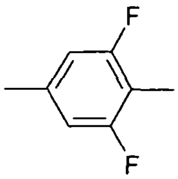
,

bedeuten,

n und m unabhängig voneinander 1 oder 2, bevorzugt
(n+m) 3 oder 4 und, besonders bevorzugt
n 2,
$X^2$ F, Cl, $-CF_3$ oder $-OCF_3$, bevorzugt F oder Cl, besonders bevorzugt F,
$Y^2$ F, Cl, $-CF_3$, $-OCF_3$, oder CN, bevorzugt CN, und
$Z^2$ H oder F,

bedeuten.

Bevorzugte Verbindungen der Formel IIA sind die Verbindungen der entsprechenden Unterformel IIA-1

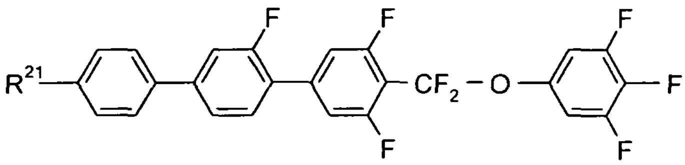
IIA-1

worin $R^{21}$ die oben gegebene Bedeutung hat.

Bevorzugte Verbindungen der Formel IIB sind die Verbindungen der entsprechenden Unterformeln IIB-1 und IIB-2

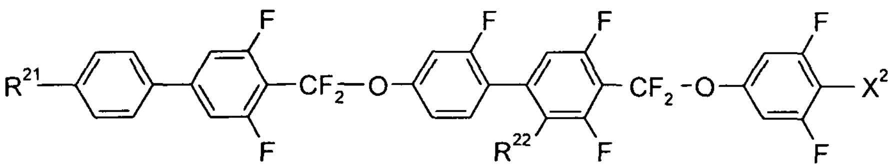
IIB-1

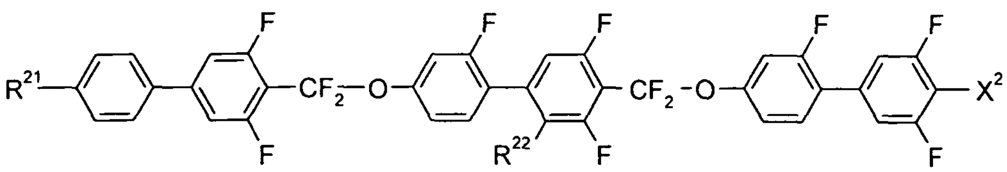
IIB-2

worin $R^{21}$, $R^{22}$ und $X^2$ die jeweiligen oben gegebenen Bedeutungen haben.

In einer bevorzugten Ausführungsform der vorliegenden Erfindung enthält die Komponente C eine oder mehrere Verbindungen ausgewählt aus der Gruppe der Verbindungen der Formeln IIIA und IIIB:

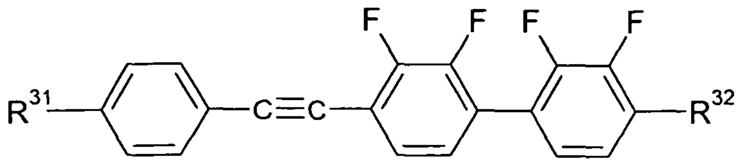

IIIA

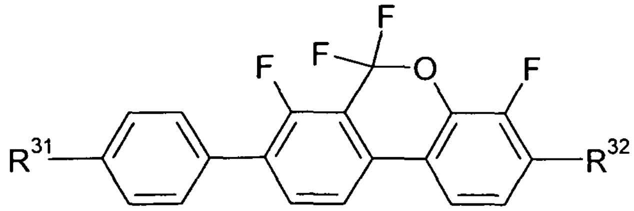

IIIB

worin

$R^{31}$ und $R^{32}$ unabhängig voneinander die oben bei Formel IIA für $R^{21}$ die oben angegebene Bedeutung haben

und bevorzugt

$R^{31}$ $C_nH_{2n+1}$ oder $CH_2$=CH-$(CH_2)_Z$ und

$R^{32}$ $C_mH_{2m+1}$ oder O-$C_mH_{2m+1}$ oder $(CH_2)_Z$-CH=$CH_2$

bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

Z 0, 1, 2, 3 oder 4, bevorzugt 0 oder 2 bedeutet.

Die bevorzugten Kombinationen von ($R^{31}$ und $R^{32}$) sind hier insbesondere ($C_nH_{2n+1}$ und $C_mH_{2m+1}$) und ($C_nH_{2n+1}$ und O-$C_mH_{2m+1}$).

Bevorzugte Verbindungen der Formel IIIB sind die Verbindungen der Unterformeln IIIB-1 und IIIB-2

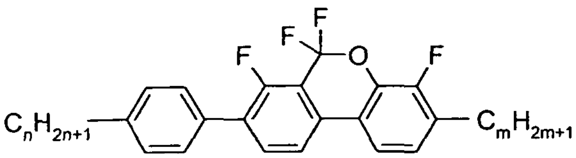

IIIB-1

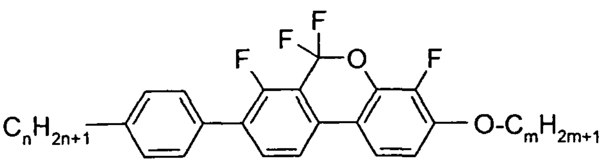

IIIB-2

worin

n und m jeweils die oben bei Formel IIIB gegebenen Bedeutungen haben und bevorzugt unabhängig voneinander eine ganze Zahl im Bereich von 1 bis 7

bedeuten.

In einer bevorzugten Ausführungsform der vorliegenden Erfindung enthält die Komponente D eine oder mehrere Verbindungen der folgenden Formel IV

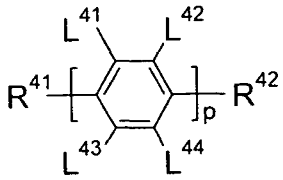

IV

worin

$R^{41}$ und $R^{42}$ unabhängig voneinander eine der oben bei Formel I für $R^{11}$ die oben angegebenen Bedeutungen haben,

$L^{41}$ bis $L^{44}$ bei jedem Erscheinen, jeweils unabhängig voneinander H, Alkyl mit 1 bis 5 C-Atomen, F oder Cl und

p eine ganze Zahl im Bereich von 7 bis 14, bevorzugt von 8 bis 12 und besonders bevorzugt von 9 bis 10

bedeuten
und bevorzugt
mindestens zwei der vorhandenen Substituenten

$L^{41}$ bis $L^{44}$ eine von H verschiedene Bedeutung haben und
$R^{41}$ $C_nH_{2n+1}$ oder $CH_2=CH-(CH_2)_Z$ und
$R^{42}$ $C_mH_{2m+1}$ oder $O-C_mH_{2m+1}$ oder $(CH_2)_Z-CH=CH_2$

bedeutet, und worin

n und m unabhängig voneinander eine ganze Zahl im Bereich von 0 bis 15, bevorzugt im Bereich von 1 bis 7 und besonders bevorzugt 1 bis 5 bedeuten und
Z 0, 1, 2, 3 oder 4, bevorzugt 0 oder 2 bedeutet.

In einer bevorzugten Ausführungsform der vorliegenden Anmeldung enthält das Flüssigkristallmedium zusätzlich eine weitere Komponente, Komponente E, die bevorzugt aus einer oder mehreren Verbindungen ausgewählt aus der Gruppe der Verbindungen der Formeln V bis IX besteht

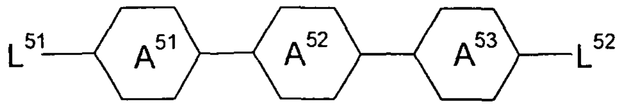

V

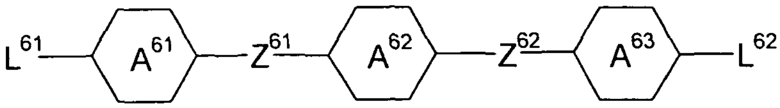

VI

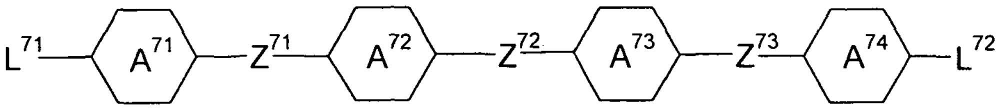

VII

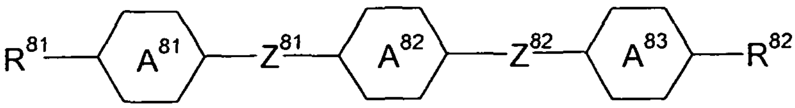

VIII

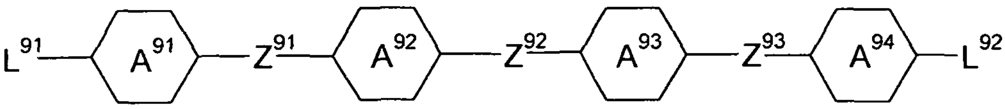

IX

worin

| | |
|---|---|
| $L^{51}$ | $R^{51}$ oder $X^{51}$, |
| $L^{52}$ | $R^{52}$ oder $X^{52}$, |
| $R^{51}$ und $R^{52}$ | unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl bedeuten, |
| $X^{51}$ und $X^{52}$ | unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und |

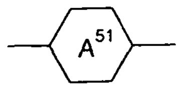 bis 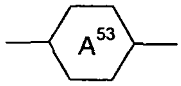

unabhängig voneinander

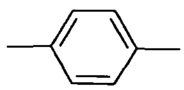, 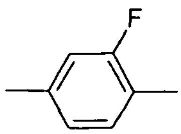, 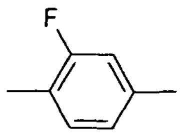,

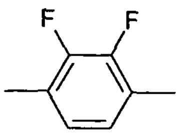, 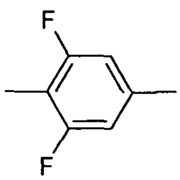, 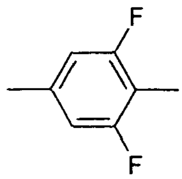,

oder

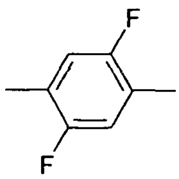,

vorzugsweise

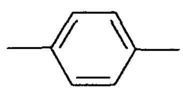, 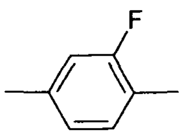, 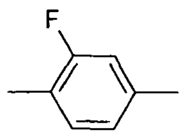,

oder

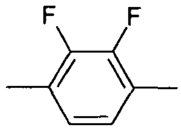,

bedeuten,

$L^{61}$ $R^{61}$ und, im Fall, dass $Z^{61}$ und/oder $Z^{62}$ *trans*- -CH=CH-oder *trans*- -CF=CF-, bedeutet, alternativ auch $X^{61}$, bedeutet,

$L^{62}$ $R^{62}$ und, im Fall, dass $Z^{61}$ und/oder $Z^{62}$ *trans*- -CH=CH-oder *trans*- -CF=CF-, bedeutet, alternativ auch $X^{62}$, bedeutet,

$R^{61}$ und $R^{62}$ unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl, bedeuten,

$X^{61}$ und $X^{62}$ unabhängig voneinander F oder Cl, -CN, -NCS, $-SF_5$, fluoriertes Alkyl oder Alkoxy mit 1 bis 7 C-Atomen oder fluoriertes Alkenyl, Alkenyloxy oder Alkoxyalkyl mit 2 bis 7 C-Atomen, oder -NCS, vorzugsweise -NCS, bedeuten, einer von

$Z^{61}$ und $Z^{62}$ *trans*- -CH=CH-, *trans*- -CF=CF- oder -C=C- bedeutet und der andere unabhängig davon *trans*- -CH=CH-, *trans*-CF=CF- oder eine Einfachbindung bedeutet, vorzugsweise einer von ihnen -C=C- oder *trans*- -CH=CH- und der andere eine Einfachbindung bedeutet, und

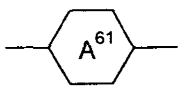 bis 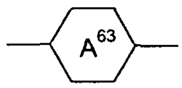

unabhängig voneinander

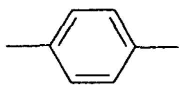, 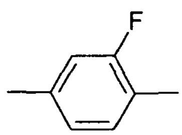, 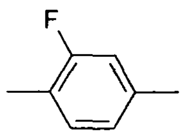,

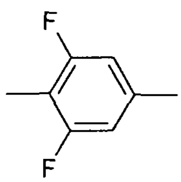, 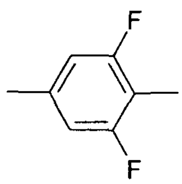, 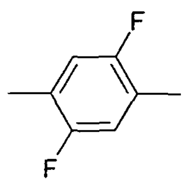,

oder

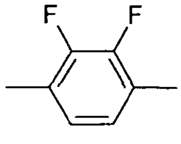,

vorzugsweise

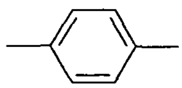, 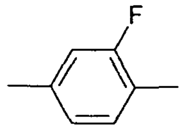, 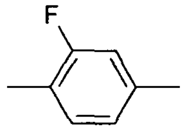,

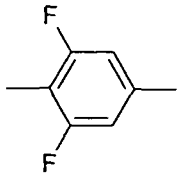, 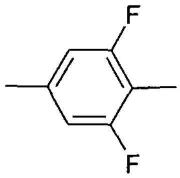,

oder

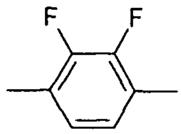,

bedeuten,

$L^{71}$ $R^{71}$ oder $X^{71}$,

$L^{72}$ $R^{72}$ oder $X^{72}$,

$R^{71}$ und $R^{72}$ unabhängig voneinander H, unfluoriertes Alkyl oder unfluoriertes Alkoxy mit 1 bis 17, bevorzugt mit 3 bis 10, C-Atomen oder unfluoriertes Alkenyl, unfluoriertes Alkenyloxy, oder unfluoriertes Alkoxyalkyl mit 2 bis 15, bevorzugt 3 bis 10, C-Atomen, vorzugsweise Alkyl oder unfluoriertes Alkenyl bedeuten,

$X^{71}$ und $X^{72}$ unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und

$Z^{71}$ bis $Z^{73}$ unabhängig voneinander *trans*- -CH=CH-, *trans*--CF=CF-, -C=C- oder eine Einfachbindung bedeuten, vorzugsweise eines oder mehrere von ihnen eine Einfachbindung bedeutet, besonders bevorzugt alle eine Einfachbindung bedeuten und

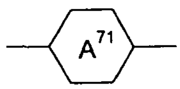 bis 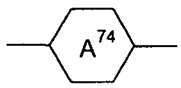

unabhängig voneinander

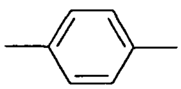, 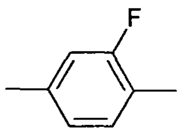, 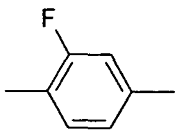,

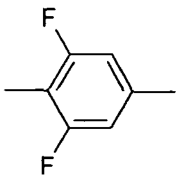, 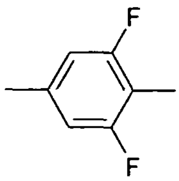, 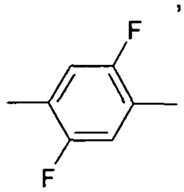,

oder

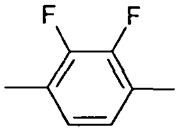,

vorzugsweise

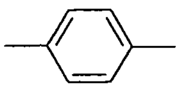, 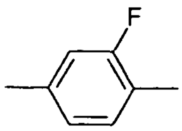, 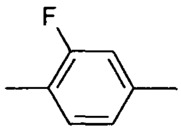,

oder

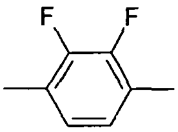,

bedeuten,

$R^{81}$ und $R^{82}$ unabhängig voneinander H, unfluoriertes Alkyl oder Alkoxy mit 1 bis 15, bevorzugt 3 bis 10, C-Atomen oder unfluoriertes Alkenyl, Alkenyloxy oder Alkoxyalkyl mit 2 bis 15, bevorzugt 3 bis 10, C-Atomen, vorzugsweise unfluoriertes Alkyl oder Alkenyl bedeuten,

einer von

$Z^{81}$ und $Z^{82}$ *trans*- -CH=CH-, *trans*- -CF=CF- oder -C=C- bedeutet und der andere unabhängig davon *trans*- -CH=CH-, *trans*-CF=CF- oder eine Einfachbindung bedeutet, vorzugsweise einer von ihnen -C≡C- oder *trans*- -CH=CH- und der andere eine Einfachbindung bedeutet, und

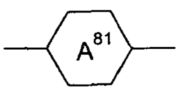 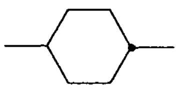

bedeutet,

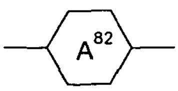 und 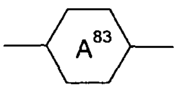

unabhängig voneinander

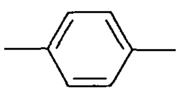, 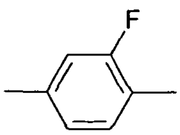, 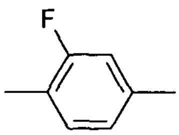,

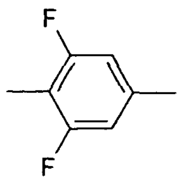, 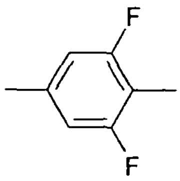, 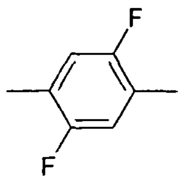,

oder

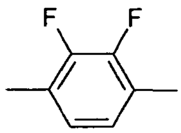

bedeuten,

$L^{91}$ $R^{91}$ oder $X^{91}$ bedeutet,

$L^{92}$ $R^{92}$ oder $X^{92}$ bedeutet,

$R^{91}$ und $R^{92}$ unabhängig voneinander H, unfluoriertes Alkyl oder Alkoxy mit 1 bis 15, bevorzugt 3 bis 10, C-Atomen oder unfluoriertes Alkenyl, Alkenyloxy oder Alkoxyalkyl mit 2 bis 15, bevorzugt 3 bis 10, C-Atomen, vorzugsweise unfluoriertes Alkyl oder Alkenyl bedeuten,

$X^{91}$ und $X^{92}$ unabhängig voneinander H, F, Cl, -CN, -NCS, $-SF_5$, fluoriertes Alkyl oder fluoriertes Alkoxy mit 1 bis 7 C-Atomen oder fluoriertes Alkenyl, unfluoriertes oder Alkenyloxy, oder unfluoriertes oder Alkoxyalkyl mit 2 bis 7 C-Atomen, vorzugsweise fluoriertes Alkoxy, fluoriertes Alkenyloxy, F oder Cl bedeuten, und

$Z^{91}$ bis $Z^{93}$ unabhängig voneinander *trans*- -CH=CH-, *trans*--CF=CF-, -C=C- oder eine Einfachbindung bedeuten bevorzugt einer oder mehrere von ihnen eine Einfachbindung bedeutet, und besonders bevorzugt alle eine Einfachbindung bedeuten,

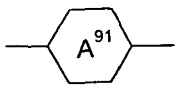 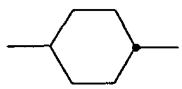, 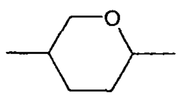

oder

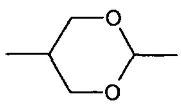

bedeutet,

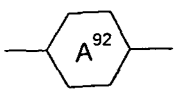 bis 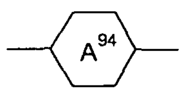

unabhängig voneinander

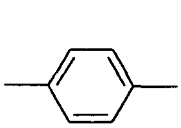 , 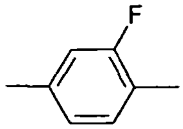 , 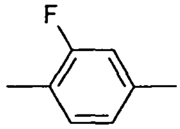 ,

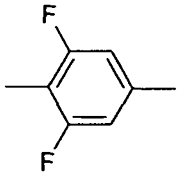 , 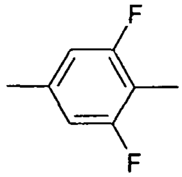 , 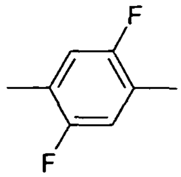 ,

oder

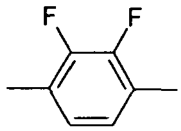

bedeuten,
und, wobei Verbindungen der Formel IIIA von den Verbindungen der Formel VI ausgeschlossen sind.

In einer bevorzugten Ausführungsform der vorliegenden Erfindung enthält das Flüssigkristallmedium eine oder mehrere Verbindungen der Formeln V, bevorzugt ausgewählt aus der Gruppe der Verbindungen der Formeln V-1 bis V-3, bevorzugt der Formeln V-1 und/oder V-2 und/oder V-3, bevorzugt der Formeln V-1 und V-2, stärker bevorzugt bestehen diese Verbindungen der Formel V überwiegend, noch stärker bevorzugt bestehen sie im Wesentlichen und ganz besonders bevorzugt bestehen sie vollständig daraus:

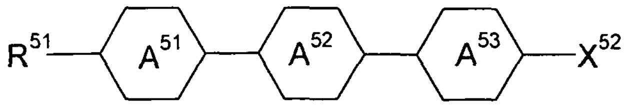

V-1

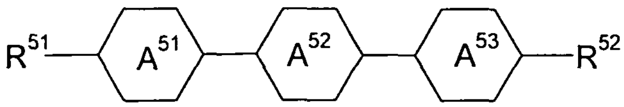

V-2

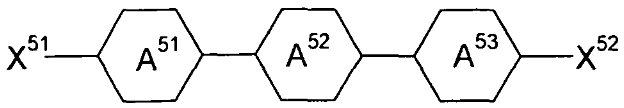

V-3

worin die Parameter die jeweiligen oben bei Formel V angegebenen Bedeutungen haben und bevorzugt

$R^{51}$ unfluoriertes Alkyl mit 1 bis 7 C-Atomen oder unfluoriertes Alkenyl mit 2 bis 7 C-Atomen,

$R^{52}$ unfluoriertes Alkyl mit 1 bis 7 C-Atomen oder unfluoriertes Alkenyl mit 2 bis 7 C-Atomen, oder unfluoriertes Alkoxy, mit 1 bis 7 C-Atomen,

$X^{51}$ und $X^{52}$ unabhängig voneinander F, Cl, $-OCF_3$, $-CF_3$, -CN, -NCS oder $-SF_5$, bevorzugt F, Cl, $-OCF_3$, oder -CN, bedeuten.

Bevorzugt werden die Verbindungen der Formeln V-1 ausgewählt aus der Gruppe der Verbindungen der Formeln V-1a bis V-1d, stärker bevorzugt bestehen diese Verbindungen der Formel V überwiegend, noch stärker bevorzugt

bestehen sie im Wesentlichen und ganz besonders bevorzugt bestehen sie vollständig daraus:

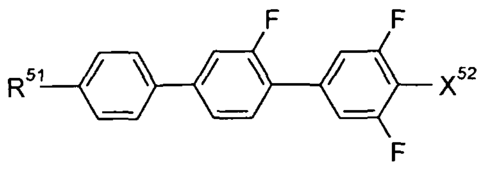
V-1a

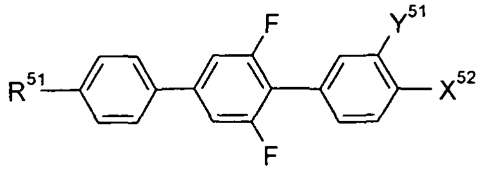
V-1b

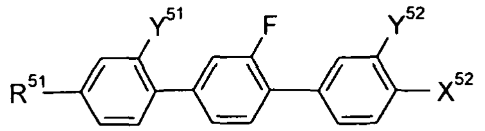
V-1c

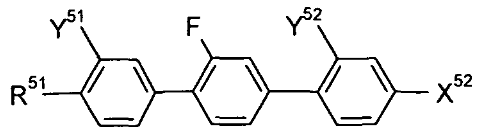
V-1d

worin die Parameter die jeweiligen oben bei Formel V-1 angegebenen Bedeutungen haben und worin

$Y^{51}$ und $Y^{52}$ jeweils unabhängig voneinander H oder F bedeuten, und bevorzugt

$R^{51}$ Alkyl oder Alkenyl, und

$X^{51}$ F, Cl oder $-OCF_3$, bedeuten.

Bevorzugt werden die Verbindungen der Formeln V-2 ausgewählt aus der Gruppe der Verbindungen der Formeln V-2a bis V-2g und/oder aus der Gruppe der Verbindungen der Formeln V-2f und V-2g, stärker bevorzugt bestehen diese Verbindungen der Formel V überwiegend, noch stärker bevorzugt bestehen sie im Wesentlichen und ganz besonders bevorzugt bestehen sie vollständig daraus:

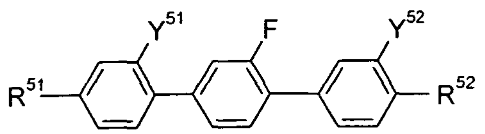
V-2a

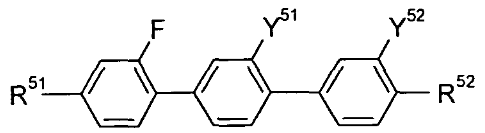
V-2b

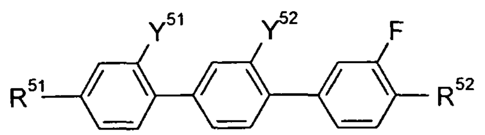
V-2c

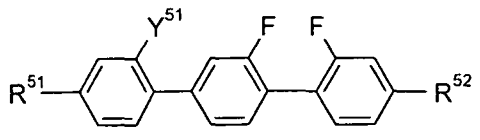

V-2d

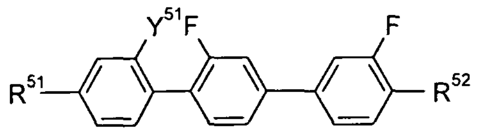

V-2e

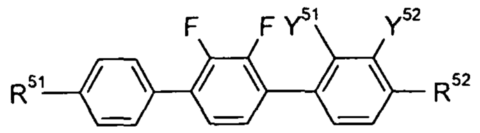

V-2f

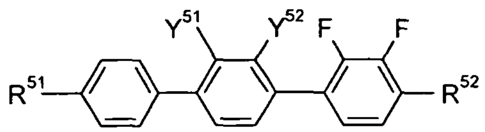

V-2g

wobei jeweils die Verbindungen der Formel V-2a von den Verbindungen der Formeln V-2b und V-2c, die Verbindungen der Formel V-2b von den Verbindungen der Formel V-2c und die Verbindungen der Formel V-2e von den Verbindungen der Formel V-2f ausgeschlossen sind, und
worin die Parameter die jeweiligen oben bei Formel V-1 angegebenen Bedeutungen haben und worin

$Y^{51}$ und $Y^{52}$ jeweils unabhängig voneinander H oder F bedeuten, und bevorzugt

$R^{51}$ Alkyl oder Alkenyl,

$X^{51}$ F, Cl oder $-OCF_3$ bedeuten, und bevorzugt einer von

$Y^{51}$ und $Y^{52}$ H und der andere H oder F bevorzugt ebenfalls H bedeutet.

Bevorzugt sind die Verbindungen der Formel V-3 Verbindungen der Formel V-3a:

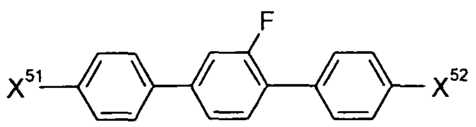

V-3a

worin die Parameter die jeweiligen oben bei Formel V-1 angegebenen Bedeutungen haben und worin bevorzugt

$X^{51}$ F, Cl, bevorzugt F,

$X^{52}$ F, Cl oder $-OCF_3$, bevorzugt $-OCF_3$ bedeutet.

In einer noch stärker bevorzugten Ausführungsform der vorliegenden Erfindung werden die Verbindungen der Formel V ausgewählt aus der Gruppe der Verbindungen V-1 a bis V-1 d, bevorzugt ausgewählt aus der Gruppe der Verbindungen V-1c und V-1d, stärker bevorzugt bestehen die Verbindungen der Formel V überwiegend, noch stärker bevorzugt bestehen sie im Wesentlichen und ganz besonders bevorzugt bestehen sie vollständig daraus:
Bevorzugt werden die Verbindungen der Formeln V-1a ausgewählt aus der Gruppe der Verbindungen der Formeln V-1a-1 und V-1a-2, stärker bevorzugt bestehen diese Verbindungen der Formel V überwiegend, noch stärker bevorzugt bestehen sie im Wesentlichen und ganz besonders bevorzugt bestehen sie vollständig daraus:

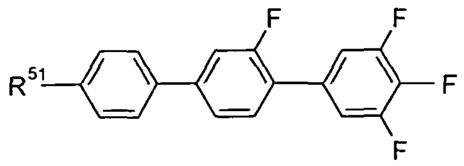

V-1a-1

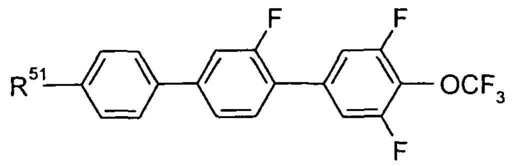

V-1a-2

worin

$R^{51}$ die oben angegebene Bedeutung hat und bevorzugt $C_nH_{2n+1}$ bedeutet, worin

n eine ganze Zahl im Bereich von 0 bis 7, bevorzugt im Bereich von 1 bis 5 und besonders bevorzugt 3 oder 7 bedeutet.

Bevorzugt sind die Verbindungen der Formeln V-1 b Verbindungen der Formel V-2b-1:

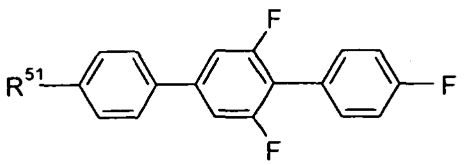

V-1b-1

worin

$R^{51}$ die oben angegebene Bedeutung hat und bevorzugt $C_nH_{2n+1}$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln V-1c ausgewählt aus der Gruppe der Verbindungen der Formeln V-1c-1 bis und V-1c-4, bevorzugt ausgewählt aus der Gruppe der Verbindungen der Formeln V-1c-1 und V-1c-2,stärker bevorzugt bestehen diese Verbindungen der Formel V überwiegend, noch stärker bevorzugt bestehen sie im Wesentlichen und ganz besonders bevorzugt bestehen sie vollständig daraus:

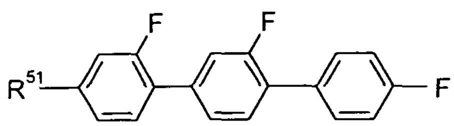

V-1c-1

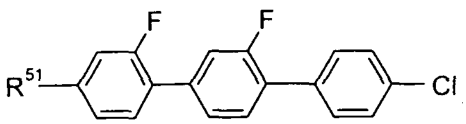

V-1c-2

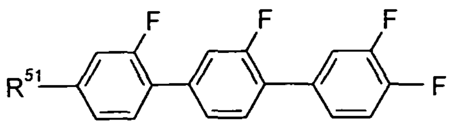

V-1c-3

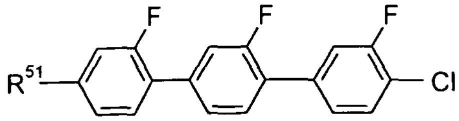

V-1c-4

worin

$R^{51}$ die oben angegebene Bedeutung hat und bevorzugt $C_nH_{2n+1}$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln V-1d ausgewählt aus der Gruppe der Verbindungen der Formeln V-1d-1 und V-1d-2, bevorzugt der Verbindung der Formeln V-1d-2, stärker bevorzugt bestehen diese Verbindungen der Formel V überwiegend, noch stärker bevorzugt bestehen sie im Wesentlichen und ganz besonders bevorzugt bestehen sie vollständig daraus:

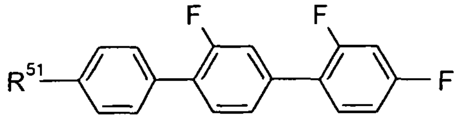

V-1d-1

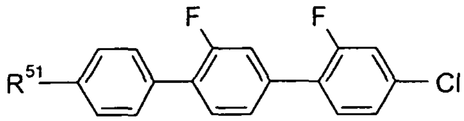

V-1d-2

worin

$R^{51}$ die oben angegebene Bedeutung hat und bevorzugt $C_nH_{2n+1}$ bedeutet, worin

n eine ganze Zahl im Bereich von 0 bis 15, bevorzugt im Bereich von 1 bis 7 und besonders bevorzugt 1 bis 5 bedeutet.

Bevorzugt werden die Verbindungen der Formeln V-2a ausgewählt aus der Gruppe der Verbindungen der Formeln V-2a-1 und V-2a-2, bevorzugt der Verbindungen der Formeln V-1a-1, stärker bevorzugt bestehen diese Verbindungen der Formel V überwiegend, noch stärker bevorzugt bestehen sie im Wesentlichen und ganz besonders bevorzugt bestehen sie vollständig daraus:

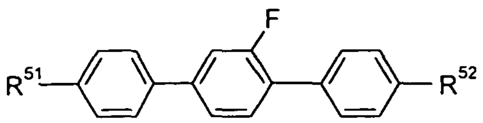

V-2a-1

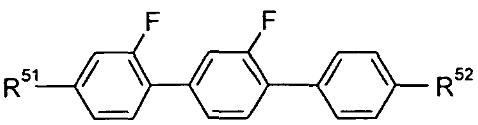

V-2a-2

worin

$R^{51}$ die oben angegebene Bedeutung hat und bevorzugt $C_nH_{2n+1}$ oder $CH_2=CH-(CH_2)_Z$ bedeutet, und

$R^{52}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

Z 0, 1, 2, 3 oder 4, bevorzugt 0 oder 2 bedeutet.

Bevorzugte Kombinationen von ($R^{51}$ und $R^{52}$), insbesondere bei Formel V-2a-1 sind ($C_nH_{2n+1}$ und $C_mH_{2m-1}$), ($C_nH_{2n+1}$ und O-$C_mH_{2m+1}$), ($CH_2$=CH-$(CH_2)_Z$ und $C_mH_{2m+1}$), ($CH_2$=CH-$(CH_2)_Z$ und O-$C_mH_{2m+1}$) und ($C_nH_{2n+1}$ und $(CH_2)_Z$-CH=$CH_2$).

Bevorzugte Verbindungen der Formel V-2b sind die Verbindungen der Formel V-2b-1:

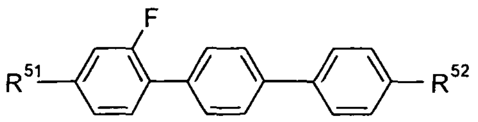

V-2b-1

worin

$R^{51}$ die oben angegebene Bedeutung hat und bevorzugt $C_nH_{2n+1}$ oder $CH_2$=CH-$(CH_2)_Z$ bedeutet, und

$R^{52}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

Z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $C_mH_{2m+1}$).

Bevorzugte Verbindungen der Formel V-2c sind die Verbindungen der Formel V-2c-1:

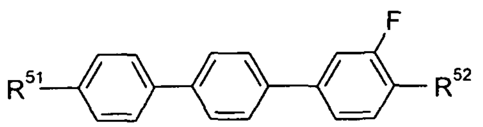

V-2c-1

worin

$R^{51}$ die oben angegebene Bedeutung hat und bevorzugt $C_nH_{2n+1}$ oder $CH_2$=CH-$(CH_2)_z$ bedeutet, und

$R^{52}$ die oben angegebene Bedeutung hat und bevorzugt $C_mH_{2m+1}$ oder O-$C_mH_2m_{+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

Z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $C_mH_{2m+1}$).

Bevorzugte Verbindungen der Formel V-2d sind die Verbindungen der Formel V-2d-1:

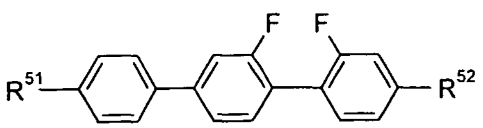

V-2d-1

worin

$R^{51}$ die oben angegebene Bedeutung hat und bevorzugt $C_nH_{2n+1}$ oder $CH_2$=CH-$(CH_2)_z$ bedeutet, und

$R^{52}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

Z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und $C_mH_{2m+1}$).
Bevorzugte Verbindungen der Formel V-2e sind die Verbindungen der Formel V-2e-1:

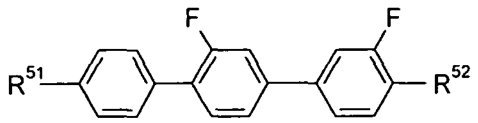

V-2e-1

worin

$R^{51}$ die oben angegebene Bedeutung hat und bevorzugt $C_nH_{2n+1}$ oder $CH_2$=CH-$(CH_2)_z$ bedeutet, und

$R^{52}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

Z 0, 1, 2, 3 oder 4, bevorzugt 0 oder 2 bedeutet.

Die bevorzugte Kombination von ($R^{51}$ und $R^{52}$) ist hier insbesondere ($C_nH_{2n+1}$ und O-$C_mH_{2m+1}$).
Bevorzugte Verbindungen der Formel V-2f sind die Verbindungen der Formel V-2f-1:

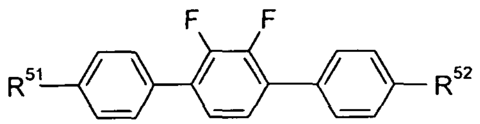

V-2f-1

worin

$R^{51}$ die oben angegebene Bedeutung hat und bevorzugt $C_nH_{2n+1}$ oder $CH_2$=CH-$(CH_2)_z$ bedeutet, und

$R^{52}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

Z 0, 1, 2, 3 oder 4, bevorzugt 0 oder 2 bedeutet.

Die bevorzugten Kombinationen von ($R^{51}$ und $R^{52}$) sind hier insbesondere ($C_nH_{2n-1}$ und $C_mH_{2m+1}$) und ($C_nH_{2n+1}$ und O-$C_mH_{2m+1}$), besonders bevorzugt ($C_{nH2n+1}$ und $C_mH_{2m+1}$).
Bevorzugte Verbindungen der Formel V-2g sind die Verbindungen der Formel V-2g-1:

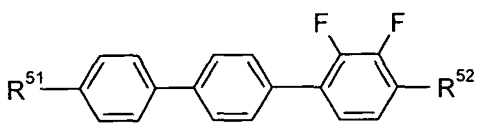

V-2g-1

worin

$R^{51}$ die oben angegebene Bedeutung hat und bevorzugt $C_nH_{2n+1}$ oder $CH_2$=CH-$(CH_2)_z$ bedeutet, und

$R^{52}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

Z 0, 1, 2, 3 oder 4, bevorzugt 0 oder 2 bedeutet.

Die bevorzugten Kombinationen von ($R^{51}$ und $R^{52}$) sind hier insbesondere ($C_nH_{2n+1}$ und $C_mH_{2m+1}$) und ($C_nH_{2n+1}$ und O-$C_mH_{2m+1}$), besonders bevorzugt ($C_nH_{2n+1}$ und O-$C_mH_{2m+1}$).

Bevorzugt werden die Verbindungen der Formeln VI ausgewählt aus der Gruppe der Verbindungen der Formeln VI-1 bis VI-4, stärker bevorzugt bestehen diese Verbindungen der Formel VI überwiegend, noch stärker bevorzugt bestehen sie im Wesentlichen und ganz besonders bevorzugt bestehen sie vollständig daraus:

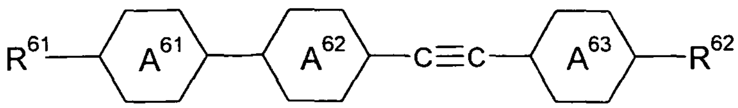

VI-1

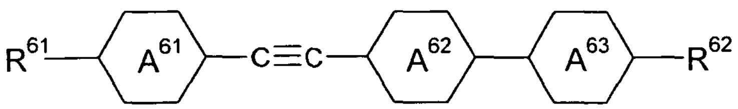

VI-2

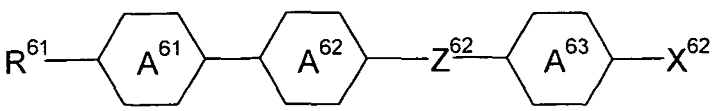

VI-3

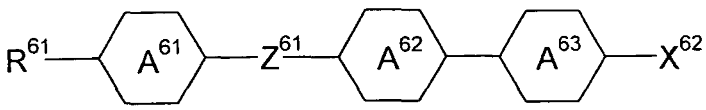

VI-4

worin

$Z^{61}$ und $Z^{62}$ *trans-* -CH=CH- oder *trans-* -CF=CF-, bevorzugt *trans-* -CH=CH-, bedeutet, und die übrigen Parameter die oben unter Formel VI gegebene Bedeutung haben und bevorzugt

$R^{61}$ und $R^{62}$ unabhängig voneinander H, unfluoriertes Alkyl oder Alkoxy mit 1 bis 7 C-Atomen oder unfluoriertes Alkenyl mit 2 bis 7 C-Atomen, bedeuten,

$X^{62}$ F, Cl, -CN oder -NCS, vorzugsweise -NCS, bedeutet,

und einer von

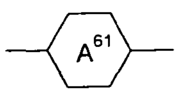

bis

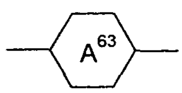

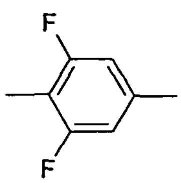

,

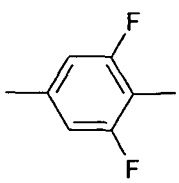

,

oder

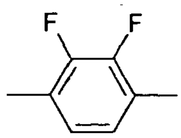

bedeutet
und die anderen unabhängig voneinander

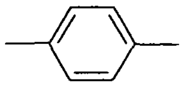 , 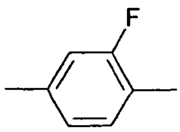 , 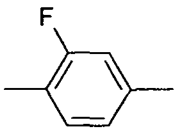 ,

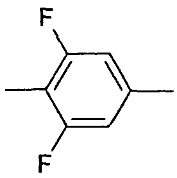 , 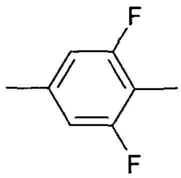 , 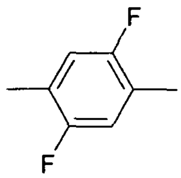 ,

oder

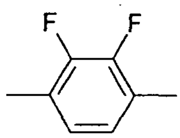 ,

vorzugsweise

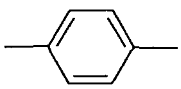 , 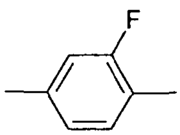 , 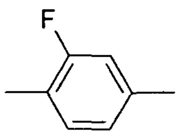 ,

oder

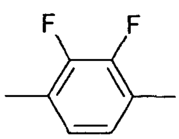 ,

bedeuten und bevorzugt

$R^{61}$ $C_nH_{2n+1}$ oder $CH_2=CH-(CH_2)_Z$ bedeutet, und

$R^{62}$ $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und

besonders bevorzugt 1 bis 5 bedeuten und

z 0, 1, 2, 3 oder 4, bevorzugt 0 oder 2 bedeutet.

Bevorzugt werden die Verbindungen der Formeln VI-1 ausgewählt aus der Gruppe der Verbindungen der Formeln VI-1a und VI-1b, bevorzugt ausgewählt Verbindungen der Formeln VI-1a, stärker bevorzugt bestehen diese Verbindungen der Formel VI überwiegend, noch stärker bevorzugt bestehen sie im Wesentlichen und ganz besonders bevorzugt bestehen sie vollständig daraus:

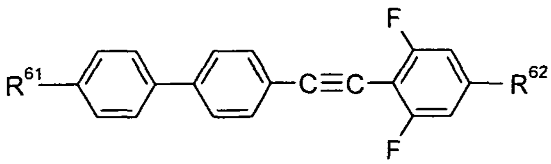

VI-1a

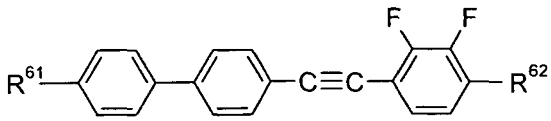

VI-1b

worin

$R^{61}$ die oben angegebene Bedeutung hat und bevorzugt $C_nH_{2n+1}$ oder $CH_2$=CH-$(CH_2)_Z$ bedeutet, und

$R^{62}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{61}$ und $R^{62}$) sind hier insbesondere ($C_nH_{2n+1}$ und $C_mH_{2m+1}$) und ($C_nH_{2n+1}$ und O-$C_mH_{2m+1}$), bei Formel VI-1a besonders bevorzugt ($C_nH_{2n+1}$ und $C_mH_{2m+1}$) und bei Formel VI-1b besonders bevorzugt ($C_nH_{2n+1}$ und O-$C_mH_{2m+1}$).

Bevorzugt sind die Verbindungen der Formel VI-3 Verbindungen der Formel VI-3a:

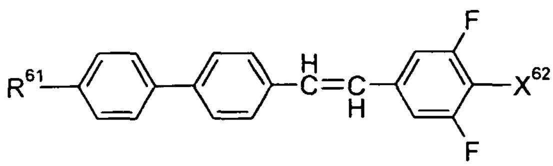

VI-3a

worin die Parameter die oben unter Formel VI-3 gegebene Bedeutung haben und bevorzugt

$R^{61}$ die oben angegebene Bedeutung hat und bevorzugt $C_nH_{2n+1}$ bedeutet, worin

n eine ganze Zahl im Bereich von 0 bis 7, bevorzugt im Bereich von 1 bis 5, und

$X^{62}$ -F, _Cl, $OCF_3$, -CN oder -NCS, besonders bevorzugt - NCS, bedeutet.

Bevorzugt sind die Verbindungen der Formeln VI-4 Verbindungen der Formel VI-4a:

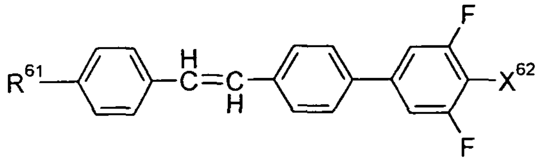

VI-4a

worin die Parameter die oben unter Formel VI-4 gegebene Bedeutung haben und bevorzugt

$R^{61}$ die oben angegebene Bedeutung hat und bevorzugt $C_nH_{2n+1}$ bedeutet, worin

n eine ganze Zahl im Bereich von 0 bis 7, bevorzugt im Bereich von 1 bis 5, und

$X^{62}$ -F, -Cl, $-OCF_3$, -CN oder -NCS, besonders bevorzugt -NCS, bedeutet.

Weitere bevorzugte Verbindungen der Formel VI sind die Verbindungen der folgenden Formeln

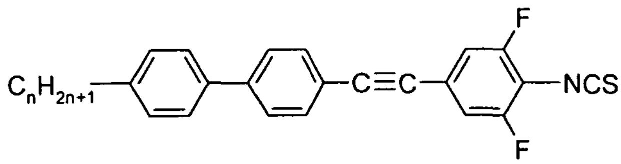

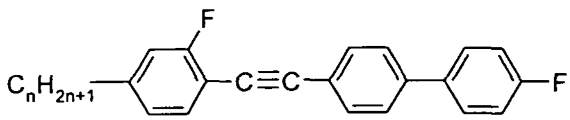

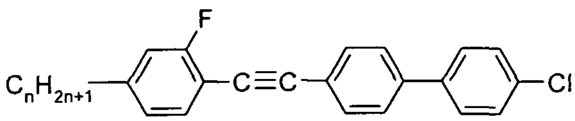

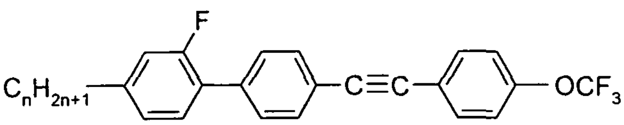

worin

n eine ganze Zahl im Bereich von 0 bis 7, bevorzugt im Bereich von 1 bis 5 bedeutet.

Bevorzugt werden die Verbindungen der Formeln VII ausgewählt aus der Gruppe der Verbindungen der Formeln VII-1 bis VII-6, stärker bevorzugt bestehen diese Verbindungen der Formel VII überwiegend, noch stärker bevorzugt bestehen sie im Wesentlichen und ganz besonders bevorzugt bestehen sie vollständig daraus:

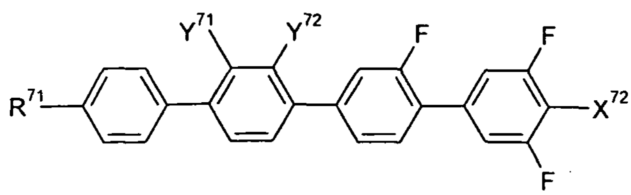

VII-1

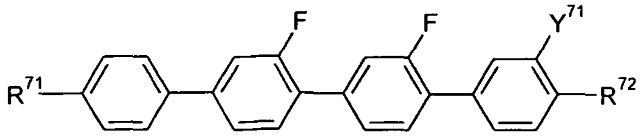

VII-2

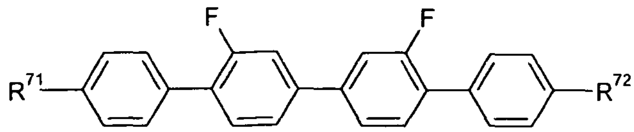

VII-3

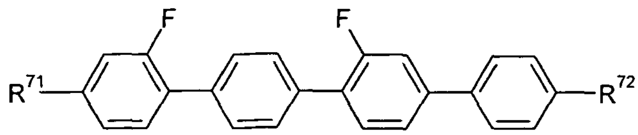

VII-4

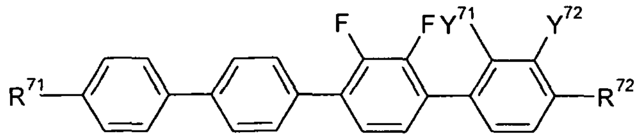

VII-5

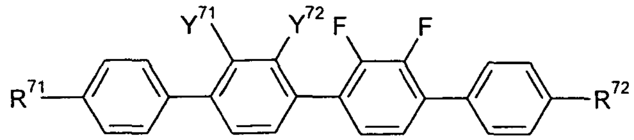

VII-6

wobei die Verbindungen der Formel VII-5 von den Verbindungen der Formel VII-6 ausgeschlossen sind, und worin die Parameter die jeweiligen oben bei Formel VII angegebenen Bedeutungen haben und bevorzugt

$R^{71}$ unfluoriertes Alkyl oder Alkoxy jeweils mit 1 bis 7 C-Atomen oder unfluoriertes Alkenyl mit 2 bis 7 C-Atomen,
$R^{72}$ unfluoriertes Alkyl oder Alkoxy, jeweils mit 1 bis 7 C-Atomen oder unfluoriertes Alkenyl mit 2 bis 7 C-Atomen, und
$X^{72}$ F, Cl, oder $-OCF_3$, bevorzugt F, bedeutet, und

besonders bevorzugt

$R^{71}$ die oben angegebene Bedeutung hat und bevorzugt $C_nH_{2n+1}$ oder $CH_2=CH-(CH_2)_Z$ bedeutet, und

$R^{72}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Bevorzugt werden die Verbindungen der Formeln VII-1 ausgewählt aus der Gruppe der Verbindungen der Formeln VII-1a bis VII-1d, stärker bevorzugt bestehen diese Verbindungen der Formel VII-1 überwiegend, noch stärker bevorzugt bestehen sie im Wesentlichen und ganz besonders bevorzugt bestehen sie vollständig daraus:

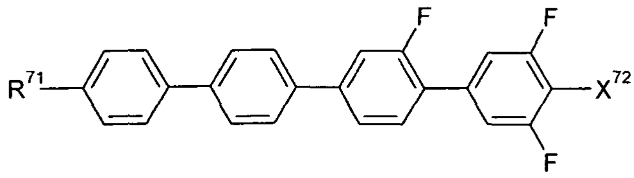

VII-1a

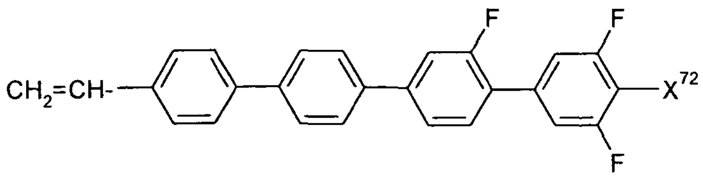

VII-1b

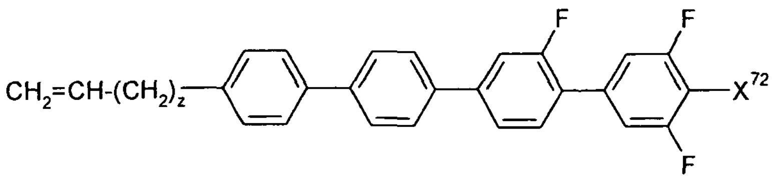

VII-1c

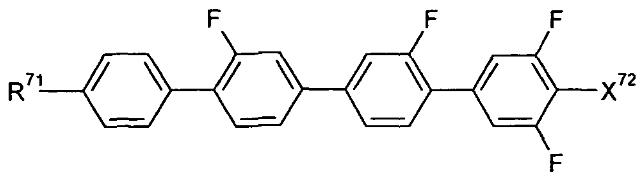

VII-1d

worin $X^{72}$ die oben bei Formel VII-2 gegebene Bedeutung hat und

$R^{71}$ die oben angegebene Bedeutung hat und bevorzugt $C_nH_{2n+1}$ bedeutet, worin

n 1 bis 7, bevorzugt 2 bis 6, besonders bevorzugt 2, 3 oder 5 und

z 0, 1, 2, 3 oder 4, bevorzugt 0 oder 2, und

$X^{72}$ bevorzugt F

bedeutet.

Bevorzugt werden die Verbindungen der Formeln VII-2 ausgewählt aus der Gruppe der Verbindungen der Formeln VII-2a und VII-2b, bevorzugt der Formel VII-2a, stärker bevorzugt bestehen diese Verbindungen der Formel VII-2 überwiegend, noch stärker bevorzugt bestehen sie im Wesentlichen und ganz besonders bevorzugt bestehen sie vollständig daraus:

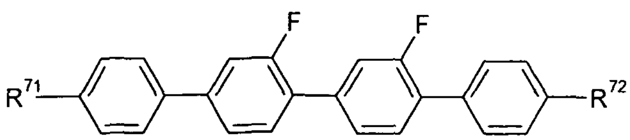

VII-2a

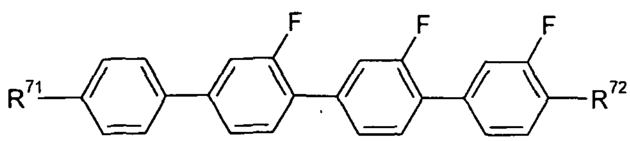

VII-2b

worin

$R^{71}$ die oben angegebene Bedeutung hat und bevorzugt $C_nH_{2n+1}$ oder $CH_2$=CH-$(CH_2)_Z$ bedeutet, und

$R^{72}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_nH_{2n+1}$ und $C_mH_{2m+1}$).

Bevorzugt sind die Verbindungen der Formel VII-3 Verbindungen der Formel VII-3a:

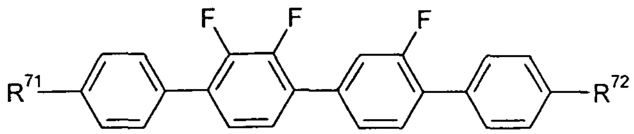

VII-3a

worin

$R^{71}$ die oben angegebene Bedeutung hat und bevorzugt $C_nH_{2n+1}$ oder $CH_2$=CH-$(CH_2)_Z$ bedeutet, und

$R^{72}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_nH_{2n+1}$ und $C_mH_{2m+1}$).

Bevorzugt sind die Verbindungen der Formel VII-4 Verbindungen der Formel VII-4a:

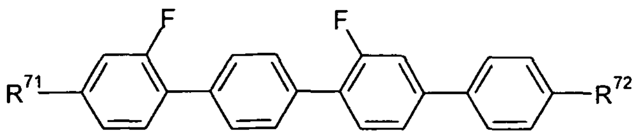

VII-4a

worin

$R^{71}$ die oben angegebene Bedeutung hat und bevorzugt $C_nH_{2n+1}$ oder $CH_2$=CH-$(CH_2)_Z$ bedeutet, und

$R^{72}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_nH_{2n+1}$ und $C_mH_{2m+1}$).

Bevorzugt werden die Verbindungen der Formeln VII-5 ausgewählt aus der Gruppe der Verbindungen der Formeln VII-5a und VII-5b, bevorzugt der Formel VII-5a stärker bevorzugt bestehen diese Verbindungen der Formel

VII-5 überwiegend, noch stärker bevorzugt bestehen sie im Wesentlichen und ganz besonders bevorzugt bestehen sie vollständig daraus:

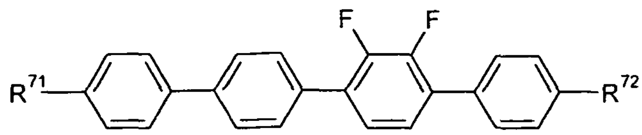

VII-5a

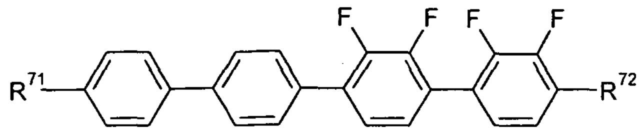

VII-5b

worin

$R^{71}$ die oben angegebene Bedeutung hat und bevorzugt $C_nH_{2n+1}$ oder $CH_2$=CH-$(CH_2)_Z$ bedeutet, und

$R^{72}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$ und O-$C_mH_{2m+1}$). Besonders bevorzugt ($C_nH_{2n+1}$ und $C_mH_{2m+1}$).

Bevorzugt werden die Verbindungen der Formeln VII-6 ausgewählt aus der Gruppe der Verbindungen der Formeln VII-6a und VII-6b, stärker bevorzugt bestehen diese Verbindungen der Formel VII-6 überwiegend, noch stärker bevorzugt bestehen sie im Wesentlichen und ganz besonders bevorzugt bestehen sie vollständig daraus:

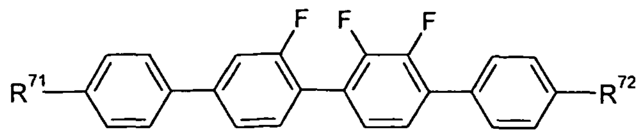

VII-6a

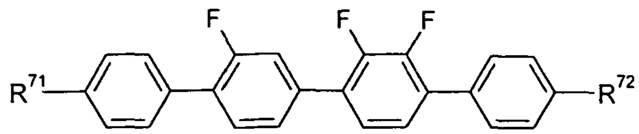

VII-6b

worin

$R^{71}$ die oben angegebene Bedeutung hat und bevorzugt $C_nH_{2n+1}$ oder $CH_2$=CH-$(CH_2)_Z$ bedeutet, und

$R^{72}$ die oben angegebene Bedeutung hat und bevorzugt $C_mH_{2m+1}$ oder O-$C_mH_{2m+1}$ oder $(CH_2)_Z$-CH=$CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{71}$ und $R^{72}$) sind hier insbesondere ($C_nH_{2n+1}$ und $C_mH_{2m+1}$) und ($C_nH_{2n+1}$

und O-$C_mH_{2m+1}$), besonders bevorzugt ($C_nH_{2n+1}$ und $C_mH_{2m+1}$).

Bevorzugt enthalten die flüssigkristallinen Medien gemäß der vorliegenden Anmeldung insgesamt 0 bis 40 %, bevorzugt 0 bis 30 % und besonders bevorzugt 5 bis 25 % an Verbindungen der Formel VIII.

Bevorzugt werden die Verbindungen der Formeln VIII ausgewählt aus der Gruppe der Verbindungen der Formeln VIII-1 bis VIII-3, stärker bevorzugt bestehen diese Verbindungen der Formel VIII überwiegend, noch stärker bevorzugt bestehen sie im Wesentlichen und ganz besonders bevorzugt bestehen sie vollständig daraus:

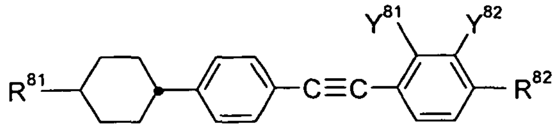

VIII-1

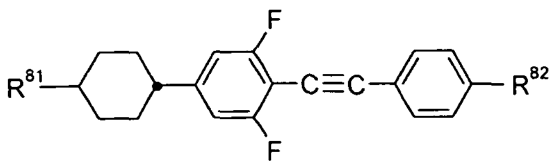

VIII-2

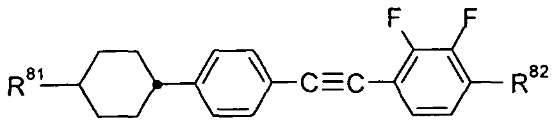

VIII-3

worin
einer von

| | |
|---|---|
| $Y^{81}$ und $Y^{82}$ | H bedeutet und der andere H oder F bedeutet, und |
| $R^{81}$ | die oben angegebene Bedeutung hat und bevorzugt $C_nH_{2n+1}$ oder $CH_2$=CH-$(CH_2)_Z$ bedeutet, und |
| $R^{82}$ | die oben angegebene Bedeutung hat und bevorzugt $C_mH_{2m+1}$ oder O-$C_mH_{2m+1}$ oder $(CH_2)_Z$-CH=$CH_2$ bedeutet, und worin |
| n und m | unabhängig voneinander eine ganze Zahl im Bereich von 0 bis 15, bevorzugt im Bereich von 1 bis 7 und besonders bevorzugt 1 bis 5 bedeuten und |
| z | 0, 1, 2, 3 oder 4, bevorzugt 0 oder 2 bedeutet. |

Die bevorzugten Kombinationen von ($R^{81}$ und $R^{82}$) sind hier insbesondere ($C_nH_{2n+1}$ und $C_mH_{2m+1}$) und ($C_nH_{2n+1}$ und O-$C_mH_{2m+1}$) besonders bevorzugt ($C_nH_{2n+1}$ und $C_mH_{2m+1}$).

Bevorzugt werden die Verbindungen der Formeln VIII-1 ausgewählt aus der Gruppe der Verbindungen der Formeln VIII-1a bis VIII-1c, stärker bevorzugt bestehen diese Verbindungen der Formel VIII-1 überwiegend, noch stärker bevorzugt bestehen sie im Wesentlichen und ganz besonders bevorzugt bestehen sie vollständig daraus:

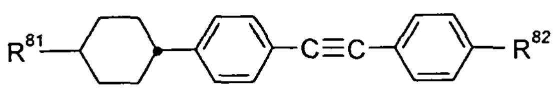

VIII-1a

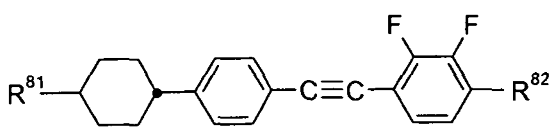

VIII-1b

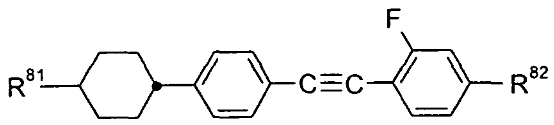

VIII-1c

worin

$R^{81}$ die oben angegebene Bedeutung hat und bevorzugt $C_nH_{2n+1}$ oder $CH_2=CH-(CH_2)_Z$ bedeutet, und

$R^{82}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{81}$ und $R^{82}$) sind hier insbesondere ($C_nH_{2n+1}$ und $C_mH_{2m+1}$) und ($C_nH_{2n+1}$ und $O-C_mH_{2m+1}$) besonders bevorzugt ($C_nH_{2n+1}$ und $C_mH_{2m+1}$).

Bevorzugt sind die Verbindungen der Formel VIII-2 Verbindungen der Formel VIII-2a:

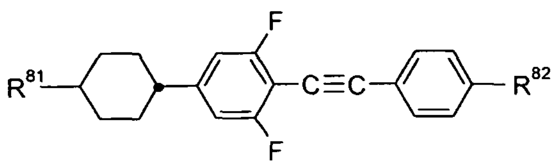

VIII-2a

worin

$R^{81}$ die oben angegebene Bedeutung hat und bevorzugt $C_nH_{2n+1}$ oder $CH_2=CH-(CH_2)_Z$ bedeutet, und

$R^{82}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{81}$ und $R^{82}$) sind hier insbesondere ($C_nH_{2n+1}$ und $C_mH_{2m+1}$), $C_nH_{2n+1}$ und $O-C_mH_{2m+1}$) und ($CH_2=CH-(CH_2)_z$ und $C_mH_{2m+1}$) besonders bevorzugt ($C_nH_{2n+1}$ und $C_mH_{2m+1}$).

Bevorzugt sind die Verbindungen der Formel VIII-3 Verbindungen der Formel VIII-3a:

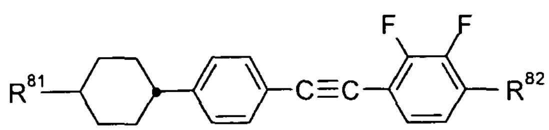

VIII-3a

worin

$R^{81}$ die oben angegebene Bedeutung hat und bevorzugt $C_nH_{2n+1}$ oder $CH_2=CH-(CH_2)_Z$ bedeutet, und

$R^{82}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{81}$ und $R^{82}$) sind hier insbesondere ($C_nH_{2n+1}$ und $C_mH_{2m+1}$) und ($C_nH_{2n+1}$ und $O\text{-}C_mH_{2m+1}$).

Bevorzugt werden die Verbindungen der Formeln IX ausgewählt aus der Gruppe der Verbindungen der Formeln IX-1 bis IX-3, stärker bevorzugt bestehen diese Verbindungen der Formel IX überwiegend, noch stärker bevorzugt bestehen sie im Wesentlichen und ganz besonders bevorzugt bestehen sie vollständig daraus:

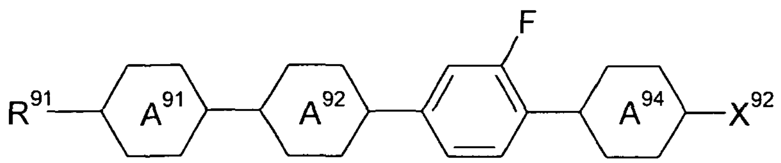
IX-1

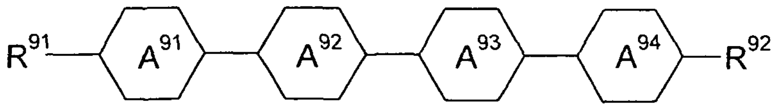
IX-2

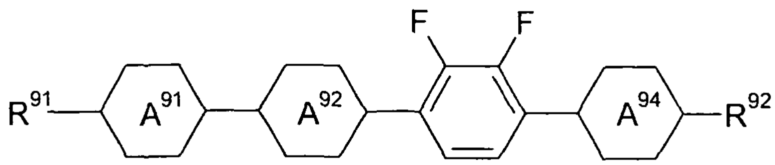
IX-3

worin die Parameter die jeweilige oben unter Formel IX angegebene Bedeutung haben und bevorzugt einer von

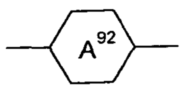
bis
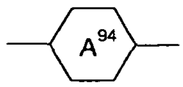

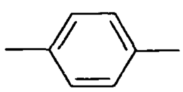
,
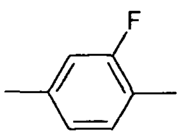
,
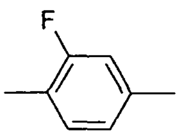
,

bedeutet
und
worin

$R^{91}$ die oben angegebene Bedeutung hat und bevorzugt $C_nH_{2n+1}$ oder $CH_2=CH\text{-}(CH_2)_Z$ bedeutet, und

$R^{92}$ die oben angegebene Bedeutung hat und bevorzugt $C_mH_{2m+1}$ oder $O\text{-}C_mH_{2m+1}$ oder $(CH_2)_Z\text{-}CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{91}$ und $R^{92}$) sind hier insbesondere ($C_nH_{2n+1}$ und $C_mH_{2m+1}$) und ($C_nH_{2n+1}$ und $O\text{-}C_mH_{2m+1}$).

Bevorzugt enthalten die flüssigkristallinen Medien gemäß der vorliegenden Anmeldung insgesamt 5 bis 30 %, bevorzugt 10 bis 25 % und besonders bevorzugt 15 bis 20 % an Verbindungen der Formel IX.

Bevorzugt werden die Verbindungen der Formeln IX-1 ausgewählt aus der Gruppe der Verbindungen der Formeln IX-1a bis IX-1e, stärker bevorzugt bestehen diese Verbindungen der Formel IX-1 überwiegend, noch stärker bevorzugt bestehen sie im Wesentlichen und ganz besonders bevorzugt bestehen sie vollständig daraus:

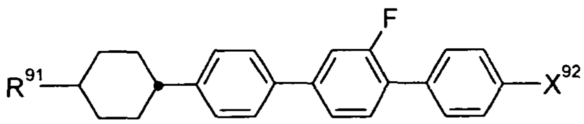

IX-1a

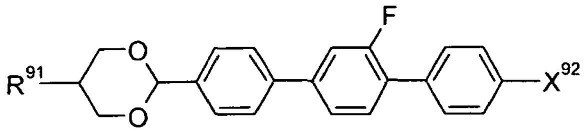

IX-1b

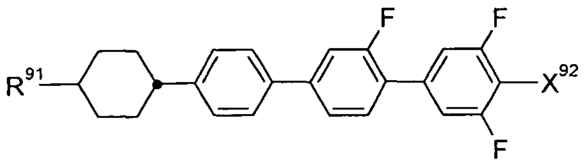

IX-1c

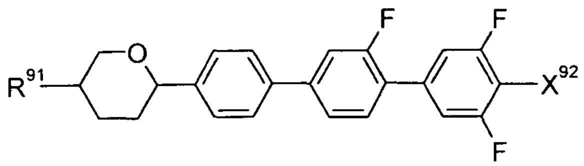

IX-1d

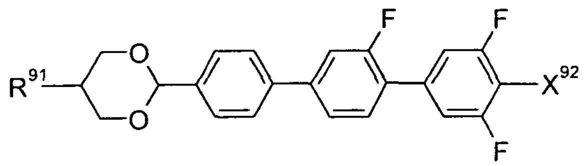

IX-1e

worin die Parameter die oben gegebene Bedeutung haben und bevorzugt

$R^{91}$ die oben angegebene Bedeutung hat und bevorzugt $C_nH_{2n+1}$ bedeutet, und

n eine ganze Zahl im Bereich von 0 bis 15, bevorzugt im Bereich von 1 bis 7 und besonders bevorzugt 1 bis 5 bedeutet und

$X^{92}$ bevorzugt F oder Cl bedeutet.

Bevorzugt werden die Verbindungen der Formeln IX-2 ausgewählt aus der Gruppe der Verbindungen der Formeln IX-2a und IX-2b, stärker bevorzugt bestehen diese Verbindungen der Formel IX-2 überwiegend, noch stärker bevorzugt bestehen sie im Wesentlichen und ganz besonders bevorzugt bestehen sie vollständig daraus:

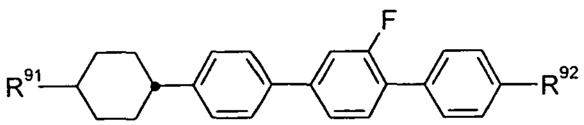

IX-2a

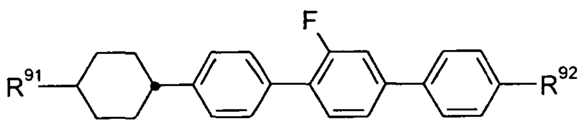

IX-2b

worin

$R^{91}$ die oben angegebene Bedeutung hat und bevorzugt $C_nH_{2n+1}$ oder $CH_2=CH-(CH_2)_Z$ bedeutet, und

$R^{92}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugte Kombination von ($R^{91}$ und $R^{92}$) ist hier insbesondere ($C_nH_{2n+1}$ und $C_mH_{2m+1}$).

Bevorzugt sind die Verbindungen der Formel IX-3 Verbindungen der Formel IX-3:

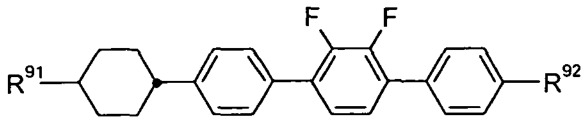

IX-3a

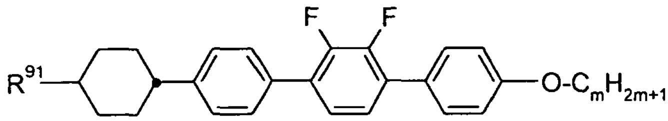

IX-3b

worin

$R^{91}$ die oben angegebene Bedeutung hat und bevorzugt $C_nH_{2n+1}$ oder $CH_2=CH-(CH_2)_Z$ bedeutet, und

$R^{92}$ die oben angegebene Bedeutung hat und bevorzugt $C_mH_{2m+1}$ oder $O-C_mH_{2m+1}$ oder $(CH_2)_Z-CH=CH_2$ bedeutet, und worin

n und m unabhängig voneinander eine ganze Zahl im Bereich von 0 bis 15, bevorzugt im Bereich von 1 bis 7 und besonders bevorzugt 1 bis 5 bedeuten und

z 0, 1, 2, 3 oder 4, bevorzugt 0 oder 2 bedeutet.

Die bevorzugten Kombinationen von ($R^{91}$ und $R^{92}$) sind hier insbesondere ($C_nH_{2n+1}$ und $C_mH_{2m+1}$) und ($C_nH_{2n+1}$ und $O-C_mH_{2m+1}$), besonders bevorzugt ($C_nH_{2n+1}$ und $O-C_mH_{2m+1}$).

In einer bevorzugten Ausführungsform der vorliegenden Erfindung enthält das Medium eine oder mehrere dielektrisch positive Verbindungen mit einer dielektrischen Anisotropie von mehr als 3 der Formel V-1.

Bevorzugt enthalten die flüssigkristallinen Medien gemäß der vorliegenden Erfindung 10 % oder weniger, bevorzugt 5 % oder weniger, besonders bevorzugt 2 % oder weniger, ganz besonders bevorzugt 1 % oder weniger, und insbesondere überhaupt keine Verbindung mit nur zwei oder weniger fünf und/oder sechsgliedrigen Ringen.

In einer bevorzugten Ausführungsform der vorliegenden Erfindung enthält das Medium eine oder mehrere Verbindungen der Formel VI.

In einer weiteren bevorzugten Ausführungsform der vorliegenden Erfindung enthält das Medium eine oder mehrere Verbindungen der Formel VII.

Die Definitionen der in der vorliegenden Anmeldung für die Verbindungen benutzten Abkürzungen (Akronyme) sind unten in Tabelle D angegeben, bzw. aus den Tabellen A bis C zu ersehen.

In einer bevorzugten Ausführungsform der vorliegenden Erfindung enthält das Flüssigkristallmedium, bzw. die Komponente F des Flüssigkristallmediums, eine oder mehrere Verbindungen der Formeln I-1 und/oder I-2 und/oder I-3 und/oder I-4.

Bevorzugt enthält das Flüssigkristallmedium, bzw. die Komponente F des Flüssigkristallmediums, eine oder mehrere Verbindungen ausgewählt aus den Verbindungen der Formeln I-1a-1 bis I-1a-12, besonders bevorzugt der Formel I-1a-2, ganz besonders bevorzugt eine oder mehrere Verbindungen der Formel I-1a-2 und eine oder mehrere Verbindungen ausgewählt aus der Gruppe der Verbindungen der Formel I-1a-1 und Formel I-1a-3 bis I-1a-12, und eine oder mehrere Verbindungen der Formeln I-1b-1 bis I-1b-12 und/oder I-2 und/oder I-3 und/oder I-4.

In einer weiteren bevorzugten Ausführungsform der vorliegenden Erfindung enthält das Flüssigkristallmedium, bzw. die Komponente F des Flüssigkristallmediums, eine oder mehrere Verbindungen ausgewählt aus der Gruppe der Verbindungen der Formeln I-1b-1 bis I-1b-12, besonders bevorzugt ausgewählt aus der Gruppe der Verbindungen der Formeln I-1b-5 und/oder I-1b-7 und/oder I-Ib-8 und/oder I-1b-9 und/oder I-1b-10, und eine oder mehrere Verbindungen ausgewählt aus der Gruppe der Verbindungen der Formeln I-1a-1 bis I-1a-12, bevorzugt der Formel I-1a-2 und/oder eine oder mehrere Verbindungen der Formeln und/oder I-2 und/oder I-3 und/oder I-4.

In einer weiteren bevorzugten Ausführungsform der vorliegenden Erfindung enthält das Flüssigkristallmedium, bzw. die Komponente F des Flüssigkristallmediums, eine oder mehrere Verbindungen der Formel I-2, und eine oder mehrere Verbindungen der Formeln I-1, bevorzugt der Formeln I-1a, bevorzugt der Formel I-1a-2, und/oder I-1b, und/oder eine oder mehrere Verbindungen der Formeln und/oder I-3 und/oder I-4.

In einer weiteren bevorzugten Ausführungsform der vorliegenden Erfindung enthält das Flüssigkristallmedium, bzw. die Komponente F des Flüssigkristallmediums, eine oder mehrere Verbindungen der Formel I-3, und eine oder mehrere Verbindungen der Formeln I-1, bevorzugt der Formeln I-1a, bevorzugt der Formel I-1a-2, und/oder I-1b, und/oder eine oder mehrere Verbindungen der Formeln und/oder I-2 und/oder I-4.

In einer weiteren bevorzugten Ausführungsform der vorliegenden Erfindung enthält das Flüssigkristallmedium, bzw. die Komponente F des Flüssigkristallmediums, eine oder mehrere Verbindungen der Formel I-4, und eine oder mehrere Verbindungen der Formeln I-1, bevorzugt der Formeln I-1a, bevorzugt der Formel I-1a-2, und/oder I-1b, und/oder eine oder mehrere Verbindungen der Formeln und/oder I-2 und/oder I-3.

Vorzugsweise enthalten die flüssigkristallinen Medien gemäß der vorliegenden Erfindung Verbindungen ausgewählt aus der Gruppe der Verbindungen der Formeln I, II, IV, V und X, vorzugsweise I, II, IV und X, vorzugsweise I, III und IV und/oder X, stärker bevorzugt bestehen sie überwiegend, noch stärker bevorzugt bestehen sie im Wesentlichen und ganz bevorzugt bestehen sie vollständig daraus.

In dieser Anmeldung bedeutet enthalten im Zusammenhang mit Zusammensetzungen, dass die betreffende Entität, d.h. das Medium oder die Komponente, die angegebene Komponente oder Komponenten oder Verbindung oder Verbindungen enthält, vorzugsweise in einer Gesamtkonzentration von 10 % oder mehr und ganz bevorzugt von 20 % oder mehr.

Überwiegend bestehen bedeutet in diesem Zusammenhang, dass die betreffende Entität 55 % oder mehr, vorzugsweise 60 % oder mehr und ganz bevorzugt 70 % oder mehr der angegebenen Komponente oder Komponenten oder Verbindung oder Verbindungen enthält.

Im Wesentlichen bestehen bedeutet in diesem Zusammenhang, dass die betreffende Entität 80 % oder mehr, vorzugsweise 90 % oder mehr und ganz bevorzugt 95 % oder mehr der angegebenen Komponente oder Komponenten oder Verbindung oder Verbindungen enthält.

Vollständig bestehen bedeutet in diesem Zusammenhang, dass die betreffende Entität 98 % oder mehr, vorzugsweise 99 % oder mehr und ganz bevorzugt 100,0 % der angegebenen Komponente oder Komponenten oder Verbindung oder Verbindungen enthält.

Auch andere mesogene Verbindungen, die oben nicht explizit genannt sind, können gegebenenfalls und in vorteilhafter Weise in den Medien gemäß der vorliegenden Erfindung verwendet werden. Solche Verbindungen sind dem Fachmann bekannt.

Die Flüssigkristallmedien gemäß der vorliegenden Erfindung weisen bevorzugt einen Klärpunkt von 90°C oder mehr, stärker bevorzugt von 100°C oder mehr, noch stärker bevorzugt von 120°C oder mehr, besonders bevorzugt von 150°C oder mehr und ganz besonders bevorzugt von 170°C oder mehr auf.

Vorzugsweise erstreckt sich die nematische Phase der erfindungsgemäßen Medien mindestens von 20°C oder weniger bis 90°C oder mehr, bevorzugt bis 100°C oder mehr, stärker bevorzugt mindestens von 0°C oder weniger bis 120°C oder mehr, ganz bevorzugt mindestens von -10°C oder weniger bis 140°C oder mehr und insbesondere mindestens von -20°C oder weniger bis 150°C oder mehr.

Das $\Delta\varepsilon$ des Flüssigkristallmediums gemäß der Erfindung bei 1 kHz und 20°C beträgt vorzugsweise 1 oder mehr, stärker bevorzugt 2 oder mehr und ganz bevorzugt 3 oder mehr.

Das $\Delta n$ der Flüssigkristallmedien gemäß der vorliegenden Erfindung liegt bei 589 nm ($Na^D$) und 20°C vorzugsweise im Bereich von 0,200 oder mehr bis 0,90 oder weniger, stärker bevorzugt im Bereich von 0,250 oder mehr bis 0,90 oder weniger, noch stärker bevorzugt im Bereich von 0,300 oder mehr bis 0, 85 oder weniger und ganz besonders bevorzugt im Bereich von 0,350 oder mehr bis 0,800 oder weniger.

In einer bevorzugten Ausführungsform der vorliegenden Anmeldung beträgt das $\Delta n$ der Flüssigkristallmedien gemäß der vorliegenden Erfindung vorzugsweise 0,40 oder mehr, stärker bevorzugt 0,45 oder mehr.

Die flüssigkristallinen Medien gemäß der vorliegenden Anmeldung enthalten eine oder mehrere Verbindungen der Formel X bevorzugt in einer Gesamtkonzentration von 10 % bis 100 %, stärker bevorzugt von 30 % bis 95 %, noch stärker bevorzugt von 40 % bis 90 % und ganz bevorzugt von 50 % bis 90 % der Gesamtmischung verwendet.

Gemäß der vorliegenden Erfindung werden die einzelnen Verbindungen der Formel I in den Flüssigkristallmedien vorzugsweise in einer Konzentration von 5 % bis 25 %, bevorzugt 10 % bis 20 % und besonders bevorzugt 13 %

bis 17 %.

Gemäß der vorliegenden Erfindung werden die einzelnen Verbindungen der Formel I in den Flüssigkristallmedien vorzugsweise in einer Gesamtkonzentration von 10 % bis 100 %, stärker bevorzugt von 30 % bis 95 %, noch stärker bevorzugt von 40 % bis 90 % und ganz bevorzugt von 50 % bis 90 % der Gesamtmischung verwendet.

In der Ausführungsform der vorliegenden Erfindung in der die Flüssigkristallmedien eine oder mehrere Verbindungen ausgewählt aus der Gruppe der Verbindungen der Formeln IIA und IIB enthalten, werden die weiteren Verbindungen vorzugsweise wie folgt eingesetzt.

Die Verbindungen ausgewählt aus der Gruppe der Verbindungen der Formeln IIA und IIB werden vorzugsweise in einer Gesamtkonzentration von 1 % bis 30 %, stärker bevorzugt von 2 % bis 20 %, stärker bevorzugt von 3 % bis 18 % und ganz bevorzugt von 4 % bis 16 % der Gesamtmischung verwendet.

Die Verbindungen der Formel IV werden vorzugsweise in einer Gesamtkonzentration von 1 % bis 20 %, stärker bevorzugt von 2 % bis 15 %, noch stärker bevorzugt von 3 % bis 12 % und ganz bevorzugt von 5 % bis 10 % der Gesamtmischung verwendet.

Die Flüssigkristallmedien enthalten vorzugsweise insgesamt 70 % bis 100 %, stärker bevorzugt 80 % bis 100 % und ganz bevorzugt 90 % bis 100 % und insbesondere 95 % bis 100 % an Verbindungen ausgewählt aus der Gruppe der Verbindungen der Formeln I, IIA, IIB, IV bis IX und X, vorzugsweise der Formeln I, IIA, IIB, IV und X, vorzugsweise bestehen sie überwiegend daraus und ganz bevorzugt bestehen sie vollständig daraus.

In der Ausführungsform der vorliegenden Erfindung in der die Flüssigkristallmedien eine oder mehrere Verbindungen ausgewählt aus der Gruppe der Verbindungen der Formel IIIA und IIIB enthalten, werden die weiteren Verbindungen vorzugsweise wie folgt eingesetzt.

Die Verbindungen ausgewählt aus der Gruppe der Verbindungen der Formel IIIA und IIIB werden vorzugsweise in einer Gesamtkonzentration von 1 % bis 60 %, stärker bevorzugt von 5 % bis 55 %, stärker bevorzugt von 7 % bis 50 % und ganz bevorzugt von 10 % bis 45 % der Gesamtmischung verwendet.

Wenn die Flüssigkristallmedien nur eine oder mehrere Verbindungen der Formel IIIA aber keine Verbindungen der Formel IIIB enthält, werden die Verbindungen der Formel IIIA vorzugsweise in einer Gesamtkonzentration von 10 % bis 60 %, stärker bevorzugt von 20 % bis 55 %, stärker bevorzugt von 30 % bis 50 % und ganz bevorzugt von 35 % bis 45 % der Gesamtmischung verwendet.

Wenn die Flüssigkristallmedien nur eine oder mehrere Verbindungen der Formel IIIB aber keine Verbindungen der Formel IIIA enthält, werden die Verbindungen der Formel IIIB vorzugsweise in einer Gesamtkonzentration von 5 % bis 45 %, stärker bevorzugt von 10 % bis 40 %, stärker bevorzugt von 15 % bis 35 % und ganz bevorzugt von 20 % bis 30 % der Gesamtmischung verwendet.

Wenn die Flüssigkristallmedien sowohl eine oder mehrere Verbindungen der Formel IIIA, als auch eine oder mehrere Verbindungen der Formel IIIB enthält, werden die Verbindungen der Formel IIIA vorzugsweise in einer Gesamtkonzentration von 5 % bis 50 %, stärker bevorzugt von 10 % bis 45 %, stärker bevorzugt von 15 % bis 30 % und ganz bevorzugt von 20 % bis 25 % der Gesamtmischung und die Verbindungen der Formel IIIB in einer Gesamtkonzentration von 1 % bis 35 %, stärker bevorzugt von 5 % bis 30 %, stärker bevorzugt von 7 % bis 25 % und ganz bevorzugt von 10 % bis 20 % der Gesamtmischung verwendet.

Die Verbindungen der Formel IV werden vorzugsweise in einer Gesamtkonzentration von 1 % bis 20 %, stärker bevorzugt von 2 % bis 15 %, noch stärker bevorzugt von 3 % bis 12 % und ganz bevorzugt von 5 % bis 10 % der Gesamtmischung verwendet.

Die Flüssigkristallmedien enthalten vorzugsweise insgesamt 70 % bis 100 %, stärker bevorzugt 80 % bis 100 % und ganz bevorzugt 90 % bis 100 % und insbesondere 95 % bis 100 % der Verbindungen der Formeln I, IIIA, IIIB, IV bis IX und X, vorzugsweise der Formeln I, IIIA und/oder IIIB und X, vorzugsweise bestehen sie überwiegend daraus und ganz bevorzugt bestehen sie vollständig daraus.

In einer besonders bevorzugten Ausführungsform der vorliegenden Erfindung enthalten die flüssigkristallinen Medien eine oder mehrere Verbindungen der Formel V und eine oder mehrere Verbindungen der Formel VI.

In einer weiteren besonders bevorzugten Ausführungsform der vorliegenden Erfindung enthalten die flüssigkristallinen Medien eine oder mehrere Verbindungen der Formel V und eine oder mehrere Verbindungen der Formel VII.

Ebenfalls bevorzugt enthalten die flüssigkristallinen Medien gemäß der vorliegenden Erfindung eine oder mehrere Verbindungen der Formel V, eine oder mehrere Verbindungen der Formel VI und eine oder mehrere Verbindungen der Formel VIII.

Wenn die flüssigkristallinen Medien gemäß der vorliegenden Anmeldung eine oder mehrere Verbindungen der Formel V enthalten, beträgt die Konzentration dieser Verbindungen bevorzugt insgesamt 10 bis 30 %, bevorzugt 15 bis 25 % und besonders bevorzugt 18 bis 22 %.

Wenn die flüssigkristallinen Medien gemäß der vorliegenden Anmeldung eine oder mehrere Verbindungen der Formel VI enthalten, beträgt die Konzentration dieser Verbindungen bevorzugt insgesamt 15 bis 35 %, bevorzugt 18 bis 30 % und besonders bevorzugt 22 bis 26 %.

Wenn die flüssigkristallinen Medien gemäß der vorliegenden Anmeldung eine oder mehrere Verbindungen der

Formel VII enthalten, beträgt die Konzentration dieser Verbindungen bevorzugt insgesamt 4 bis 25 %, bevorzugt 8 bis 20 % und besonders bevorzugt 10 bis 14 %.

Wenn die flüssigkristallinen Medien gemäß der vorliegenden Anmeldung eine oder mehrere Verbindungen der Formel VIII enthalten, beträgt die Konzentration dieser Verbindungen bevorzugt insgesamt 15 bis 35 %, bevorzugt 18 bis 30 % und besonders bevorzugt 22 bis 26 %.

Wenn die flüssigkristallinen Medien gemäß der vorliegenden Anmeldung eine oder mehrere Verbindungen der Formel IX enthalten, beträgt die Konzentration dieser Verbindungen bevorzugt insgesamt 5 bis 25 %, bevorzugt 10 bis 20 % und besonders bevorzugt 13 bis 17 %.

In der vorliegenden Anmeldung beschreibt der Ausdruck dielektrisch positiv Verbindungen oder Komponenten mit $\Delta\varepsilon > 3{,}0$, dielektrisch neutral mit $-1{,}5 \leq \Delta\varepsilon \leq 3{,}0$ und dielektrisch negativ mit $\Delta\varepsilon < -1{,}5$. $\Delta\varepsilon$ wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homöotroper als auch mit homogener Orientierung bestimmt. Die Schichtdicke beträgt bei beiden Zelltypen ca. 20 μm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Hierbei gelten die folgenden Definitionen.

$$\Delta\varepsilon \equiv (\varepsilon_{||} - \varepsilon_{\perp})$$

und

$$\varepsilon_{Mittel} \equiv (\varepsilon_{||} + 2\ \varepsilon_{\perp}) / 3.$$

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20°C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast ($V_{10}$) angegeben, der Ausdruck Sättigungsspannung bezeichnet die optische Sättigung und ist für 90 % relativen Kontrast ($V_{90}$) angegeben, in beiden Fällen, soweit nicht ausdrücklich etwas anderes angegeben ist. Die kapazitive Schwellenspannung ($V_0$), auch Freedericks-Schwelle $V_{Fr}$ genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20°C aufgeführt, wenn nicht ausdrücklich anders angegeben. Die optische Anisotropie ($\Delta n$) wird bei einer Wellenlänge von 589,3 nm bestimmt. Die dielektrische Anisotropie ($\Delta\varepsilon$) wird bei einer Frequenz von 1 kHz bestimmt. Die Schwellenspannungen sowie alle anderen elektrooptischen Eigenschaften werden mit bei Merck KGaA, Deutschland, hergestellten Testzellen bestimmt. Die Testzellen für die Bestimmung von $\Delta\varepsilon$ besitzen eine Schichtdicke von circa 20 μm. Bei der Elektrode handelt es sich um eine kreisförmige ITO-Elektrode mit einer Fläche von 1,13 $cm^2$ und einem Schutzring. Die Ausrichtungsschichten sind SE-1211 von Nissan Chemicals, Japan, für homöotrope Ausrichtung ($\varepsilon_{||}$) und Polyimid AL-1054 von Japan Synthetic Rubber, Japan, für homogene Ausrichtung ($\varepsilon\perp$). Die Bestimmung der Kapazitäten erfolgt mit einem Frequenzgang-Analysegerät Solatron 1260 unter Verwendung einer Sinuswelle mit einer Spannung von 0,3 $V_{rms}$.

Als Licht wird bei den elektrooptischen Messungen weißes Licht verwendet. Dabei wird ein Aufbau mit einem

im Handel erhältlichen Gerät DMS der Fa. Autronic-Melchers, Germany verwendet. Die charakteristischen Spannungen wurden unter senkrechter Beobachtung bestimmt. Die Schwellenspannung ($V_{10}$), "Mittgrau-Spannung" ($V_{50}$) und Sättigungsspannung ($V_{90}$) wurden für 10 %, 50 % bzw. 90 % relativen Kontrast bestimmt.

Die flüssigkristallinen Medien werden bezüglich ihrer Eigenschaften im Frequenzbereich der Mikrowellen untersucht wie in A. Penirschke et al. "Cavity Perturbation Method for Characterization of Liquid Crystals up to 35GHz", 34th European Microwave Conference - Amsterdam, S. 545-548 beschrieben. Vergleiche hierzu auch A. Gaebler et al. "Direct Simulation of Material Permittivites ...", 12MTC 2009 - International Instrumentation and Measurement Technology Conference, Singapur, 2009 (IEEE), S. 463-467 und DE 10 2004 029 429 A, in der ebenfalls detailliert ein Messverfahren beschrieben wird.

Der Flüssigkristall wird in eine zylindrische Kapillare aus Polytetrafluorethylen (PTFE) oder Quarzglas gefüllt. Die Kapillare hat einen inneren Radius von 180 μm und einen äußeren Radius von 350 μm. Die effektive Länge beträgt 2,0 cm. Die gefüllte Kapillare wird in die Mitte der zylindrischen Kavität mit einer Resonanzfrequenz von 19 GHz eingebracht. Diese Kavität hat eine Länge von 11,5 mm und einen Radius von 6 mm. Daraufhin wird das Eingangssignal ("source") angelegt und das Ergebnis des Ausgangssignals mit einem kommerziellen Netzwerkanalysator ("vector network analyzer") aufgenommen. Für andere Frequenzen werden die Abmessungen der Kavität entsprechend angepasst.

Aus der Änderung der Resonanzfrequenz und des Q-Faktors, zwischen der Messung mit der mit dem Flüssigkristall gefüllten Kapillare und der Messung ohne der mit dem Flüssigkristall gefüllten Kapillare, wird die dielektrische Konstante und der Verlustwinkel bei der entsprechenden Zielfrequenz mittels der Gleichungen 10 und 11 der zuvor genannten Druckschrift A. Penirschke et al., 34th European Microwave Conference - Amsterdam, S. 545-548 bestimmt, wie dort beschrieben.

Die Werte für die Komponenten der Eigenschaften senkrecht bzw. and parallel zum Direktor des Flüssigkristalls werden durch Orientierung des Flüssigkristalls in einem Magnetfeld erhalten. Dazu wird das Magnetfeld eines Permanentmagneten verwendet. Die Stärke des Magnetfelds beträgt 0,35 Tesla. Die Orientierung des Magneten wird entsprechend eingestellt und dann entsprechend um 90° gedreht.

Die Werte für die Komponenten der Eigenschaften senkrecht bzw. parallel zum Direktor des Flüssigkristalls werden durch Orientierung des Flüssigkristalls in einem Magnetfeld erhalten. Dazu wird das Magnetfeld eines Permanentmagneten verwendet. Die Stärke des Magnetfelds beträgt 0.35 Tesla. Die Orientierung des Magneten wird entsprechend eingestellt und dann entsprechend um 90° gedreht.

Bevorzugte Bauelemente sind Phasenschieber, Varaktoren, Funk- und Radiowellenantennenarrays, "matching circuit adaptive filters" und andere.

In der vorliegenden Anmeldung, bedeutet, wenn nicht ausdrücklich anders angegeben, der Begriff Verbindungen sowohl eine Verbindung, als auch mehrere Verbindungen.

Die erfindungsgemäßen Flüssigkristallmedien weisen bevorzugt nematische Phasen von jeweils mindestens von -20°C bis 80°C, bevorzugt von -30°C bis 85°C und ganz besonders bevorzugt von -40°C bis 100°C auf. Insbesondere bevorzugt reicht die Phase bis 120°C oder mehr, bevorzugt bis140°C oder mehr und ganz besonders bevorzugt bis 160°C oder mehr. Hierbei bedeutet der Begriff eine nematische Phase aufweisen einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen, mit einer Schichtdicke von 5 μm, für mindestens 100 Stunden überprüft. Bei hohen Temperaturen wird der Klärpunkt nach üblichen Methoden in Kapillaren gemessen.

Ferner sind die erfindungsgemäßen Flüssigkristallmedien durch hohe optische Anisotropien im sichtbaren Bereich gekennzeichnet. Die Doppelbrechung bei 589 nm beträgt bevorzugt 0,20 oder mehr, besonders bevorzugt 0,25 oder mehr, besonders bevorzugt 0,30 oder mehr, besonders bevorzugt 0,40 oder mehr und ganz besonders bevorzugt 0,45 oder mehr. Außerdem beträgt die Doppelbrechung bevorzugt 0,80 oder weniger.

In einer bevorzugten Ausführungsform der vorliegenden Erfindung weisen die eingesetzten Flüssigkristallmedien eine positive dielektrische Anisotropie ($\Delta\varepsilon$) auf. Diese ist bevorzugt 1,8 oder größer und 15,0 oder kleiner, mehr bevorzugt 2,0 oder größer und 10,0 oder kleiner, besonders bevorzugt 3,0 oder größer und 8,0 oder kleiner und ganz besonders bevorzugt 3,5 oder größer und 6,0 oder kleiner.

Wenn die eingesetzten Flüssigkristallmedien eine negative dielektrische Anisotropie ($\Delta\varepsilon$) aufweisen, ist diese bevorzugt kleiner oder gleich -2,5, besonders bevorzugt kleiner oder gleich -4,0 und ganz besonders bevorzugt kleiner oder gleich -5,0.

In dieser bevorzugten Ausführungsform der vorliegenden Erfindung, in der die eingesetzten Flüssigkristallmedien eine negative dielektrische Anisotropie ($\Delta\varepsilon$) aufweisen, ist deren Betrag bevorzugt 1,5 oder größer und 15,0 oder kleiner, besonders bevorzugt 1,8 oder größer und 12,0 oder kleiner und ganz besonders bevorzugt 2,0 oder größer und 10,0 oder kleiner.

Ferner sind die erfindungsgemäßen Flüssigkristallmedien durch hohe Anisotropien im Mikrowellenbereich und/oder Millimeterwellenbereich gekennzeichnet. Die Doppelbrechung beträgt z.B. bei ca. 8,3 GHz bevorzugt 0,14

oder mehr, besonders bevorzugt 0,15 oder mehr, besonders bevorzugt 0,20 oder mehr, besonders bevorzugt 0,25 oder mehr und ganz besonders bevorzugt 0,30 oder mehr. Außerdem beträgt die Doppelbrechung bevorzugt 0,80 oder weniger.

Die dielektrische Anisotropie im $\mu$-Wellenbereich ist definiert als

$$\Delta\varepsilon_r \equiv (\varepsilon_{r,||} - \varepsilon_{r,\perp}).$$

Die Modulierbarkeit bzw. Steuerbarkeit ("tunability", $\tau$) ist definiert als

$$\tau \equiv (\Delta\varepsilon_r / \varepsilon_{r,||}).$$

Die Materialgüte ($\eta$) ist definiert als

$$\eta \equiv (\tau / \tan \delta_{\varepsilon\, r,Max.}), \text{ mit}$$

dem maximalen dielektrischen Verlust

$$\tan \delta_{\varepsilon\, r,Max.} \equiv \text{Max. } \{ \tan \delta_{\varepsilon\, r,\perp,}; \tan \delta_{\varepsilon\, r,||} \}.$$

Die Materialgüte ($\eta$) der bevorzugten Flüssigkristallmaterialien beträgt 6 oder mehr, bevorzugt 8 oder mehr, bevorzugt 10 oder mehr, bevorzugt 15 oder mehr, bevorzugt 17 oder mehr, bevorzugt 20 oder mehr, besonders bevorzugt 25 oder mehr und ganz besonders bevorzugt 30 oder mehr und insbesondere 40 oder mehr oder sogar 50 oder mehr.

Die bevorzugten Flüssigkristallmaterialien haben in den entsprechenden Bauteilen Phasenschiebergüten von 15°/dB oder mehr, bevorzugt von 20°/dB oder mehr, bevorzugt von 30°/dB oder mehr, bevorzugt von 40°/dB oder mehr, bevorzugt von 50°/dB oder mehr, besonders bevorzugt von 80°/dB oder mehr und ganz besonders bevorzugt von 100°/dB oder mehr.

In einigen Ausführungsformen können jedoch auch Flüssigkristalle mit eine negativen Wert der dielektrischen Anisotropie vorteilhaft verwendet werden.

Die eingesetzten Flüssigkristalle sind entweder Einzelsubstanzen oder Mischungen. Bevorzugt weisen sie eine nematische Phase auf.

.Der Ausdruck "Alkyl" umfasst vorzugsweise geradkettige und verzweigte Alkylgruppen, sowie Cycloalkylgruppen, jeweils mit 1 bis 15 Kohlenstoffatomen, insbesondere die geradkettigen Gruppen Methyl, Ethyl, Propyl, Butyl, Pentyl, Hexyl und Heptyl, sowie Cyclopropyl und Cyclohexyl. Gruppen mit 2 bis 10 Kohlenstoffatomen sind im Allgemeinen bevorzugt.

Der Ausdruck "Alkenyl" umfasst vorzugsweise geradkettige und verzweigte Alkenylgruppen mit 2 bis 15 Kohlenstoffatomen, insbesondere die geradkettigen Gruppen. Besonders bevorzugte Alkenylgruppen sind $C_2$ bis $C_7$-1E-Alkenyl, $C_4$ bis $C_7$-3E-Alkenyl, $C_5$ bis $C_7$-4-Alkenyl, $C_6$ bis $C_7$-5-Alkenyl und $C_7$-6-Alkenyl, insbesondere $C_2$ bis $C_7$-1E-Alkenyl, $C_4$ bis $C_7$-3E-Alkenyl und $C_5$ bis $C_7$-4-Alkenyl. Beispiele weiterer bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im Allgemeinen bevorzugt.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl", bzw. Alkoxyalkyl umfasst vorzugsweise geradkettige Reste der Formel $C_nH_{2n+1}$-O-$(CH_2)_m$, worin n und m jeweils unabhängig voneinander eine ganze Zahl von 1 bis 10 bedeuten. Vorzugsweise ist hier n 1 und m 1 bis 6.

Verbindungen mir einer Vinyl-Endgruppe und Verbindungen mit einer Methyl-Endgruppe haben eine geringe Rotationsviskosität.

In der vorliegenden Anmeldung bedeuten sowohl Hochfrequenztechnik als auch Höchstfrequenztechnik Anwendungen mit Frequenzen im Bereich von 1 MHz bis 100 THz, bevorzugt von 1 GHz bis 30 THz, stärker bevorzugt 2 GHz bis 10 THz, insbesondere bevorzugt von ca. 5 bis 5 THz.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und Flüssigkristallverbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 15 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen $C_nH_{2n+1}$, $C_mH_{2m+1}$ und $C_lH_{2l+1}$ bzw. $C_nH_{2n-1}$, $C_mH_{2m-1}$ und $C_lH_{2l-1}$ bedeuten geradkettiges Alkyl bzw. Alkenyl, vorzugsweise 1-*E*-Alkenyl, jeweils mit n, m bzw. l C-Atomen, wobei n, m und l unabhängig voneinander eine ganze Zahl von 1 bis 9, bevorzugt bis 7 bzw. von 2 bis 9, bevorzugt bis 7 bedeuten. $C_oH_{2o+1}$ bedeutet geradkettiges Alkyl mit 1 bis 7, bevorzugt bis 4 C-Atomen, oder verzweigtes Alkyl mit 1 bis 7, bevorzugt bis 4 C-Atomen.

In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 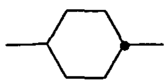 | **P** | 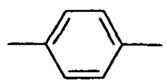 |
| **D** | 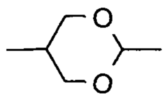 | **DI** | 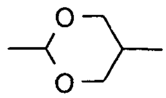 |
| **A** | 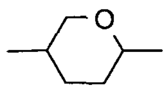 | **AI** | 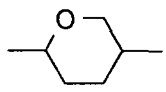 |
| **G** | 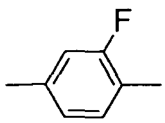 | **GI** | 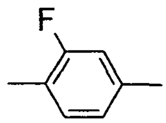 |
| **U** | 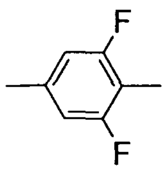 | **UI** | 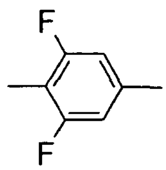 |
| Y | 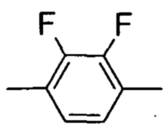 | | |

(fortgesetzt)

| | | | |
|---|---|---|---|
| **fX** | 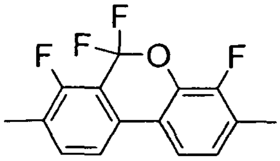 | **fXI** | 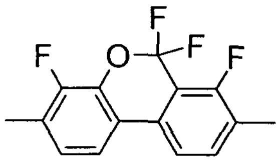 |
| M | 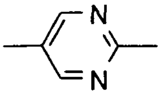 | **MI** | 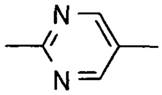 |
| N | 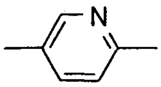 | **NI** | 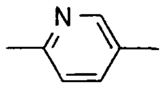 |
| fN | 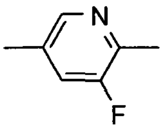 | **fNI** | 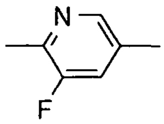 |
| **dH** | 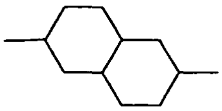 | **N(2,6)** | 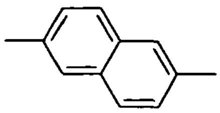 |
| **N(1,4)** | 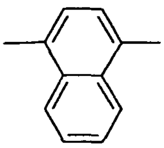 | | |
| **N3f** | 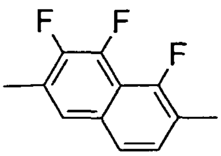 | **N3fI** | 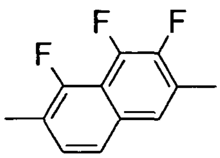 |
| **tH** | 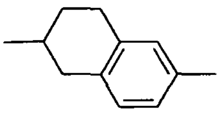 | **tHI** | 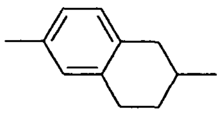 |
| **tH2f** | 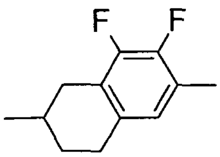 | **tH2fI** | 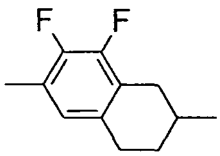 |
| **K** | 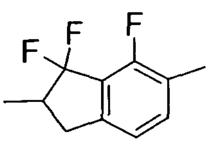 | **KI** | 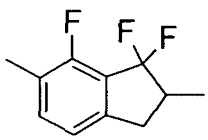 |
| **L** | 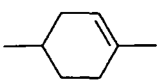 | **LI** | 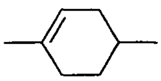 |
| **F** | 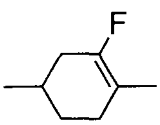 | **FI** | 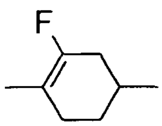 |

(fortgesetzt)

| | | | |
|---|---|---|---|
| **P(o)** | 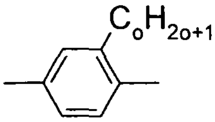 | **PI(o)** | 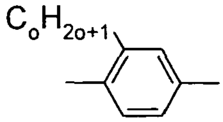 |
| **P(i3)** | 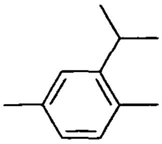 | **PI(c3)** | 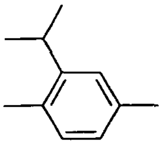 |
| **P(t4)** | 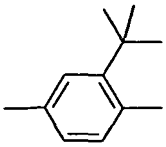 | **PI(t4)** | 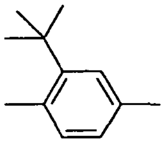 |
| **P(c3)** | 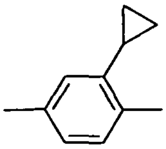 | **PI(c3)** | 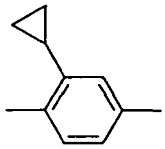 |
| **P(c4)** | 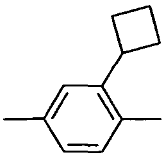 | **PI(c4)** | 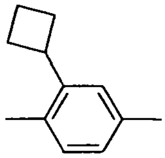 |
| **P(c5)** | 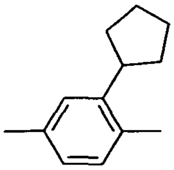 | **PI(c5)** | 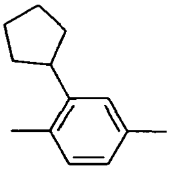 |
| **P(e5)** | 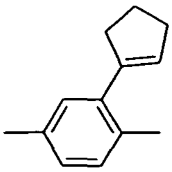 | **PI(e5)** | 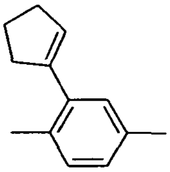 |
| P(c6) | 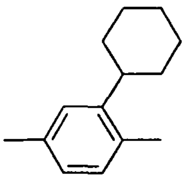 | **PI(c6)** | 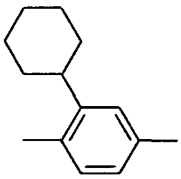 |
| P(e6) | 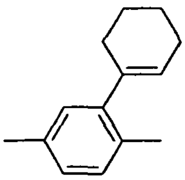 | **PI(e6)** | 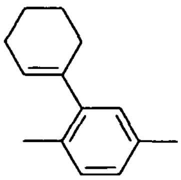 |
| **P(o,5F)** | 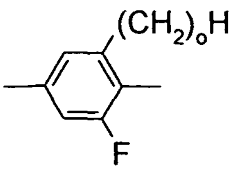 | **PI(o,5F)** | 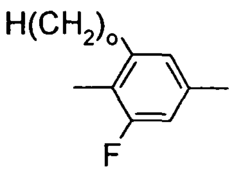 |
| $o \in \{1;2;3;4;5;6\}$ | | $o \in \{1;2;3;4;5;6\}$ | |

(fortgesetzt)

| | | | |
|---|---|---|---|
| **P(o,6F)** | 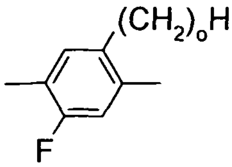 | **PI(o,6F)** | 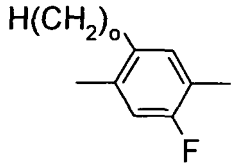 |
| o ∈ {1;2;3;4;5;6} | | o ∈ {1;2;3;4;5;6} | |
| **GI(o)** | 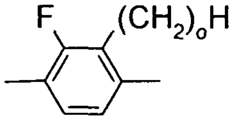 | **G(o)** | 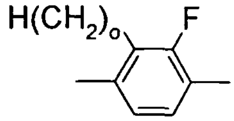 |
| o ∈ {1;2;3;4;5;6} | | o ∈ {1;2;3;4;5;6} | |
| **GI(i3)** | 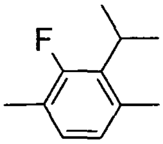 | **G(i3)** | 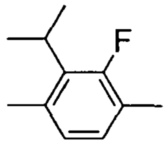 |
| **GI(t4)** | 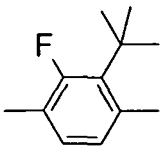 | **G(t4)** | 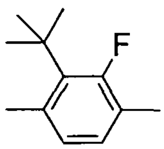 |
| **GI(c3)** | 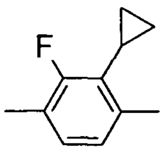 | **G(c3)** | 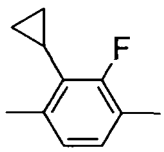 |
| **GI(c4)** | 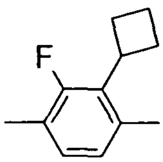 | **G(c4)** | 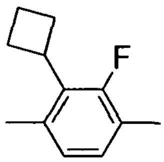 |
| **GI(c5)** | 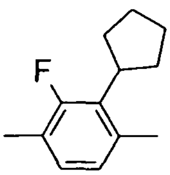 | **G(c5)** | 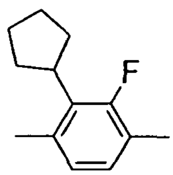 |
| **GI(e5)** | 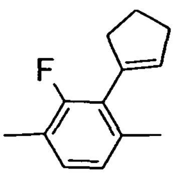 | **G(e5)** | 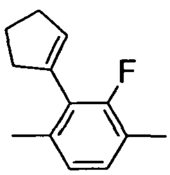 |
| **GI(c6)** | 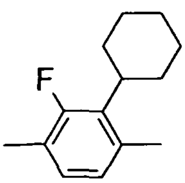 | **G(c6)** | 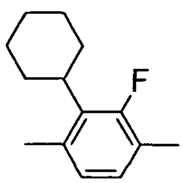 |

(fortgesetzt)

| | | | |
|---|---|---|---|
| **GI(e6)** | 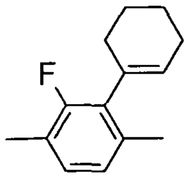 | **G(e6)** | 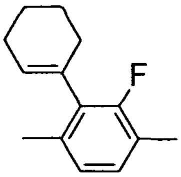 |

**Tabelle B: Verknüpfungsgruppen**

| | | | |
|---|---|---|---|
| **E** | $-CH_2CH_2-$ | **Z** | -CO-O- |
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-CF_2-$ |
| **W** | $-CF_2CF_2-$ | | |

**Tabelle C: Endgruppen**

| **Linke Seite** | | **Rechte Seite,** | |
|---|---|---|---|
| | | **Verwendung allein** | |
| **-n-** | $C_nH_{2n+1}-$ | **-n** | $-C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH- C_nH_{2n+1}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O$ - | **-OM** | $-OCFH_2$ |
| **-DO-** | $CF_2HO$ - | **-OD** | $-OCF_2H$ |
| **-TO-** | $CF_3O-$ | **-OT** | $-OCF_3$ |
| **-OXF-** | $CF_2=CH-O-$ | **-OXF** | $-O-CH=CF_2$ |
| **-A-** | H-C=C- | **-A** | -C≡C-H |
| **-nA-** | $C_nH_{2n+1}-C≡C-$ | **-An** | $-C≡C-C_nH_{2n+1}$ |
| -NA- | N≡C-C≡C- | **-AN** | -C≡C-C≡N |
| | | **Verwendung zusammen mit anderen** | |
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

worin n und m jeweils ganze Zahlen bedeuten und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Weiterhin stellen sie Verbindungen dar, die vorzugsweise verwendet werden.

**Tabelle D: Beispielstrukturen**

Die Beispielstrukturen zeigen besonders bevorzugt eingesetzte Verbindungen.

Beispiele für Verbindungen der Komponente A

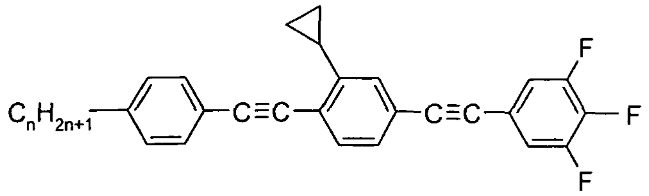

**PTPI(c3)TU-n-F**

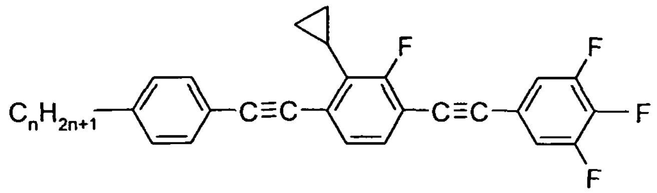

**PTG(c3)TU-n-F**

Beispiele für Verbindungen der Komponente F

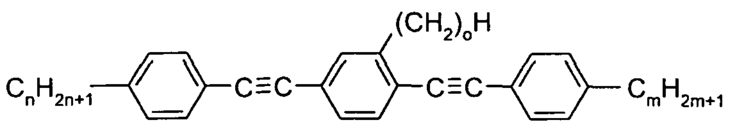

**PTP(o)TP-n-m,** o э {1;2;3;4;5;6}

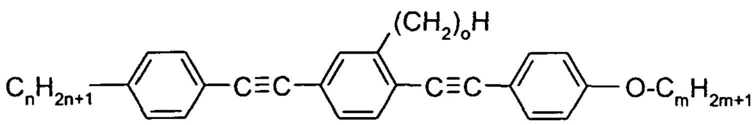

**PTP(o)TP-n-Om,** o э {1;2;3;4;5;6}

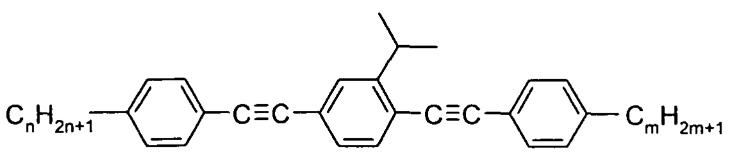

**PTP(i3)TP-n-m**

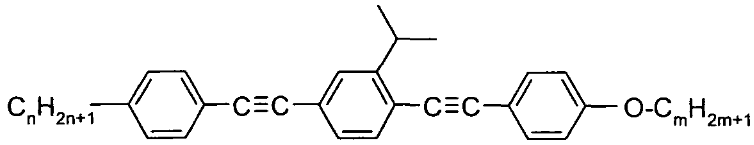

PTP(i3)TP-n-Om

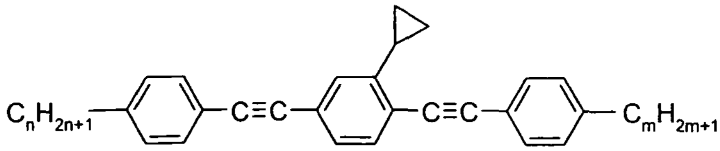

PTP(c3)TP-n-m

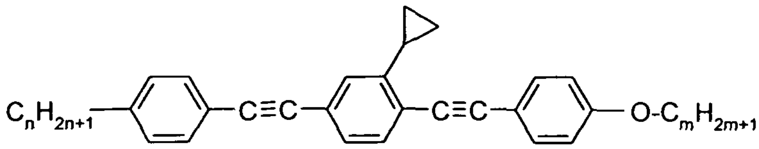

PTP(c3)TP-n-Om

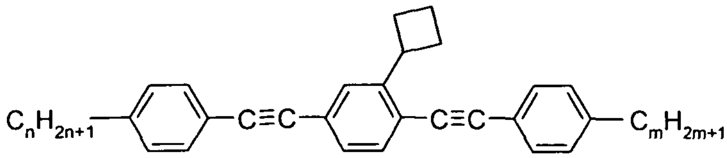

PTP(c4)TP-n-m

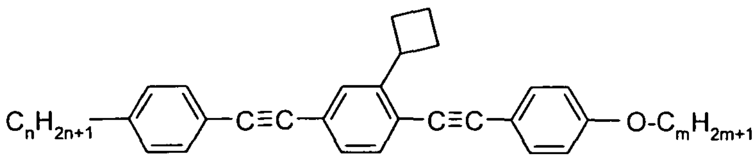

PTP(c4)TP-n-Om

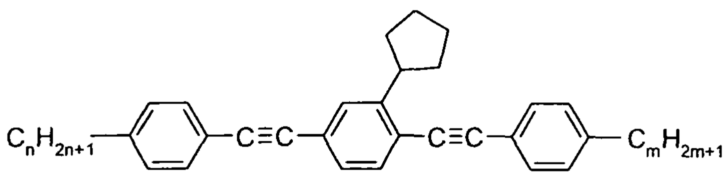

PTP(c5)TP-n-m

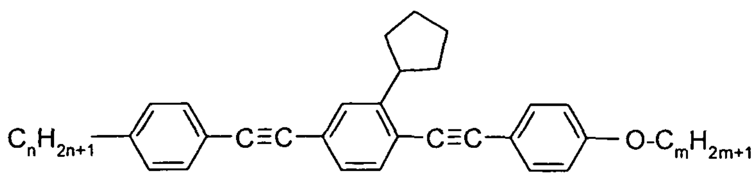

PTP(c5)TP-n-Om

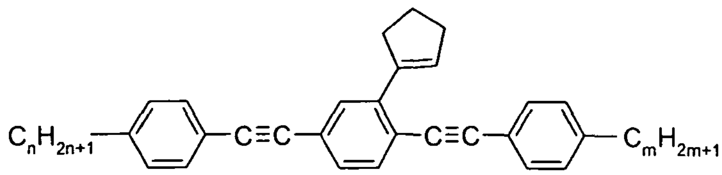

**PTP(e5)TP-n-m**

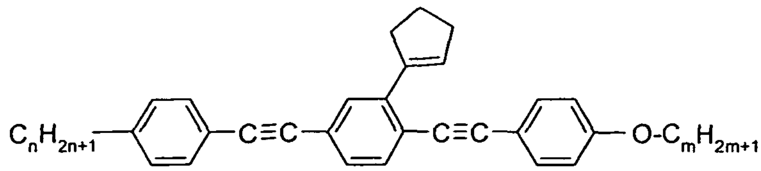

**PTP(e5)TP-n-Om**

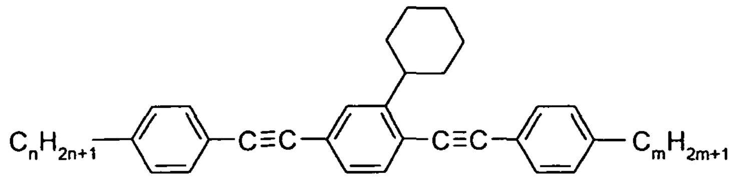

**PTP(c6)TP-n-m**

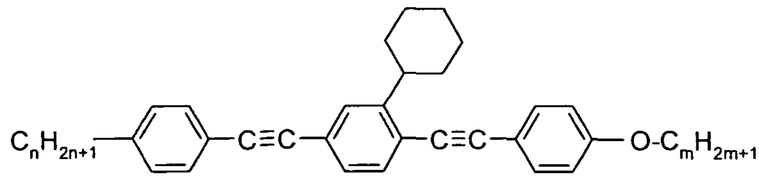

**PTP(c6)TP-n-Om**

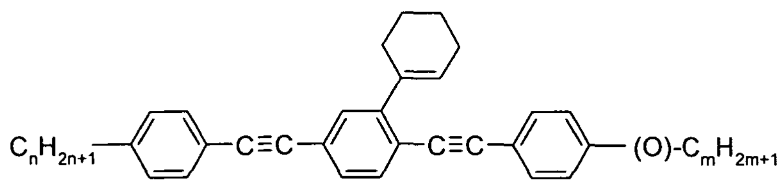

**PTP(e6)TP-n-(O)m**

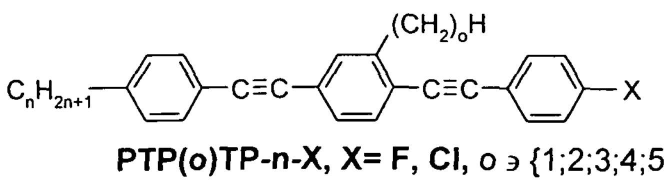

**PTP(*o*)TP-*n*-X, X= F, Cl,** *o* ∋ {1;2;3;4;5;6}

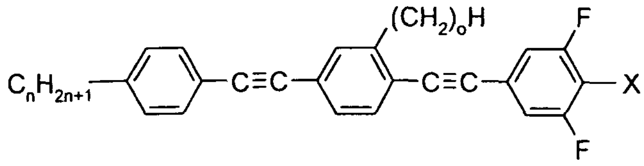

**PTP(o)TU-n-X, X= F, Cl,** o ∈ {1;2;3;4;5;6}

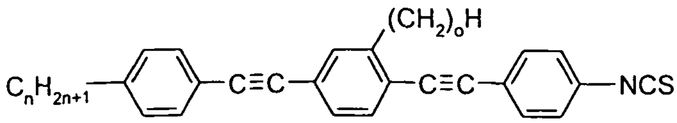

**PTP(o)TP-n-S** o ∋ {1;2;3;4;5;6}

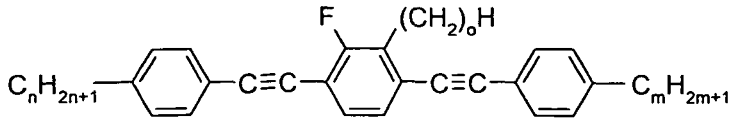

**PTGI(o)TP-n-m,** o ∋ {1;2;3;4;5;6}

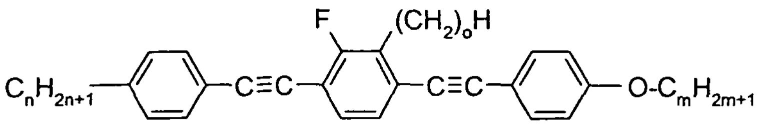

**PTGI(o)TP-n-Om,** o ∋ {1;2;3;4;5;6}

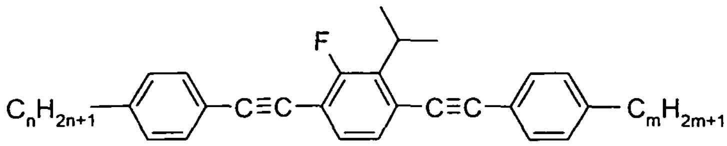

**PTGI(i3)TP-n-m**

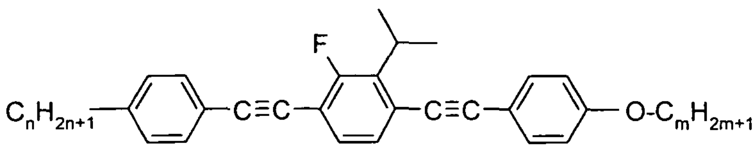

**PTGI(i3)TP-n-Om**

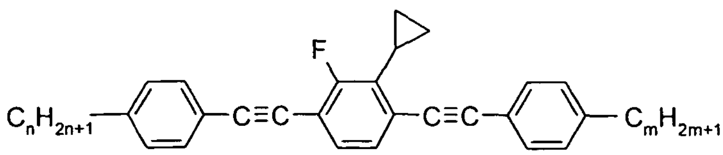

**PTGI(c3)TP-n-m**

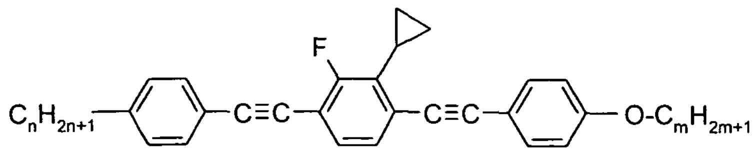

PTGI(c3)TP-n-Om

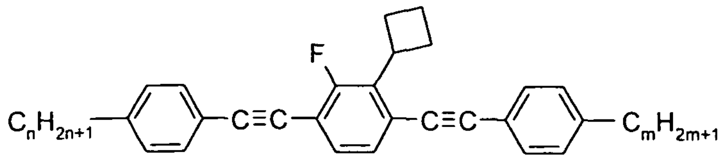

PTGI(c4)TP-n-m

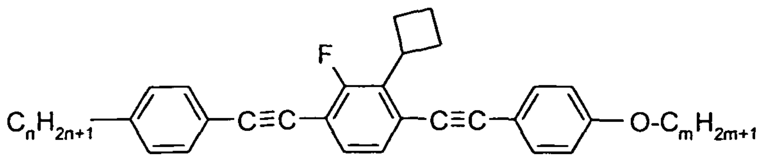

PTGI(c4)TP-n-Om

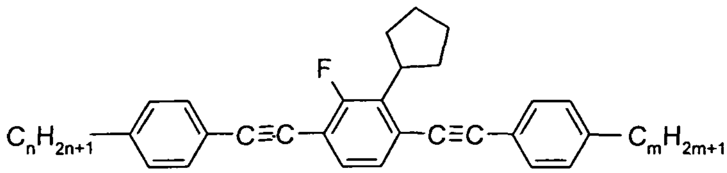

PTGI(c5)TP-n-m

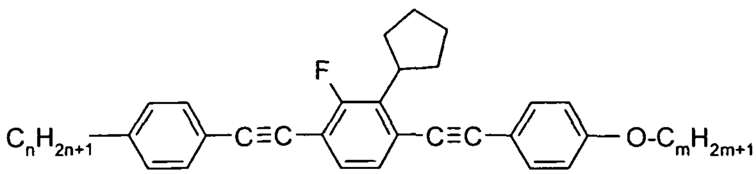

PTGI(c5)TP-n-Om

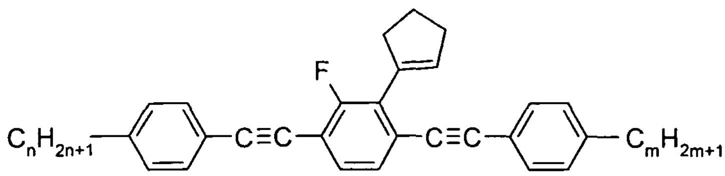

PTGI(e5)TP-n-m

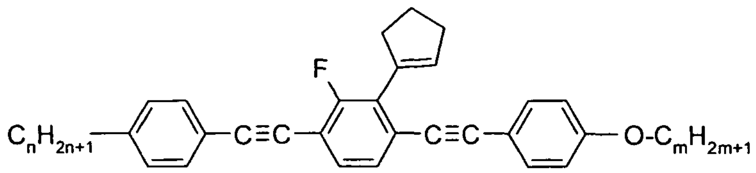

**PTGI(e5)TP-n-Om**

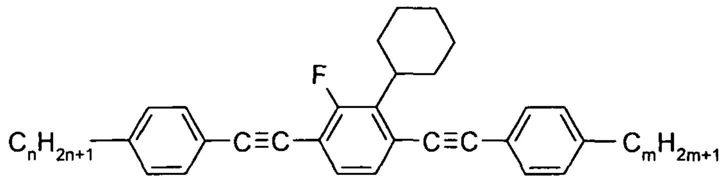

**PTGI(c6)TP-n-m**

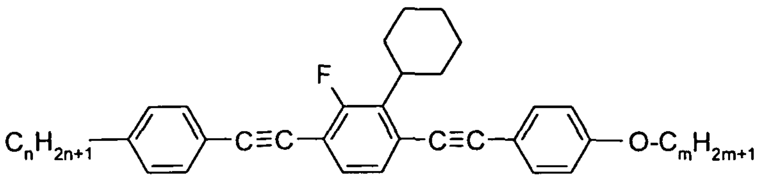

**PTGI(c6)TP-n-Om**

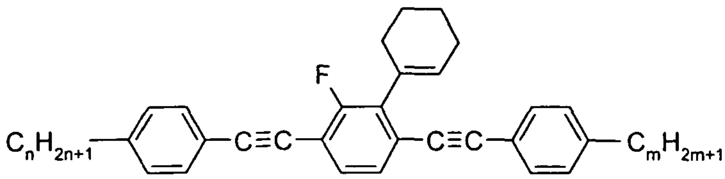

**PTGI(e6)TP-n-m**

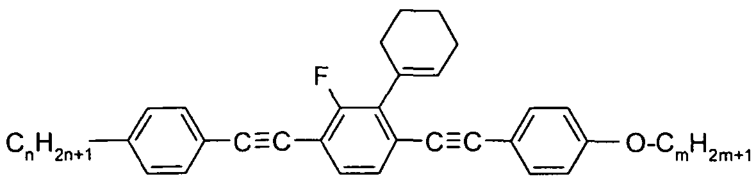

**PTGI(e6)TP-n-Om**

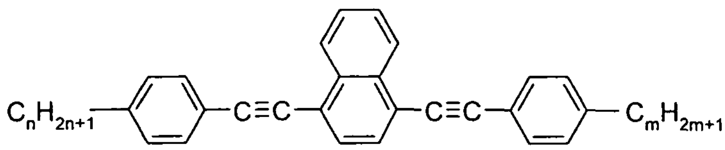

**PTN(1,4)TP-n-m**

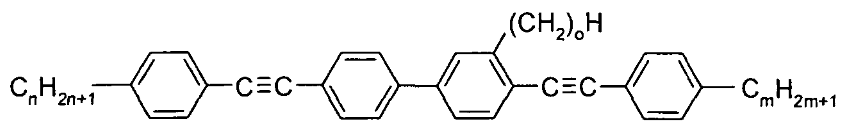

**PTPP(o)TP-n-m,** o ∋ {1;2;3;4;5;6}

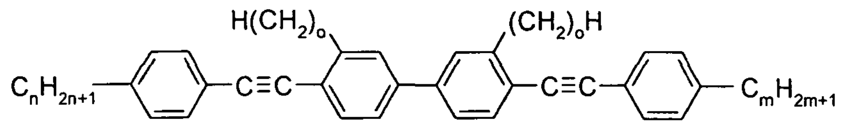

**PTPI(o)P(o)TP-n-m,** o ∋ {1;2;3;4;5;6}

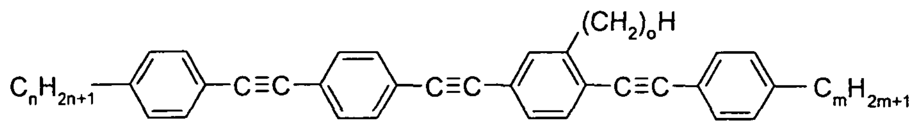

**PTPTP(o)P-n-m,** o ∋ {1;2;3;4;5;6}

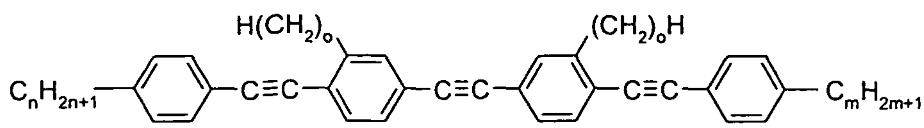

**PTPI(o)TP(o)P-n-m,** o ∋ {1;2;3;4;5;6}

(n ∋ {1;2;3;4;5;6;7} und m ∋ {1;2;3;4;5;6;7}.)

Beispiele für Verbindungen der Komponente B

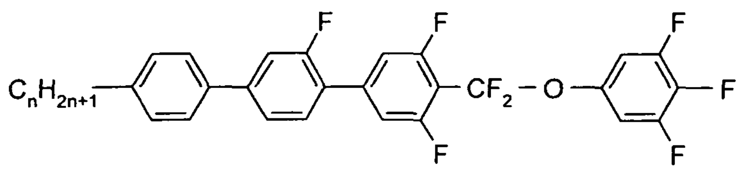

**PGUQU-n-F**

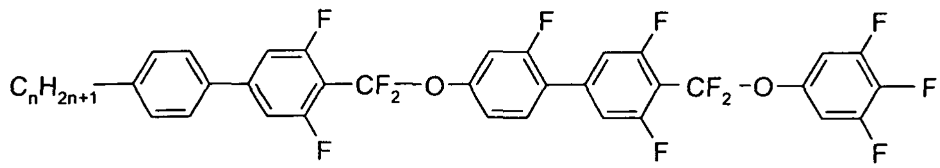

**PUQGUQU-n-F**

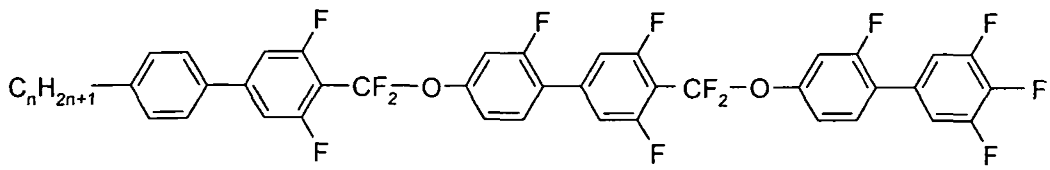

**PUQGUQGU-n-F = PU[QGU]₂-n-F**

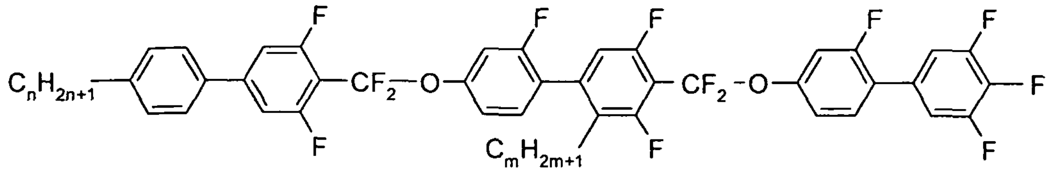

**PUQGU(m)QGU-n-F = PU[QGU]$_2^{(m)}$-n-F**

(n ∋ {1;2;3;4;5;6;7} und m ∋ {1;2;3;4}.)

Beispiele für Verbindungen der Komponente C

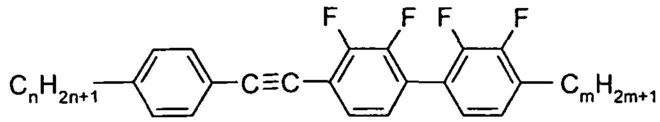

**PTYY-n-m**

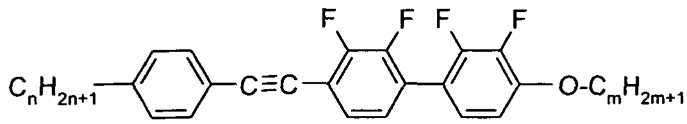

**PTYY-n-Om**

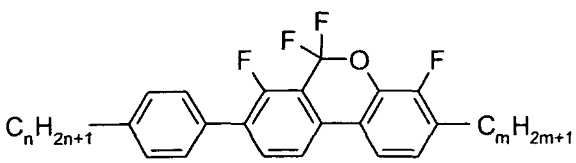

**PfX-n-m**

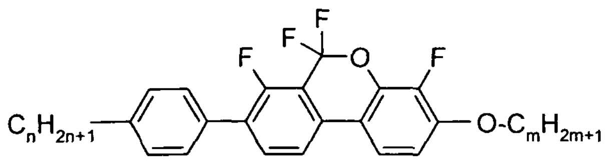

**PfX-n-Om**

(n ∋ {1;2;3;4;5;6;7} und m ∋ {1;2;3;4;5;6;7})

Beispiele für Verbindungen der Komponente E

Verbindungen mit drei 6-gliedrigen Ringen

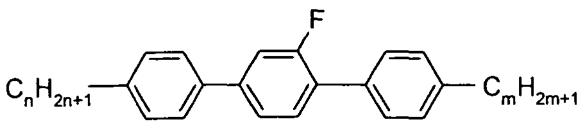

**PGP-n-m**

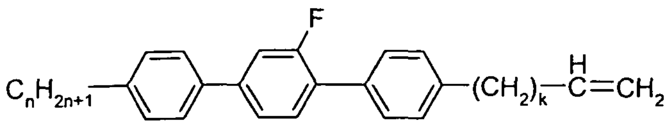

**PGP-n-kV**

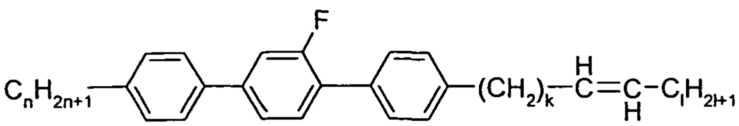

**PGP-n-kVI**

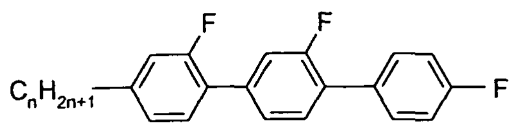

**GGP-n-F**

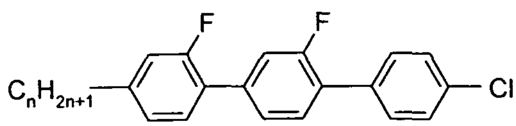

**GGP-n-CL**

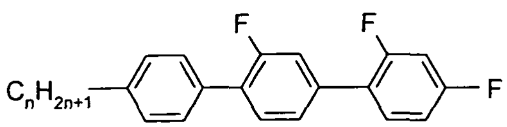

**PGIGI-n-F**

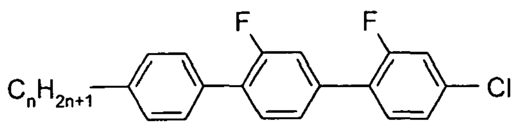

**PGIGI-n-CL**

(n ∋ {1;2;3;4;5;6;7}, m ∋ {1;2;3;4;5;6;7}, und k ∋ {0;1;2;3;4}, bevorzugt 0 oder 2, und l ∋ {0;1;2;3}.)

Verbindungen mit vier 6-gliedrigen Ringen

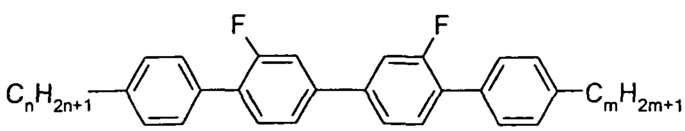

**PGIGP-n-m**

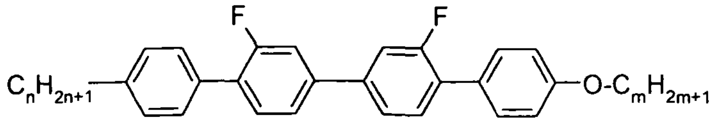

**PGIGP-n-Om**

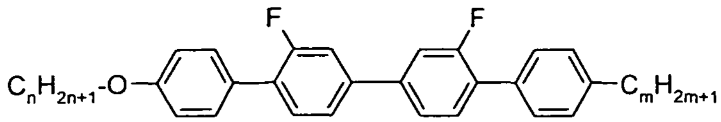

**PGIGP-nO-m**

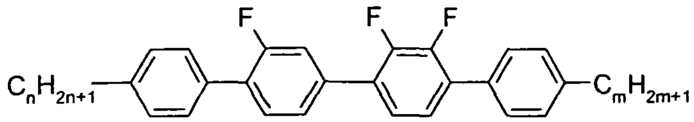

**PGIYP-n-m**

(n ∋ {1;2;3;4;5;6;7} und m ∋ {1;2;3;4;5;6;7})

Beispielstrukturen eingesetzter polarer Verbindungen:

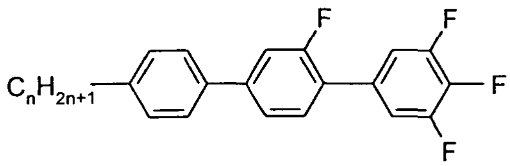

**PGU-n-F**

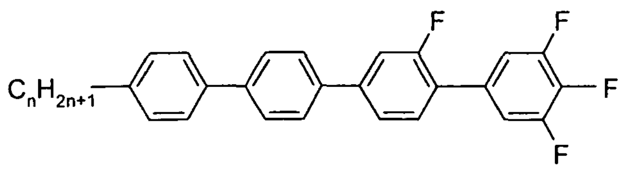

**PPGU-n-F**

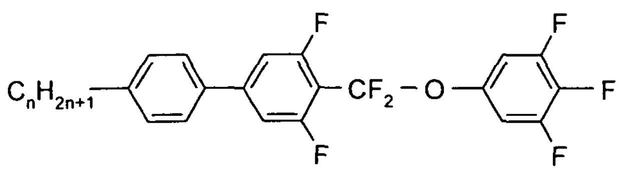

**PUQU-n-F**

(n ∋ {1;2;3;4;5;6;7}.)

Beispielstrukturen weiterer bevorzugt eingesetzter neutraler Verbindungen:

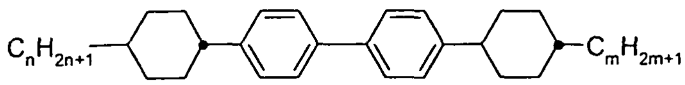

**CPPC-n-m**

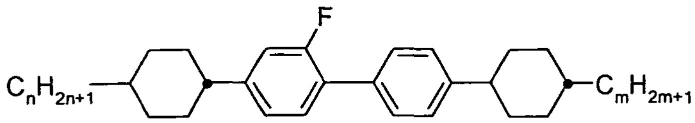

**CGPC-n-m**

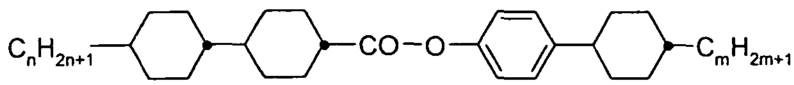

**CCZPC-n-m**

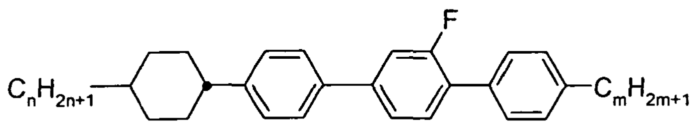

**CPGP-n-m**

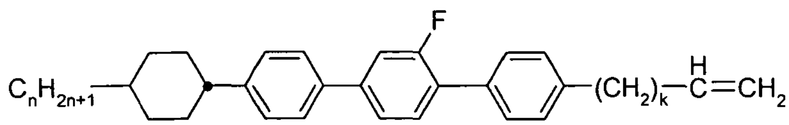

**CPGP-n-kV**

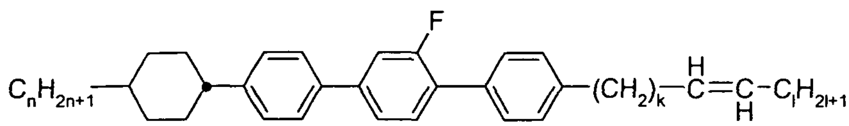

**CPGP-n-kVI**

(n ∋ {1;2;3;4;5;6;7}, m ∋ {1;2;3;4;5;6;7}, und k ∋ {0;1;2;3;4}, bevorzugt 0 oder 2, und l ∋ {0;1;2;3}.)

Beispielstrukturen weiterer eingesetzter polarer Verbindungen:

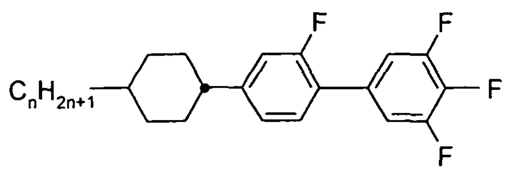

**CGU-n-F**

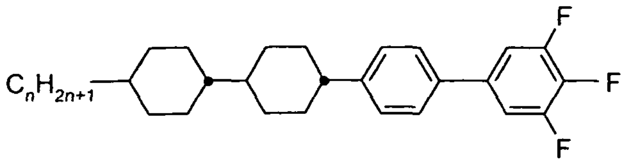

**CCPU-n-F**

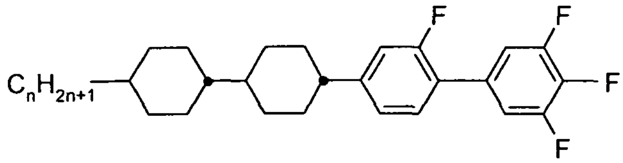

**CCGU-n-F**

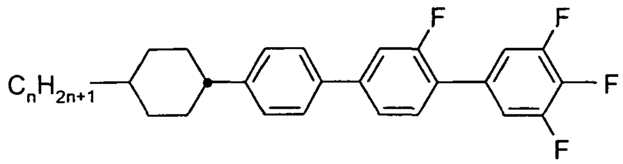

**CPGU-n-F**

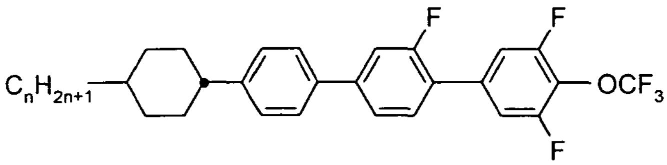

**CPGU-n-OT**

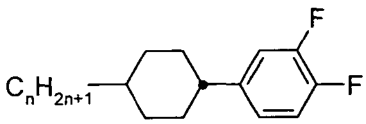

**CP-n-F**

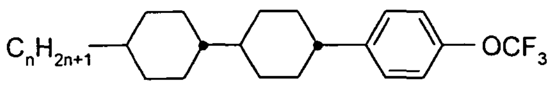

**CCP-n-OT**

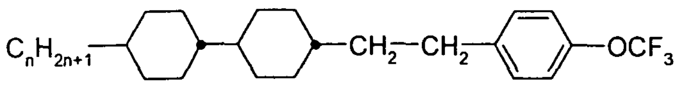

**CCEP-n-OT**

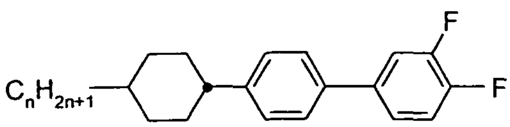

**CPG-n-F**

(n ∋ {1;2;3;4;5;6;7}.)

In der folgenden Tabelle, Tabelle E, sind Beispielverbindungen zusammengestellt, die in den mesogenen Medien gemäß der vorliegenden Erfindung als Stabilisator verwendet werden können. Die Gesamtkonzentration dieser bzw. ähnlicher Verbindungen in den Medien beträgt bevorzugt 5 % oder weniger.

## Tabelle E

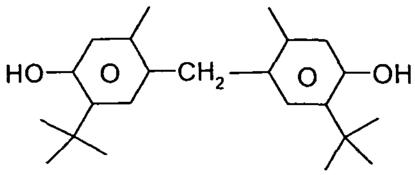

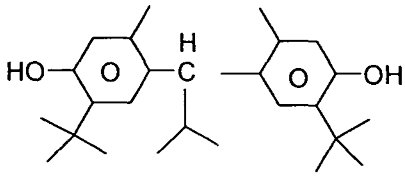

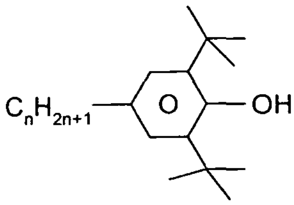

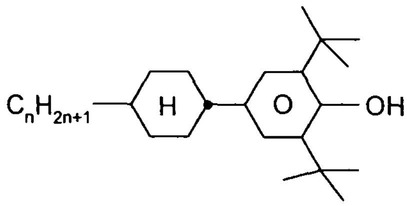

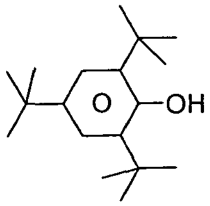

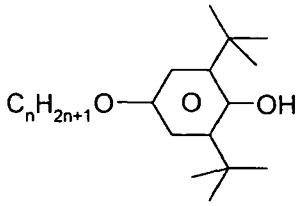

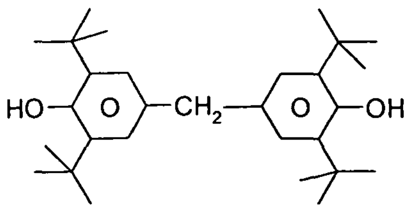

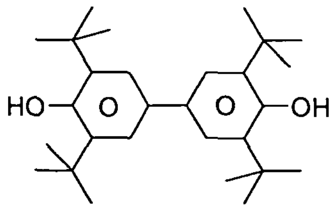

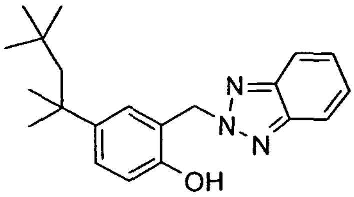

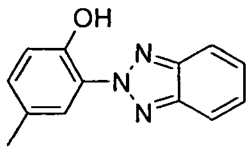

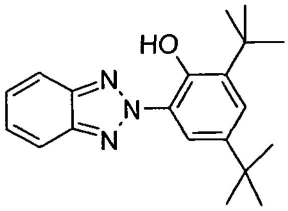

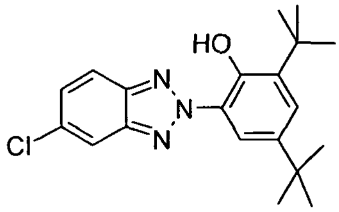

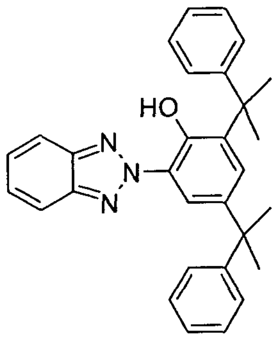

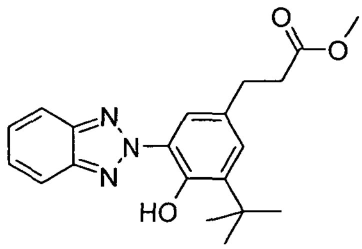

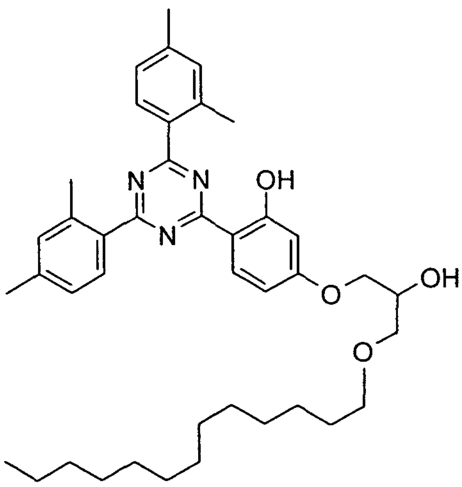

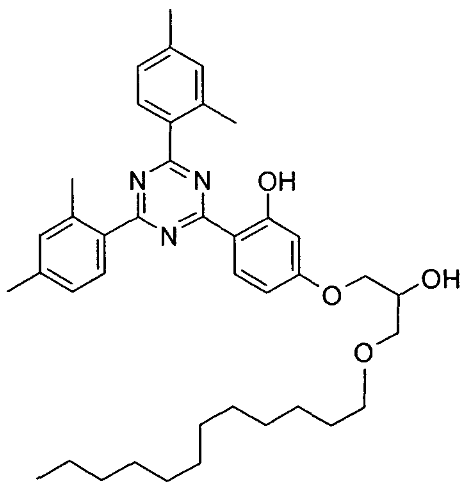

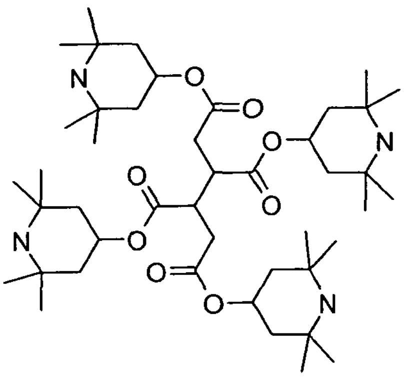

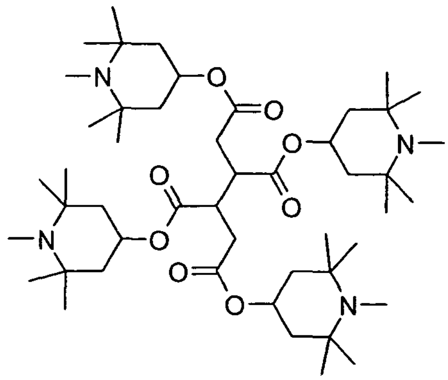

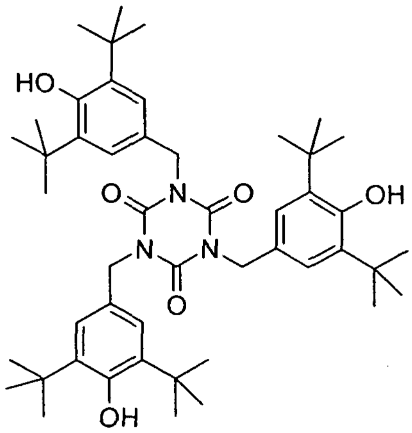

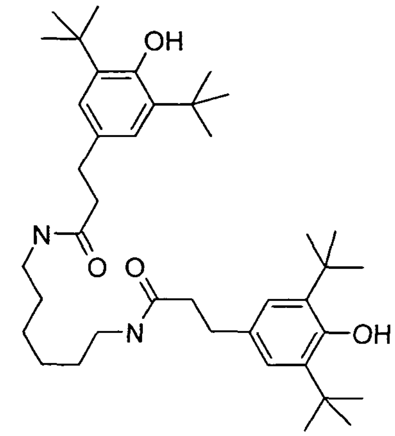

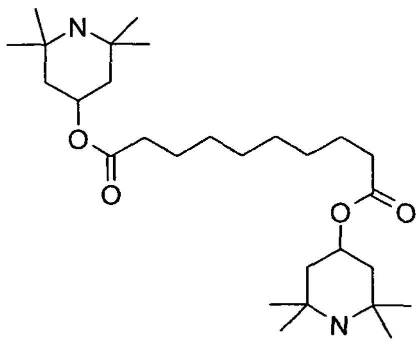

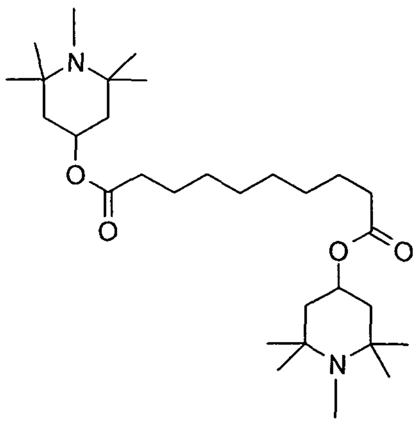

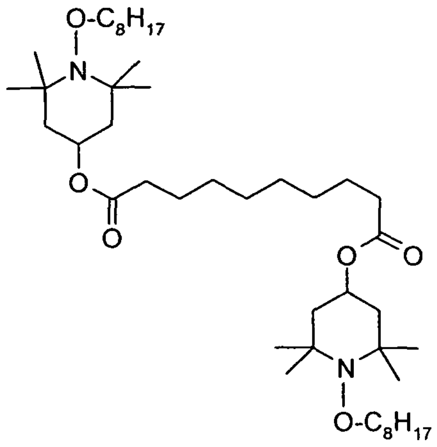

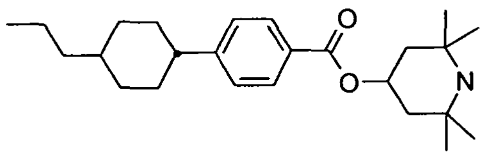

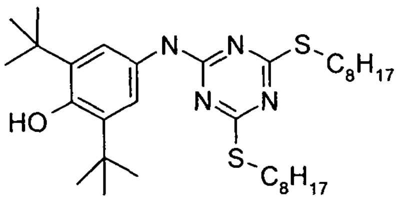

In einer bevorzugten Ausführungsform der vorliegenden Erfindung enthalten die mesogenen Medien eine oder mehrere Verbindungen ausgewählt aus der Gruppe der Verbindungen der Tabelle E.

In der folgenden Tabelle, Tabelle F, sind Beispielverbindungen zusammengestellt, die in den mesogenen Medien gemäß der vorliegenden Erfindung vorzugsweise als chirale Dotierstoffe verwendet werden können.

## Tabelle F

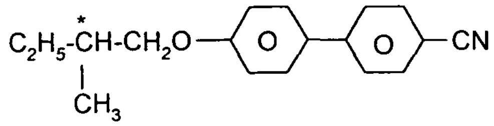

**C 15**

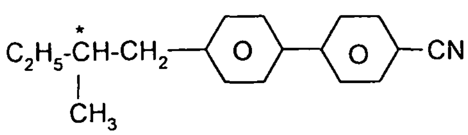

**CB 15**

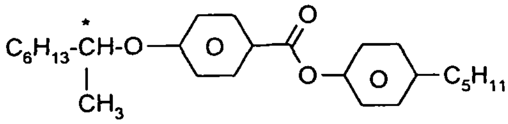

**CM 21**

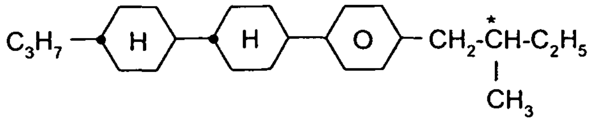

**CM 44**

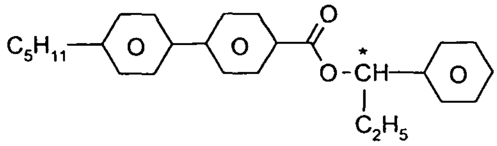

**CM 45**

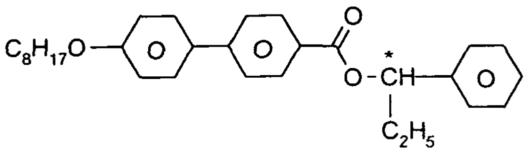

**CM 47**

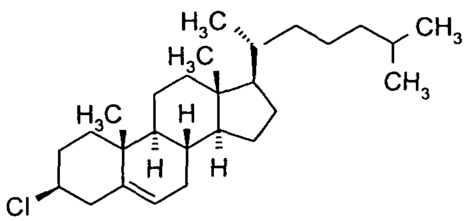

**CC**

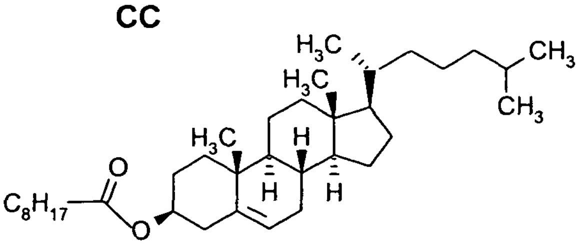

**CN**

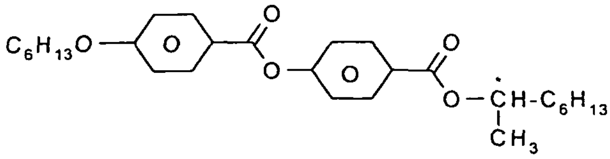

**R/S-811**

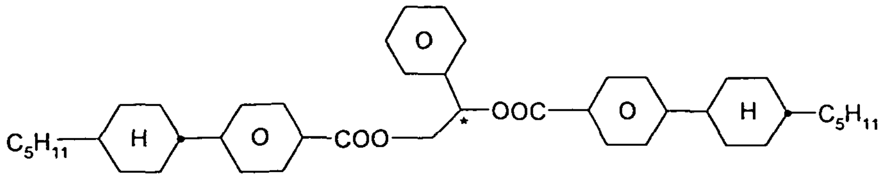

**R/S-1011**

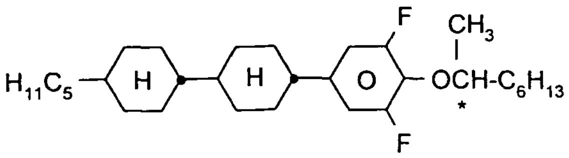

**R/S-2011**

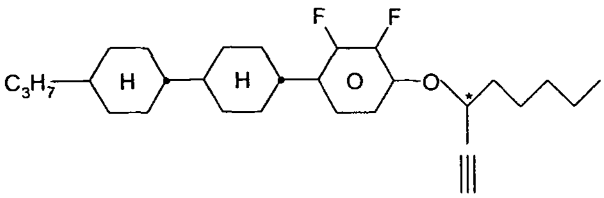

**R/S-3011**

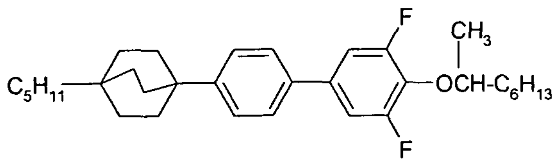

**R/S-4011**

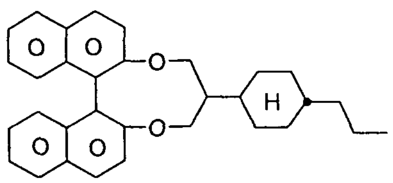

**R/S-5011**

In einer bevorzugten Ausführungsform der vorliegenden Erfindung enthalten die mesogenen Medien eine oder mehrere Verbindungen ausgewählt aus der Gruppe der Verbindungen der Tabelle F.

Vorzugsweise enthalten die mesogenen Medien gemäß der vorliegenden Anmeldung zwei oder mehr, vorzugsweise vier oder mehr, Verbindungen ausgewählt aus der Gruppe bestehend aus den Verbindungen der obigen Tabellen.

Die Flüssigkristallmedien gemäß der vorliegenden Erfindung enthalten vorzugsweise

- sieben oder mehr, vorzugsweise acht oder mehr Verbindungen, vorzugsweise Verbindungen mit drei oder mehr, vorzugsweise vier oder mehr unterschiedlichen Formeln, ausgewählt aus der Gruppe der Verbindungen der Tabelle D.

<u>Beispiele</u>

Die folgenden Beispiele erläutern die vorliegende Erfindung, ohne sie in irgendeiner Weise zu beschränken. Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften,

die vorzugsweise erreicht werden können, für den Fachmann gut definiert.

Die eingesetzten Acetylene, soweit nicht kommerziell erhältlich, werden nach Standard-Laborvorschriften synthetisiert.

Substanzbeispiele A: Beispielverbindungen der Formel X für Komponente A

Synthesebeispiel 1a: Synthese von 2-Cyclopropyl-1-(4-n-butyl-phenylethynyl)-4-[3,4,5-trifluoro-phenyl)ethynyl]-benzol

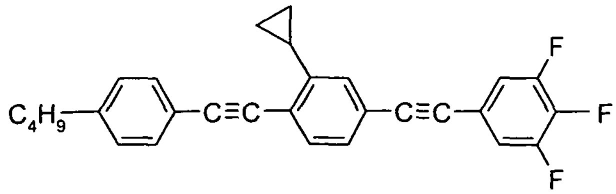

Die Verbindung wird gemäß Schema 10 analog zu unten in dieser Anmeldung beschriebenen Verbindungen hergestellt.
**MS (EI):** m/z (%) = 428 (100, $M^+$), 385 (45, $[M - Propyl]^+$).
Phasenfolge: K 84°C I.
Daten extrapoliert aus 10 %-iger Lösung in ZLI-4792:
$\Delta\varepsilon$ = +12,9; $\Delta n$ = 0,316 und $\gamma 1$ = 687 mPa·s.

Synthesebeispiel 2a: Synthese von 1-Fluor-2-Cyclopropyl-3-(4-n-butylphenylethynyl)-6-[3,4,5-trifluoro-phenyl)ethynyl]-benzol

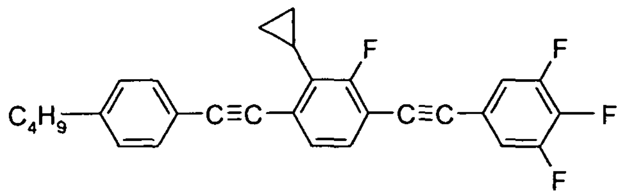

Die Verbindung wird gemäß Schema 10 analog zu unten in dieser Anmeldung beschriebenen Verbindungen hergestellt.
**MS (EI):** m/z (%) = 446 (100, $M^+$), 403 (41, $[M - Propyl]^+$), 389 (70), 369 (22), 159 (84).
Phasenfolge: K 97°C I.
Daten extrapoliert aus 10 %-iger Lösung in ZLI-4792:
$\Delta\varepsilon$ = +18,4; $\Delta n$ = 0,326 und $\gamma_1$ = 603 mPa·s.

Substanzbeispiele B: Beispielverbindungen der Formel I für Komponente F

Substanzbeispiel 1 b

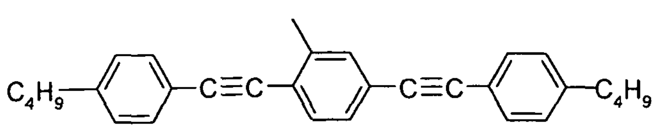

Phasenfolge: K 87°C N 178,5°C I; $\Delta n$ = 0,436; $\Delta\varepsilon$ = 2,8.

Substanzbeispiel 2b

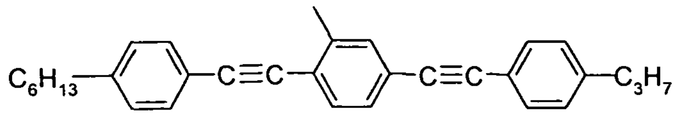

Phasenfolge: K 78°C N 172,3°C I; $\Delta n$ = 0,437; $\Delta\varepsilon$ = 2,6.

Substanzbeispiel 3b

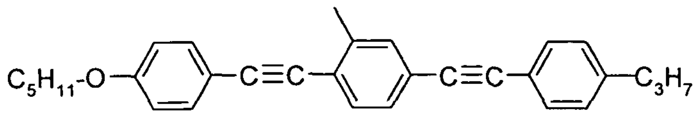

Phasenfolge: K 107°C N 211,0°C I; $\Delta n$ = 0,464; $\Delta\varepsilon$ = 3,1.

Substanzbeispiel 4b

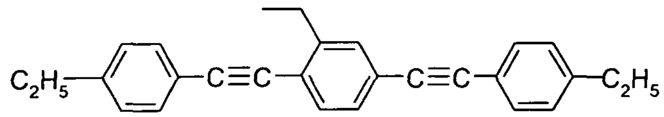

Phasenfolge: K 87°C N 130,7°C I; $\Delta n$ = 0,451; $\Delta\varepsilon$ = 2,1.

Substanzbeispiel 5b

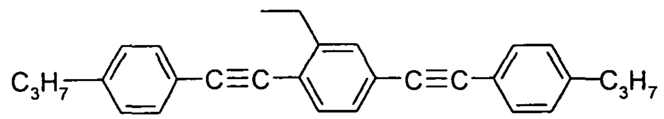

Phasenfolge: K 57°C N 151,7°C I; $\Delta n$ = 0,445; $\Delta\varepsilon$ = 2,0.

Substanzbeispiel 6b

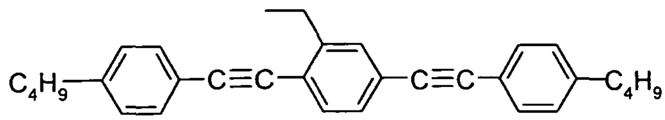

Phasenfolge: K 29°C N 119,2°C I; $\Delta n$ = 0,402; $\Delta\varepsilon$ = 1,7.

Substanzbeispiel 7b

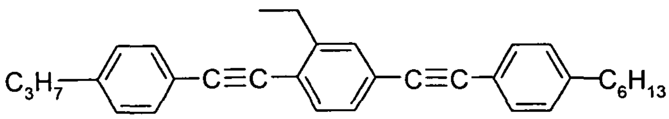

Phasenfolge: $T_g$ -54°C K 14°C N 119,2°C I; Δn = 0,393; Δε = 1,8.

Substanzbeispiel 8b

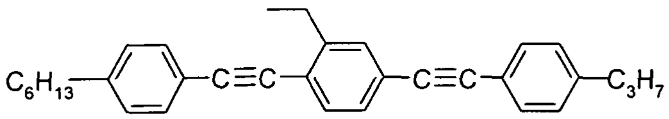

Phasenfolge: K 60°C N 121,8°C I; Δn = 0,394; Δε = 1,7.

Substanzbeispiel 9b

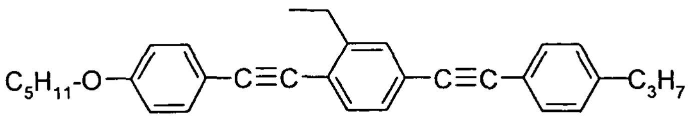

Phasenfolge: K 81°C N 160,7°C I; Δn = 0,432; Δε = 3,2.

Substanzbeispiel 10b

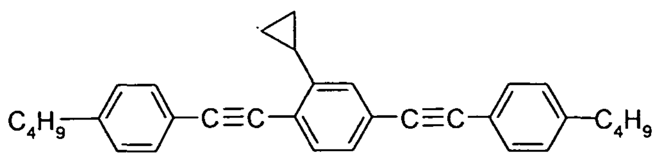

Synthesebeispiel 10b: 1,4-Bis(2-(4-butylphenyl)ethinyl)-2-cyclopropylbenzol

10b.1) 1,4-Dichlor-2-cyclopropylbenzol (**2**)

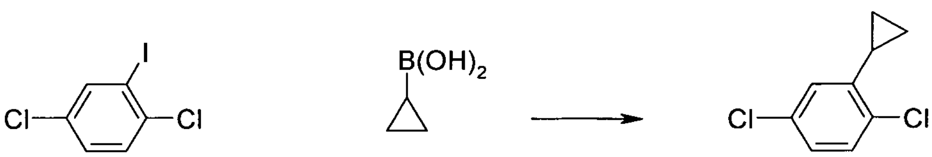

2

20 g (73 mmol) 1,4-Dichlor-2-iodbenzol, 9,4 g (110 mmol) Cyclopropylboronsäure, 32 g (147 mmol) Kaliumphosphat, 421 mg (0,7 mmol) Bis(dibenzylidenaceton)palladium(0) ($Pd(dba)_2$) und 1096 mg (1,5 mmol) 1,2,3,4,5-Pentaphenyl-1-(di-t-butylphosphan)ferrocen (CTC-Q-PHOS) werden in 600 ml Toluol gelöst und über Nacht auf 100°C erhitzt. Zu der abgekühlten Lösung werden 100 ml Wasser zugegeben und die Mischung zweimal mit Toluol extrahiert (100 ml). Die vereinigten organischen Phasen werden mit Wasser gewaschen, über Natriumsulfat getrocknet und im

Vakuum eingeengt. Der Rückstand wird durch Säulenchromatographie aufgereinigt. Man erhält die Titelverbindung als farblosen Feststoff.

10b.2) 1,4-Bis(2-(4-butylphenyl)ethinyl)-2-cyclopropylbenzol (**1**)

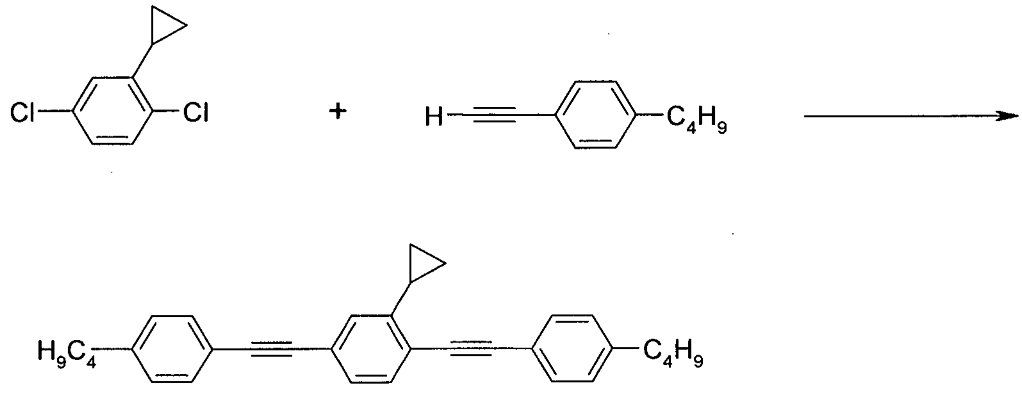

1

5 g (26 mmol) 1,4-Dichlor-2-cyclopropylbenzol, 9,4 g (58 mmol) 1-*n*-Butyl-4-ethinylbenzol, 19 g (58 mmol) Cäsiumcarbonat, 69 mg (0,3 mmol) Bis(acetonitril)palladium(II)chlorid und 382 mg (0,8 mmol) 2-Dicyclohexylphosphino-2',4',6'-triisopropybiphenyl werden unter Stickstoff in 80 ml Dioxan gelöst und über Nacht auf 100°C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt und aus Ethanol umkristallisiert. Man erhält die Titelverbindung **1** als Feststoff.

$^1$H-NMR (250 MHz, $CDCl_3$): 7.4-7.08(11 H, m); 2.5 (4H, m); 1.6-1.3 (9H, m); 0.96 (6H, m); 0.6-0.4 (4H, m).

Phasenfolge: K 72°C N 84,5°C I; $\Delta n$ = 0,378; $\Delta\varepsilon$ = 1,5.

Substanzbeispiel 11b

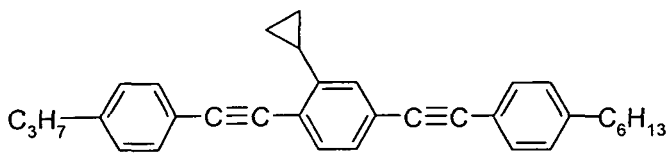

Phasenfolge: $T_g$ -43°C K 46°C N 86,0°C I; $\Delta n$ = 0,379; $\Delta\varepsilon$ = 1,1.

Substanzbeispiel 12b

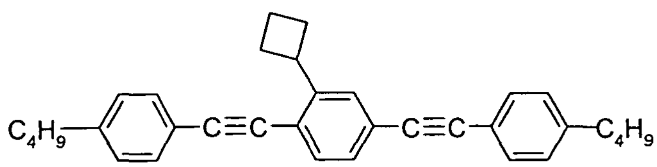

Synthesebeispiel 12b: 1,4-Bis(2-(4-butylphenyl)ethinyl)-2-cyclobutylbenzol (**3**)

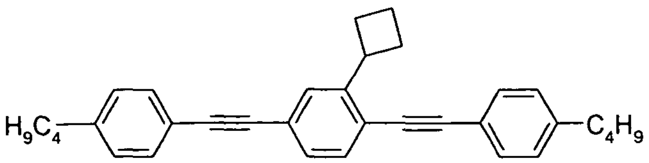

3

12b.1) 1-(2,5-Dibrombenzol)-cyclobutanol (**4**)

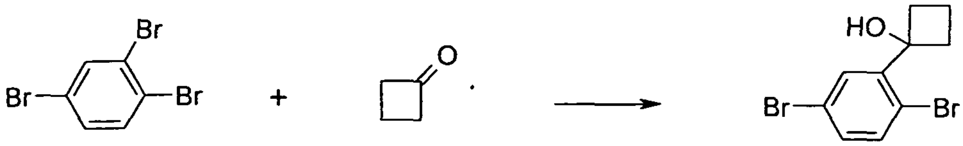

4

21,09 g (67 mmol) 1,2,4-Tribrombenzol werden unter Stickstoff in 100 ml THF vorgelegt, auf -45°C gekühlt und eine Lösung (1,3 M) von 51,54 ml (67 mmol) Isopropylmagnesiumchlorid-Lithiumchlorid-Komplex in THF zugetropft. Nach 1 Stunde wird der Ansatz auf -10°C erwärmt und bei dieser Temperatur werden 5 ml (66,34 ml) Cyclobutanon zugetropft. Der Ansatz wird auftauen gelassen und mit gesät. $NH_4Cl$-Lösung versetzt, mit Methyl-t-butylether extrahiert, die organische Phase über Natriumsulfat getrocknet, filtriert, das Lösungsmittel im Vakuum entfernt und der Rückstand mit Dichlormethan über Kieselgel filtriert. Man erhält von **4,** das ohne weitere Aufreinigung in der nächsten Stufe eingesetzt wird.

12b.2) 1,4-Dibrom-2-cyclobutylbenzol (5)

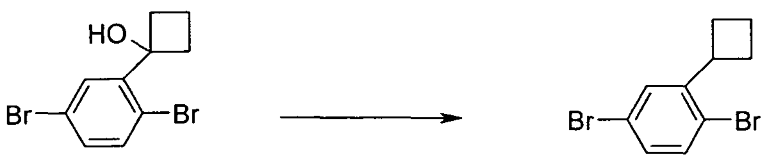

5

14,5 g (47.39 mmol) von **4** werden unter Stickstoff in 50 ml THF gelöst und bei Raumtemperatur werden 35,72 ml (284,4 mmol) Bortrifluorid-Diethylether-Komplex zugetropft. und portionsweise 12.54 g (189,6 mmol) Natriumcyanoborhydrid. Der Ansatz wird über Nacht unter Rückfluss erhitzt. Der Ansatz wird auf Raumtemperatur abkühlen gelassen, mit ges. $NaHCO_3$-Lösung versetzt, mit Methyl-t-butylether extrahiert, die organische Phase über Natriumsulfat getrocknet, filtriert, das Lösungsmittel i. Vak. entfernt und der Rückstand mit 1-Chlorbutan über Kieselgel filtriert. Man erhält **5** als gelbe Flüssigkeit.

12b.3) 1,4-Bis(2-(4-butyphenyl)ethinyl)-2-cyclobutylbenzol (**3**)

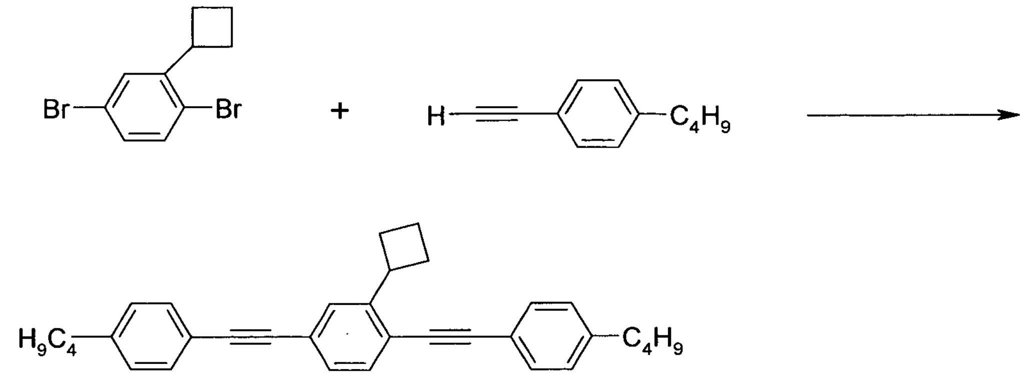

3

7,8 g (47,0 mmol) 1-Butyl-4-ethinylbenzol werden unter Stickstoff in 100 ml THF vorgelegt, auf -78°C gekühlt und 63,32 ml (63,20 mmol) einer 1 M Lösung von Lithiumbis(trimethylsilyl)amid in Hexan zugetropft. Nach 1 Stunde werden 63,22 ml (63,20 mmol) einer 1 M Lösung 9-Methoxy-9-BBN in Hexan zugegeben und bei -78°C 2 Stunden rühren gelassen. In einer zweiten Apparatur werden 6,8 g (23,45 mmol) von **5,** 0,916 g (1,0 mmol) Tris(dibenzylidenaceton)dipalladium(0) und 1,64 g (4,0 mmol) 2-Dicyclohexylphosphino-2'-6'-dimethoxybiphenyl in 100 ml THF vorgelegt. Die erste Lösung wird langsam zugetropft und der Ansatz über Nacht auf 100°C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt und aus Isopropanol umkristallisiert. Man erhält die Titelverbindung **3** als Feststoff.
Phasenfolge: $T_g$ -39°C K 69°C N 70,1°C I; $\Delta n$ = 0,359; $\Delta\varepsilon$ = 0,9.

Substanzbeispiel 13b

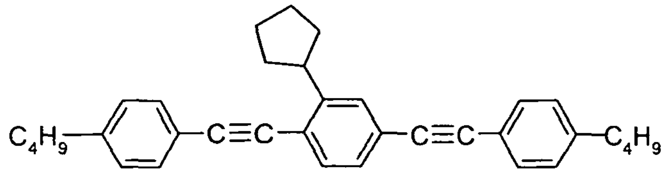

Phasenfolge: $T_g$ -36°C K 57°C N (7,0)°C I; $\Delta n$ = 0,334; $\Delta\varepsilon$ = -0,1.

Substanzbeispiel 14b

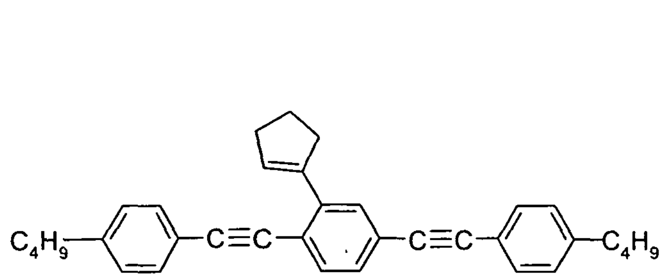

Phasenfolge: $T_g$ -34°C K 47°C N 53,1 °C I; $\Delta n$ = 0,337; $\Delta\varepsilon$ = 0,0.

Substanzbeispiel 15b

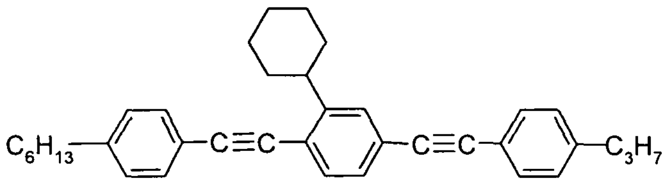

Synthesebeispiel 15b: 2-Cyclohexyl-4-(4-hexyl-benzolethinyl)-1-(4-propylbenzolethinyl)benzol (6)

15b.1) 4-chloro-2-cyclohexyl-benzol-Trifluoro-methanesulfonat 7

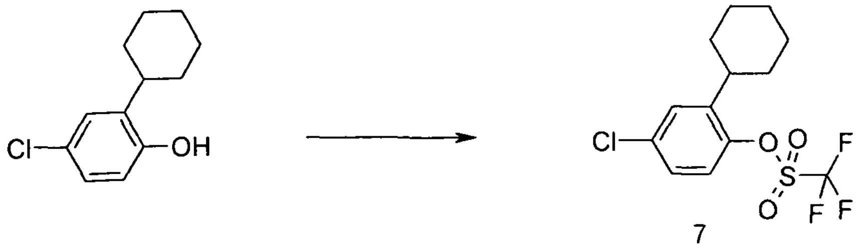

7

19 g (90,2 mmol) 4-Chlor-2-cyclohexylbenzol werden in 264 ml Dichlormethan gelöst, auf -5°C gekühlt, 4.64 ml (33,18 mmol) Triethylamin und 223 mg (1,8 mmol) 4-(Dimethylamino)pyridin zugetropft. Der Ansatz wird über Nacht bei Raumtemperatur gerührt und mit Dichlormethan über Kieselgel filtriert. Man erhält das Produkt **7,** das ohne weitere Aufreinigung in der nächsten Stufe eingesetzt wird.

15b.2)(4-Chlor-2-cyclohexyl-benzolethinyl)trimethylsilan (**8**)

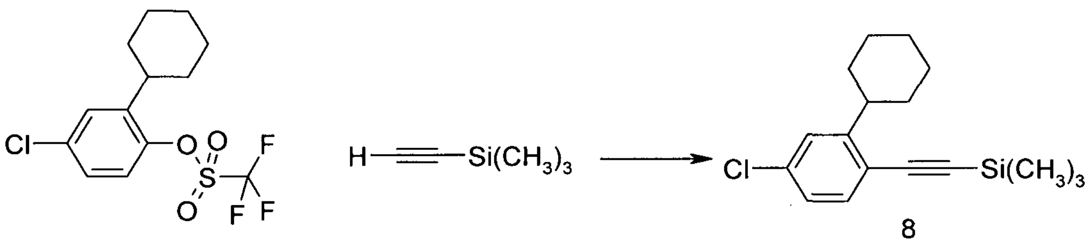

8

21 g (61,3 mmol) **7,** 25,8 ml (183,8 mmol) Trimethylsilylacetylen, 2,15 g (3 mmol) Bis(triphenylphosphin)palladium(II)chlorid und 21,2 ml (153,2 mmol) Triethylamin werden unter Stickstoff in 60 ml N,N-Dimethylformamid gelöst und über Nacht auf 100°C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt. Man erhält das Produkt **8,** das ohne weitere Aufreinigung in der nächsten Stufe eingesetzt wird.

15b.3) 4-Chlor-2-cyclohexyl-1-ethinyl-benzol (9)

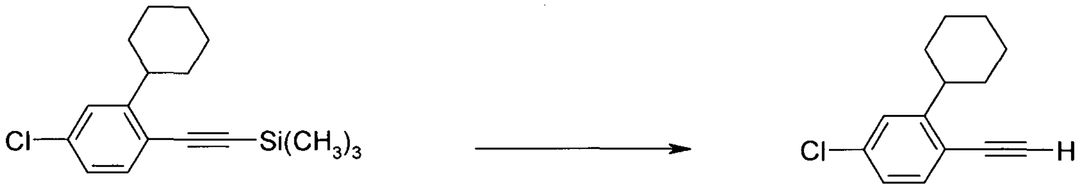

9

16,6 g (57,1 mmol) **8** werden in 154 ml Tetrahydrofuran gelöst, auf 0°C gekühlt und 1 M Lösung von Tetra-*n*-butylammoniumfluorid (68,48 mmol) zugetropft. Der Ansatz wird über Nacht bei Raumtemperatur gerührt, mit Wasser versetzt, mit Methyl-t-butylether extrahiert, die organische Phase über Natriumsulfat getrocknet, filtriert, das Lösungsmittel im Vakuum entfernt und der Rückstand mit Heptan/Toluol über Kieselgel filtriert. Man erhält das Produkt **9,** das ohne weitere Aufreinigung in der nächsten Stufe eingesetzt wird.

15b.4) 4-Chlor-2-cyclohexyl-1-p-tolylethinyl-benzol (**10**)

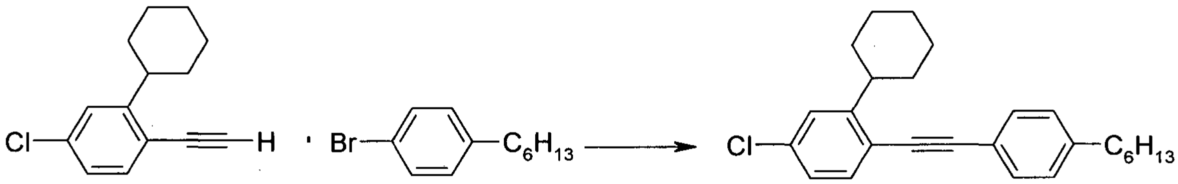

10

6,6 g (30,17 mmol) **9**, 7,28 g (30,17 mmol) 1-Brom-4-hexylbenzol, 21,63 g (66,39 mmol) Cäsiumcarbonat, 78 mg (0,3 mmol) Bis(acetonitril)-palladium(II)chlorid und 431 mg (0,9 mmol) 2-Dicyclohexylphosphino-2',4',6'-triisopropybiphenyl werden unter Stickstoff in 90 ml Dioxan gelöst und über Nacht auf 100°C erhitzt. Zu der abgekühlten Lösung werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt.

15b.5) 2-Cyclohexyl-4-(4-hexyl-phenylethinyl)-1-(4-propylphenylethinyl)-benzol (**6**)

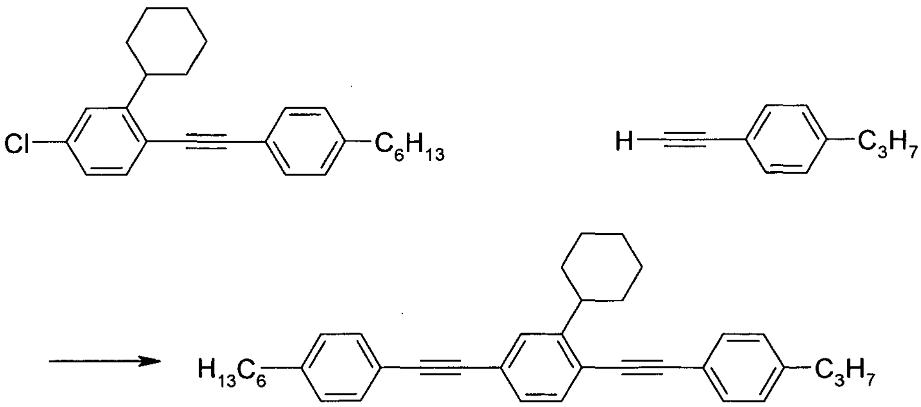

6

4,5 g (11,87 mmol) **10,** 1,7 g (11,87 mmol) 1-n-Propyl-4-ethinylbenzol, 8,5 g (26,12 mmol) Cäsiumcarbonat, 30 mg (0,1 mmol) Bis(acetonitril)palladium(II)chlorid und 170 mg (0,35 mmol) 2-Dicyclohexylphosphino-2',4',6'-triisopropybiphenyl werden unter Stickstoff in 35 ml Dioxan gelöst und über Nacht auf 100°C erhitzt. Zu der abgekühlten Lösung

werden 100 ml Wasser zugegeben und die Mischung zweimal mit Methyl-t-butylether extrahiert (100 ml). Die vereinigten organischen Phasen werden mit Wasser gewaschen, über Natriumsulfat getrocknet und im Vakuum eingeengt. Der Rückstand wird durch Säulenchromatographie aufgereinigt. Man erhält die Titelverbindung **6** als Feststoff.
Phasenfolge: $T_g$ -23°C I; Δn = 0,294; Δε = -0,6.

Substanzbeispiel 16b

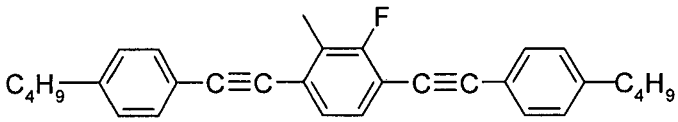

Die Verbindung wird nach Schema 10 analog zu anderen in dieser Anmeldung beschriebenen Synthesen hergestellt.
Phasenfolge: K 90°C N 193,9°C I; Δn = 0,435; Δε = 3,0. Substanzbeispiel 17b

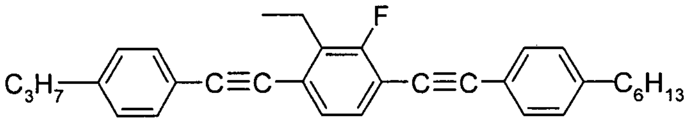

Die Verbindung wird nach Schema 10 analog zu anderen in dieser Anmeldung beschriebenen Synthesen hergestellt.
Phasenfolge: K 53°C N 143,5°C I; Δn = 0,401; Δε = 2,5.

Substanzbeispiel 18b

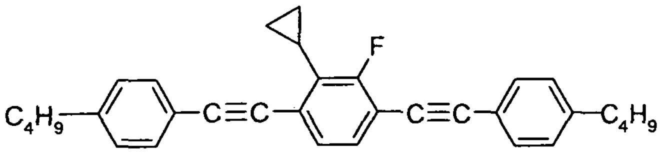

Die Verbindung wird nach Schema 10 analog zu anderen in dieser Anmeldung beschriebenen Synthesen hergestellt.
Phasenfolge: $T_g$ -49 K 32°C N 126,0°C I; Δn = 0,373; Δε = 1,6.

Substanzbeispiel 19b

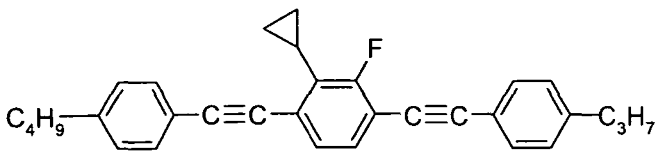

Substanzbeispiel 20b

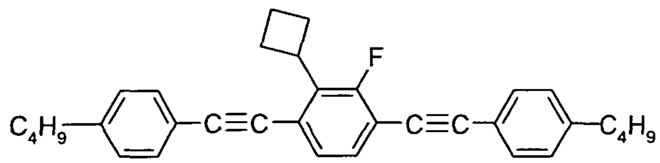

Phasenfolge: $T_g$ -45°C C 60°C N 89,1°C I; Δn = 0,348; Δε = 1,3.

Substanzbeispiel 21 b

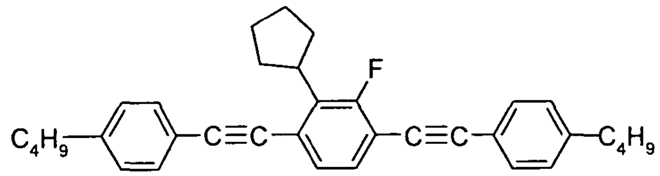

Phasenfolge: $T_g$ -32°C K 66°C N (44,1)°C I; Δn = 0,322; Δε = 0,6.

Substanzbeispiel 22b

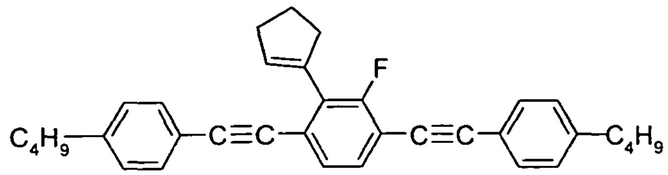

Phasenfolge: $T_g$ -37°C K 52°C N 78,2°C I; Δn = 0,339; Δε = 0,9.

Synthesebeispiel 23b:

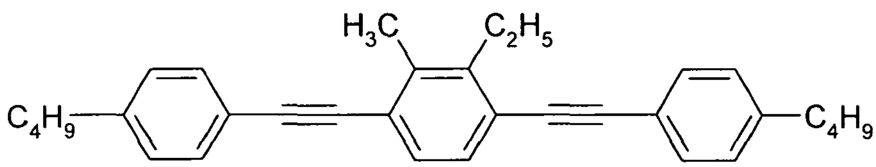

Schritt 23b.1

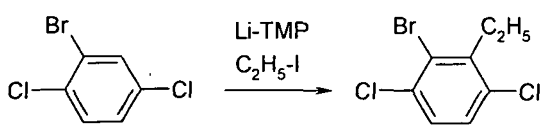


25,4 g 2-Brom-1,4-dichlorbenzol, 8,9ml Iodethan und 13,3ml DMPU werden in 230 ml THF gelöst und bei -70°C mit einer Lösung von 16,2 g Lithiumtetramethylpiperidit in THF tropfenweise versetzt. Nach weiteren 2 h bei -70°C lässt man das Reaktionsgemisch auf Umgebungstemperatur erwärmen, hydrolysiert den Ansatz mit Wasser und arbeitet

extraktiv auf. Das Rohprodukt wird durch fraktionierte Destillation gereinigt.
Kp: 73°C/0,1 bar. Farblose Flüssigkeit.

Schritt 23b.2

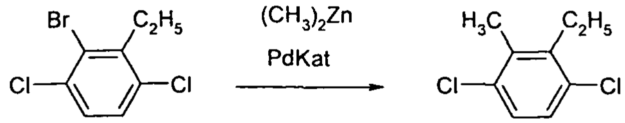


2,4 g wasserfreies Zinkbromid werden in 50ml THF mit 12,5 ml 5%iger Lösung von Methyllithium in Diethylether bei 25-40°C versetzt. Danach setzt man 0,3 g $PdCl_2$-dppf, Bis(diphenylphosphinoferrocen)palladiumdichlorid zu, erhitzt zum Sieden und tropft 4,6 g des Produkts des Schritts 1.1, gelöst in etwas THF, zu. Anschließend wird das Reaktionsgemisch für 15 h unter Rückfluss erhitzt. Man hydrolysiert den Ansatz mit Wasser und arbeitet extraktiv auf. Das Rohprodukt wird chromatographisch (Pentan / Kieselgel) aufgereinigt. Farblose Flüssigkeit.

Schritt 23b.3

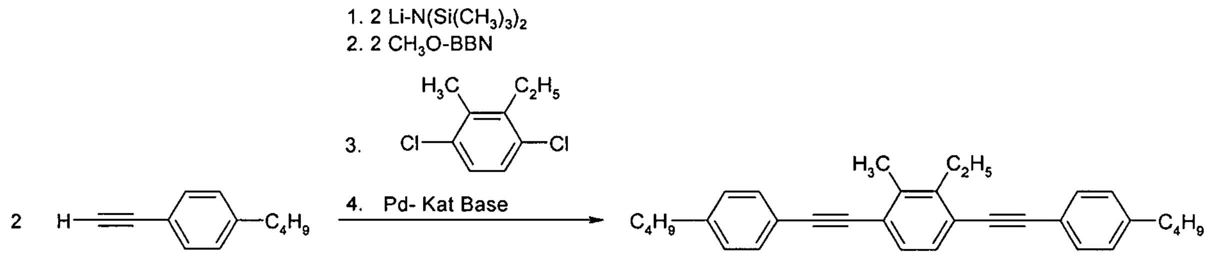


2,4g 4-Butylphenylacetylen werden in 30ml THF vorgelegt und auf -78°C abgekühlt. Zu dieser Lösung werden 14,3 ml einer 1 M Lösung von Lithium-bis(trimethylsilyl)amid in Hexan zugetropft und bei -78°C 1 h nachreagieren lassen. Danach werden 14,3 ml einer 1 M Lösung von Methoxy-9-BBN zugetropft und 2 h bei -78°C nachgerührt. In einer zweiten Apparatur wurden 1,0g des Produkts des letzten Schritts, gelöst in 40 ml THF, mit dem Katalysator aus 0,2g Tris(dibenzylidenaceton)dipalladium und 0,35 g 2-Dicyclohexylphosphino-2'-6'-dimethoxybiphenyl, vorgelegt, und die Reaktionslösung des ersten Umsatzes bei Raumtemperatur zugesetzt. Es wird 15 h zum Sieden erhitzt. Man hydrolysiert den Ansatz mit Wasser und arbeitet extraktiv auf. Das Rohprodukt wird chromatographisch (Pentan / Kieselgel) aufgereinigt. Nach umkristallisieren aus Pentan erhält man das gereinigte Titelprodukt.
Phasenfolge: K 45°C N 180°C I.

Synthesebeispiel 24b:

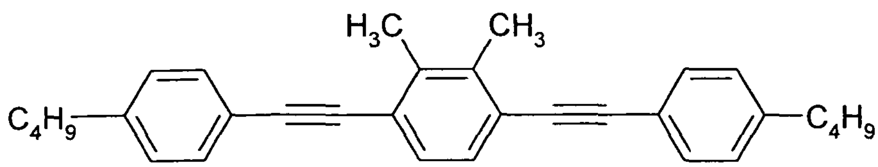

Die Verbindung wird analog zu Beispiel 23b hergestellt.
Phasenfolge: K 118°C N 222°C I; $\Delta n = 0,435$; $\Delta\varepsilon = 2,6$.

Synthesebeispiel 25b:

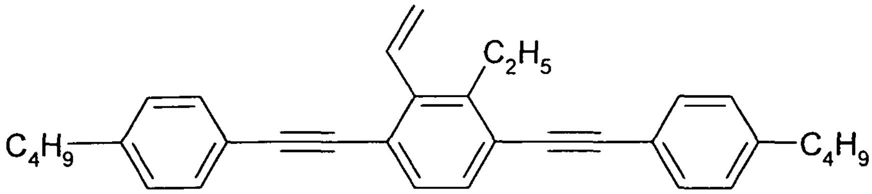

Die Titelverbindung wird analog zu Beispiel 23b hergestellt.
Phasenfolge: K 41°C N 161°c I.

Substanzbeispiel 26b

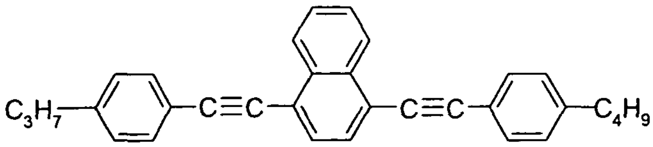

27b.1) Synthese von 1-Iod-4-Bromnaphthalin

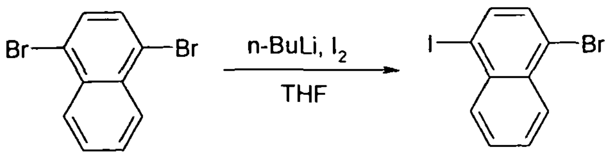


100 g (350 mmol) 1,4-Dibromnaphthalin werden in 1 l THF vorgelegt, auf -70°C gekühlt und tropfenweise mit 235 ml n-BuLi (1,6 M in Hexan, 370 mmol) versetzt. Nach 1 h werden 103 g $I_2$ (406 mmol) in 250 ml THF zugetropft, 2 h bei -70°C nachgerührt, auf 0°C erwärmt und durch die Zugabe von 50 ml (644 mmol) wässriger $NaHSO_3$-Lösung (w = 39 %) gequencht. Die Phasen werden getrennt und die wässrige Phase einmal mit MTB extrahiert. Die vereinigten organischen Phasen werden mit gesättigter Natriumchloridlsg. gewaschen, über Natriumsulfat getrocknet, abfiltriert und am Rotationsverdampfer eingeengt. Der Rückstand wird säulenchromatographisch ($SiO_2$, Heptan) gereinigt, die weitere Aufreinigung erfolgt durch Umkristallisation aus Isopropanol. 1-Iod-4-Bromnaphthalin wird als gelber Feststoff erhalten.

26b.2) Synthese von 1-Brom-4-(4-n-propyl-phenylethynyl)-naphthalin

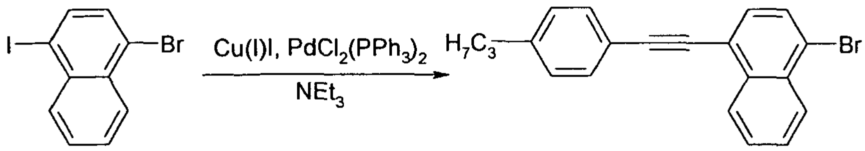


15,3 g (43,6 mmol) 1-Iod-4-Bromnaphthalin und 7,25 g (5,3 mmol) 4-*n*-Propylphenylacetylen werden in 200 ml $NEt_3$ vorgelegt, mit 170 mg (0,9 mmol) Kupfer(I)iodid und 600 mg (0,9 mmol) Bis(triphenylphosphin)-palladium(II)-chlorid versetzt und 30 Minuten refluxiert. Der Ansatz wird abgekühlt, mit Wasser und Heptan versetzt und die Phasen getrennt. Die organische Phase wird mit gesättigter Natriumchloridlsg. gewaschen, über Natriumsulfat getrocknet, abfiltriert und am Rotationsverdampfer eingeengt. Der Rückstand wird säulenchromatographisch ($SiO_2$, Heptan) gereinigt, die weitere

Aufreinigung erfolgt durch Umkristallisation aus Isopropanol.

26b.3) Synthese von 1-(4-*n*-Butyl-phenylethynyl)-4-(4-*n*-propyl-phenylethynyl)-naphthalin

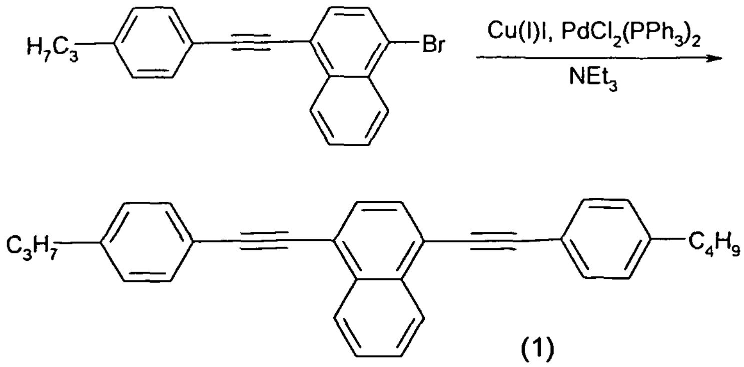


(1)

2,35 g (6,3 mmol) 1-Brom-4-(4-*n*-propyl-phenylethynyl)-naphthalin und 1,33 g (8,4 mmol) 4-*n*-Butylphenylacetylen werden in 40 ml $NEt_3$ vorgelegt, mit 60 mg (0,3 mmol) Kupfer(I)iodid und 200 mg (0,3 mmol) Bis(triphenylphosphin)-palladium(II)-chlorid versetzt und 18 h refluxiert.

Der Ansatz wird abgekühlt, mit Wasser und Heptan versetzt und die Phasen getrennt. Die organische Phase wird mit gesättigter Ammoniumchloridlösung und anschließend mit gesättigter Natriumchloridlsg. gewaschen, über Natriumsulfat getrocknet, abfiltriert und am Rotationsverdampfer eingeengt. Der Rückstand der Verbindung **(1)** wird säulenchromatographisch ($SiO_2$, Heptan) gereinigt, die weitere Aufreinigung erfolgt durch Umkristallisation aus Isopropanol.
**MS (EI)**: m/z(%) = 426 (100, $M^+$), 397 (11, $[M - Ethy]^+$), 383 (16, $[M\text{-}Propyl]^+$), 354 (18, $[M - Ethy\text{-}Propyl]^+$), 177 (14, $[M - Ethy\text{-}Propyl]^{2+}$).
Phasenfolge: K 78°C N 191°C I; $\Delta n$ = 0,450; $\Delta\varepsilon$ = 2,9.

Substanzbeispiel 27b

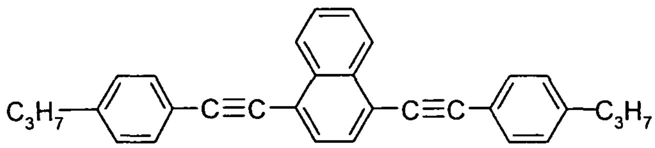

Die Verbindung wird analog zu Beispiel 26b hergestellt.
Phasenfolge: K 108°C N 194°C I.

Substanzbeispiel 28b

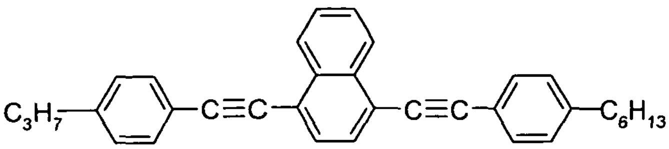

Die Verbindung wird analog zu Beispiel 26b hergestellt.
Phasenfolge: K 63°C N 171,7°C I; $\Delta n$ = 0,435; $\Delta\varepsilon$ = 2,3.

Substanzbeispiel 29b

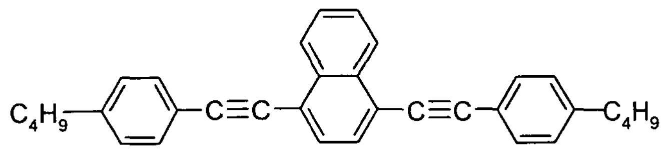

Die Verbindung wird analog zu Beispiel 26b hergestellt.
Phasenfolge: K 76°C N 176,2°C I; $\Delta n$ = 0,427; $\Delta\varepsilon$ = 2,4.

Substanzbeispiel 30b

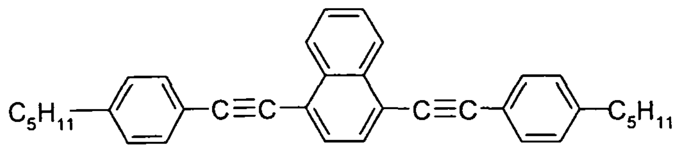

Die Verbindung wird analog zu Beispiel 26b hergestellt.
Phasenfolge: K 100°C N 162°C I.

Substanzbeispiel 31 b

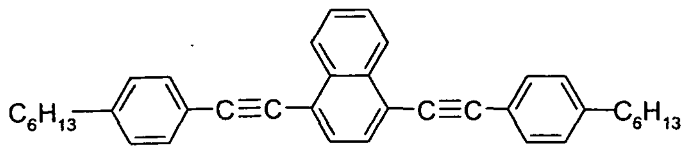

Die Verbindung wird analog zu Beispiel 26b hergestellt.
Phasenfolge: K 61 °C N 139°C I.

Substanzbeispiel 32b

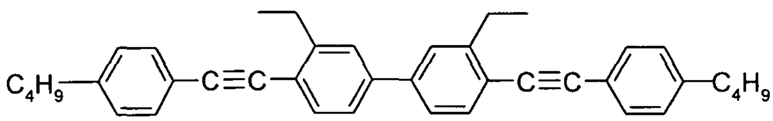

Diese Verbindung wird gemäß dem rechten Reaktionspfad des Schemas 15 analog zu den vorhergehenden Verbindungen hergestellt.
Phasenfolge: K 85°C N 202,4°C I; $\Delta n$ = 0,446; $\Delta\varepsilon$ = 2,0.

Substanzbeispiel 33b

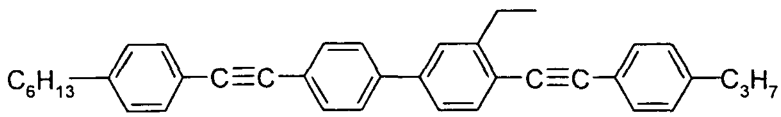

Die Verbindung wird analog zu Beispiel 32b hergestellt.
Phasenfolge: K 112°C N 253,5°C I; $\Delta n$ = 0,484; $\Delta\varepsilon$ = 4,1.

<u>Substanzbeispiel 34b</u>

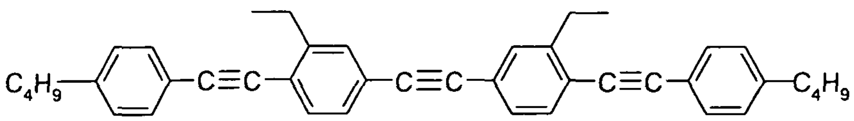

Diese Verbindung wird gemäß dem linken Reaktionspfad des Schemas 15 analog zu den vorhergehenden Verbindungen hergestellt.
Phasenfolge: K 93°C N 212,4°C I; $\Delta n$ = 0,527; $\Delta\varepsilon$ = 0,8.

<u>Anwendungsbeispiele</u>

<u>Vergleichsbeispiele 1 bis 3</u>

Es wird eine flüssigkristalline Substanz mit der Kurzbezeichnung PTP(2)TP-6-3 nach Hsu, C. S. Shyu, K. F., Chuang, Y. Y. und Wu, S.-T., Liq. Cryst., 27 (2), (2000), p. 283-287 hergestellt und bezüglich ihrer physikalischen Eigenschaften, insbesondere im $\mu$-Wellenbereich, untersucht. Die Verbindung hat eine nematische Phase und einen Klärpunkt (T(N,I)) von 114,5°C. Weitere physikalische Eigenschaften bei 20°C sind: $n_e$(589,3 nm) = 1,8563; $\Delta n$(589,3 nm) = 0,3250; $\varepsilon_{\parallel}$(1 kHz) = 3,4; $\Delta\varepsilon$(1 kHz) = 0,8 und $\gamma_1$ = 2.100 mPa·s. Die Verbindung eignet sich für Anwendungen im Mikrowellenbereich und/oder Millimeterwellenbereich, insbesondere für Phasenschieber.

<u>Tabelle 1a: Eigenschaften der Verbindung PTP(2)TP-6-3 bei 30 GHz</u>

| T/°C | $\varepsilon_{r,\parallel}$ | $\varepsilon_{r,\perp}$ | $\tau$ | tan $\delta_{\varepsilon,\tau,\parallel}$ | tan $\delta_{\varepsilon,\tau,\perp}$ | $\eta$ |
|---|---|---|---|---|---|---|
| 20 | 3,22 | 2,44 | 0,242 | 0,0029 | 0,0064 | 37,9 |

<u>Tabelle 1b: Eigenschaften der Verbindung PTP(2)TP-6-3 bei 19 GHz</u>

| T/°C | $\varepsilon_{r,\parallel}$ | $\varepsilon_{r,\perp}$ | T | tan $\delta_{\varepsilon,r,\parallel}$ | tan $\delta_{\varepsilon,r,\perp}$ | $\eta$ |
|---|---|---|---|---|---|---|
| 20 | 3,35 | 2,42 | 0,278 | 0,0029 | 0,0061 | 45,2 |

Außerdem wurde die Verbindung *n*-1-Pentyl-4'-cyanobiphenyl (auch PP-5-N oder auch CB15 genannt) und die Flüssigkristallmischung ZLI-4792 (Produkt vom Merck KGaA, Darmstadt, Deutschland) auf ihre Eigenschaften 19 GHz Untersucht. Die Ergebnisse sind in Tabelle 2 zusammengefasst.

<u>Tabelle 2: Vergleich der Eigenschaften der verschiedenen Beispiele bei 19 GHz und 20°C</u>

| Beispiel | FK | $\varepsilon_{r,\parallel}$ | $\varepsilon_{r,\perp}$ | $\tau$ | tan $\delta_{\varepsilon\ r,Max}$ | $\eta$ |
|---|---|---|---|---|---|---|
| Vergl. 1 | P2-6-3* | 3,35 | 2,42 | 0,278 | 0,0061 | 45,2 |
| Vergl. 2 | PP-5-N$ | 3,06 | 2,66 | 0,131 | 0,0273 | 4,8 |
| Vergl. 3 | ZLI§ | 2,57 | 2,29 | 0,107 | 0,0126 | 8,5 |
| 1 | M-1 | 2,63 | 2,29 | 0,129 | 0,0117 | 11,0 |

(fortgesetzt)

| Beispiel | FK | $\varepsilon_{r,\parallel}$ | $\varepsilon_{r,\perp}$ | $\tau$ | tan $\delta_{\varepsilon\ r,Max}$ | $\eta$ |
|---|---|---|---|---|---|---|
| 2 | M-2 | 3,33 | 2,40 | 0,280 | 0,0058 | 48,0 |
| Bemerkungen: *) P2-6-3: PTP(2)TP-6-3,<br>FK: Flüssigkristall,<br>$)PP-5-N: CB15 und<br>§) ZLI: ZLI-4792 | | | | | | |

Beispiel 1

Es wird eine Flüssigkristallmischung M-1 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 84,5 | °C |
| Nr. | Abkürzung | c/% | | | |
| 1 | PTPI(c3)TU-4-F | 10,0 | $\Delta n$ (20°C, 589,3 nm) | 0,119 | |
| 2 | CP-5-F | 9,0 | | | |
| 3 | CP-6-F | 7,2 | $\Delta\varepsilon$ (20°C, 1 kHz) | = 6,0 | |
| 4 | CP-7-F | 5,4 | | | |
| 5 | CCP-2-OT | 7.2 | $k_{11}$ (20°C) | = n.z.b. | pN |
| 6 | CCP-3-OT | 10,8 | $k_{33}/k_{11}$ (20°C) | = n.z.b. | |
| 7 | CCP-4-OT | 6,3 | | | |
| 8 | CCP-5-OT | 9,9 | $V_0$ (20°C) | = n.z.b. | V |
| 9 | CCEP-3-OT | 4,5 | | | |
| 10 | CCEP-5-OT | 4,5 | $\gamma_1$ (20°C) | = n.z.b. | mPa·s |
| 11 | CPG-3-F | 10,8 | | | |
| 12 | CPG-5-F | 9,0 | | | |
| 13 | CGPC-3-3 | 1,8 | | | |
| 14 | CGPC-5-3 | 1,8 | | | |
| 15 | CGPC-5-5 | 1,8 | | | |
| Σ | | 100,0 | | | |
| Bemerkungen: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 3: Eigenschaften der Mischung M-1 bei 19 GHz

| T/°C | $\varepsilon_{r,\parallel}$ | $\varepsilon_{r,\perp}$ | $\tau$ | tan $\delta_{\varepsilon,r,\parallel}$ | tan $\delta_{\varepsilon,r,\perp}$ | $\eta$ |
|---|---|---|---|---|---|---|
| 20 | 2,63 | 2,30 | 0,125 | 0,0047 | 0,0116 | 10,8 |

Beispiel 2

Es wird eine Flüssigkristallmischung M-2 mit der Zusammensetzung und den Eigenschaften wie in der folgenden Tabelle angegeben hergestellt.

| Zusammensetzung | | | Physikalische Eigenschaften | |
|---|---|---|---|---|
| Verbindung | | | T(N,I) | = 106 °C |
| Nr. | Abkürzung | c/% | $\Delta n$ (20°C, 589,3 nm) | = n.z.b. |

(fortgesetzt)

| Zusammensetzung | | | Physikalische Eigenschaften | | |
|---|---|---|---|---|---|
| 1 | PTPI(c3)TU-4-F | 10,0 | $\Delta\varepsilon$ (20°C, 1 kHz) | = n.z.b. | |
| 2 | PTP(2)TP-6-3 | 90,0 | $k_{11}$ (20°C) | = n.z.b. | pN |
| Σ | | 100,0 | $k_{33}/k_{11}$ (20°C) | = n.z.b. | |
| | | | $V_0$ (20°C) | = n.z.b. | V |
| | | | $\gamma_1$ (20°C) | = n.z.b. | mPa·s |
| Bemerkungen: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 4: Eigenschaften der Mischung M-2 bei 19 GHz

| T/°C | $\varepsilon_{r,\parallel}$ | $\varepsilon_{r,\perp}$ | $\tau$ | tan $\delta_{\varepsilon,r,\parallel}$ | tan $\delta_{\varepsilon,r,\perp}$ | $\eta$ |
|---|---|---|---|---|---|---|
| 20 | 3,33 | 2,40 | 0,278 | 0,0025 | 0,0058 | 48,2 |

Beispiel 3

Es wird eine Flüssigkristallmischung M-3 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 126,5 | °C |
| Nr. | Abkürzung | c/% | | | |
| 1 | PTPI(c3)TU-4-F | 10,0 | $\Delta n$ (20°C, 589,3 nm) | = n.z.b. | |
| 2 | PPTUI-3-2 | 18,0 | | | |
| 3 | PPTUI-3-4 | 18,0 | $\Delta\varepsilon$ (20°C, 1 kHz) | = n.z.b. | |
| 4 | GGP-3-CL | 7,2 | | | |
| 5 | GGP-5-CL | 18,0 | $k_{11}$ (20°C) | = n.z.b. | pN |
| 6 | GPEP-3-CL | 4,5 | $k_{33}/k_{11}$ (20°C) | = n.z.b. | |
| 7 | PTP-2-O1 | 7,2 | | | |
| 8 | PTP-3-O1 | 8,1 | $V_0$ (20°C) | = n.z.b. | V |
| 9 | CPGP-4-3 | 4,5 | | | |
| 10 | CPGP-5-3 | 4,5 | $\gamma_1$ (20°C) | = n.z.b. | mPa·s |
| Σ | | 100,0 | | | |
| Bemerkungen: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 5: Eigenschaften der Mischung M-3 bei 19 GHz

| T/°C | $\varepsilon_{r,\parallel}$ | $\varepsilon_{r,\perp}$ | $\tau$ | tan $\delta_{\varepsilon,r,\parallel}$ | tan $\delta_{\varepsilon,r,\perp}$ | $\eta$ |
|---|---|---|---|---|---|---|
| 20 | 3.28 | 2,50 | 0,239 | 0,0060 | 0,0171 | 14,0 |

Beispiel 4

Es wird eine Flüssigkristallmischung M-4 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 106,5 | °C |
| Nr. | Abkürzung | c/% | Δn (20°C, 589,3 nm) | = n.z.b. | |
| 1 | PTPI(c3)TU-4-F | 10,0 | Δε (20°C, 1 kHz) | = n.z.b. | |
| 2 | PTPI(2)TP-6-3 | 58,5 | $k_{11}$ (20°C) | = n.z.b. | pN |
| 3 | GGP-3-CL | 9,0 | $k_{33}/k_{11}$ (20°C) | = n.z.b. | |
| 4 | GGP-5-CL | 22,5 | $V_0$(20°C) | = n.z.b. | V |
| Σ | | 100,0 | $\gamma_1$ (20°C) | = n.z.b. | mPa·s |
| Bemerkung: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 6: Eigenschaften der Mischung M-4 bei 19 GHz

| T/°C | $\varepsilon_{r,\parallel}$ | $\varepsilon_{r,\perp}$ | τ | tan $\delta_{\varepsilon,r,\parallel}$ | tan $\delta_{\varepsilon,r,\perp}$ | η |
|---|---|---|---|---|---|---|
| 20 | 3,29 | 2,41 | 0,268 | 0,0034 | 0,0098 | 27,4 |

Beispiel 1

Es wird eine Flüssigkristallmischung M-1 mit der Zusammensetzung und den Eigenschaften wie in der folgenden Tabelle angegeben hergestellt.

Bemerkungen: n.z.b.: noch zu bestimmen.

| Zusammensetzung | | | Physikalische Eigenschaften | | |
|---|---|---|---|---|---|
| Verbindung | | | T(N,I) | = 88,1 | °C |
| Nr. | Abkürzung | c/% | | | |
| 1 | PTG(c3)TU-4-F | 10,0 | Δn (20°C, 589,3 nm) | = 0,120 | |
| 2 | CP-5-F | 9,0 | | | |
| 3 | CP-6-F | 7,2 | Δε (20°C, 1 kHz) | = 6,6 | |
| 4 | CP-7-F | 5,4 | | | |
| 5 | CCP-2-OT | 7,2 | $k_{11}$ (20°C) | = n.z.b. | pN |
| 6 | CCP-3-OT | 10,8 | $k_{33}/k_{11}$ (20°C) | = n.z.b. | |
| 7 | CCP-4-OT | 6,3 | | | |
| 8 | CCP-5-OT | 9,9 | $V_0$ (20°C) | = n.z.b. | V |
| 9 | CCEP-3-OT | 4,5 | | | |
| 10 | CCEP-5-OT | 4,5 | $\gamma_1$ (20°C) | = 154 | mPa·s |
| 11 | CPG-3-F | 10,8 | | | |
| 12 | CPG-5-F | 9,0 | | | |
| 13 | CGPC-3-3 | 1,8 | | | |
| 14 | CGPC-5-3 | 1,8 | | | |
| 15 | CGPC-5-5 | 1,8 | | | |
| Σ | | 100,0 | | | |

Diese Mischung eignet sich sehr gut für Anwendungen im Mikrowellenbereich und/oder Millimeterwellenbereich, insbesondere für Phasenschieber.

Tabelle 7: Eigenschaften der Mischung M-1 bei 19 GHz

| T/°C | $\varepsilon_{r,\parallel}$ | $\varepsilon_{r,\perp}$ | $\tau$ | tan $\delta_{\varepsilon,r,\parallel}$ | tan $\delta_{\varepsilon,r,\perp}$ | $\eta$ |
|---|---|---|---|---|---|---|
| 20 | 2,63 | 2,29 | 0,129 | 0,0048 | 0,0117 | 11,0 |
| Bemerkung: n.z.b.: noch zu bestimmen. | | | | | | |

Beispiel 2

Es wird eine Flüssigkristallmischung M-2 mit der Zusammensetzung und den Eigenschaften wie in der folgenden Tabelle angegeben hergestellt.

| Zusammensetzung | | | Physikalische Eigenschaften | | |
|---|---|---|---|---|---|
| Verbindung | | | T(N,I) | = 109 | °C |
| Nr. | Abkürzung | c/% | $\Delta n$ (20°C, 589,3 nm) | = n.z.b. | |
| 1 | PTG(c3)TU-4-F | 10,0 | $\Delta\varepsilon$ (20°C, 1 kHz) | = n.z.b. | |
| 2 | PTP(2)TP-6-3 | 90,0 | $k_{11}$ (20°C) | = n.z.b. | pN |
| $\Sigma$ | | 100,0 | $k_{33}/k_{11}$ (20°C) | = n.z.b. | |
| | | | $V_0$(20°C) | = n.z.b. | V |
| | | | $\gamma_1$(20°C) | = n.z.b. | mPa·s |
| Bemerkungen: n.z.b.: noch zu bestimmen. | | | | | |

Diese Mischung eignet sich sehr gut für Anwendungen im Mikrowellenbereich und/oder Millimeterwellenbereich, insbesondere für Phasenschieber.

Tabelle 8: Eigenschaften der Mischung M-2 bei 19 GHz

| T/°C | $\varepsilon_{r,\parallel}$ | $\varepsilon_{r,\perp}$ | $\tau$ | tan $\delta_{\varepsilon,r,\parallel}$ | tan $\delta_{\varepsilon,r,\perp}$ | $\eta$ |
|---|---|---|---|---|---|---|
| 20 | 3,33 | 2,40 | 0,280 | 0,0025 | 0,0058 | 48,0 |
| Bemerkung: n.z.b.: noch zu bestimmen. | | | | | | |

**Patentansprüche**

1. Flüssigkristallmedium, **dadurch gekennzeichnet, dass** es eine Komponente A enthält, die eine oder mehrere Verbindungen der Formel X enthält,

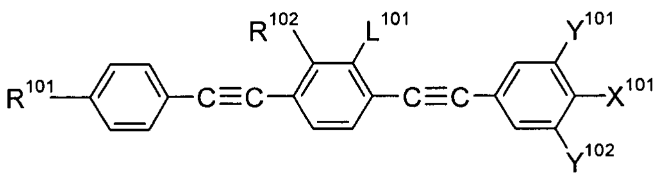

X

worin

$L^{101}$ Alkyl mit 1 bis 6 C-Atomen, Cycloalkyl mit 3 bis 6 C-Atomen, Cycloalkenyl mit 4 bis 6 C-Atomen oder Halogen,
$X^{101}$ halogeniertes Alkyl, Alkenyl, Alkoxy oder Alkenyloxy mit 1, 2 oder 3 C-Atomen, CN, NCS, $SF_5$ oder Halogen,
$Y^{101}$ und $Y^{102}$ unabhängig voneinander H, F oder Cl,
$R^{101}$ und $R^{102}$ unabhängig voneinander unfluoriertes Alkyl oder unfluoriertes Alkoxy jeweils mit 1 bis 15 C-Atomen, unfluoriertes Alkenyl, unfluoriertes Alkenyloxy oder unfluoriertes Alkoxyalkyl jeweils mit 2 bis 15 C-Atomen, oder Cycloalkyl, Alkylcycloalkyl, Cycloalkenyl, Alkylcycloalkenyl, Alkylcycloalkylalkyl oder Alkycycloalkenylalkyl) jeweils mit bis zu 15 C-Atomen,

bedeuten.

**2.** Flüssigkristallmedium nach Anspruch 1, **dadurch gekennzeichnet, dass** die Komponente A eine oder mehrere Verbindungen der Formel X-2

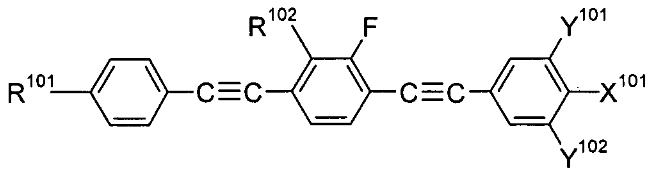

X-2

worin die Parameter die in Anspruch 1 unter Formel X gegebenen Bedeutungen haben, enthält.

**3.** Flüssigkristallmedium nach mindestens einem der Ansprüche 1 und 2, **dadurch gekennzeichnet, dass** es zusätzlich eine oder mehrere Verbindungen der Formeln X-1

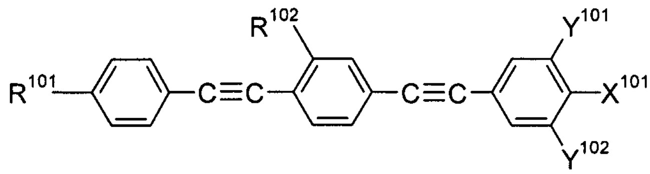

X-1

worin die Parameter die in Anspruch 1 unter Formel X gegebenen Bedeutungen haben, enthält.

**4.** Flüssigkristallmedium nach mindestens einem der Ansprüche 1 bis 3, **dadurch gekennzeichnet, dass** es eine Komponente F enthält, die eine oder mehrere Verbindungen der Formel I enthält

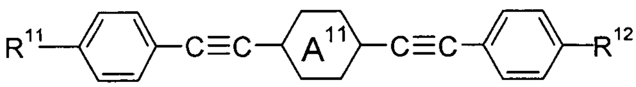

I

worin

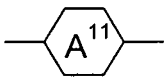

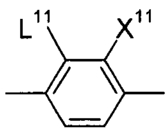

,

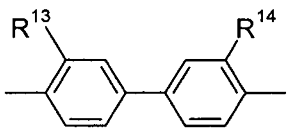

,

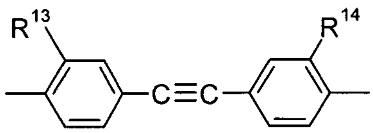

oder

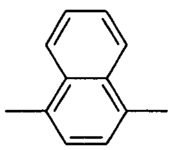

,

$L^{11}$ Alkyl mit 1 bis 6 C-Atomen, Cycloalkyl mit 3 bis 6 C-Atomen, Cycloalkenyl mit 4 bis 6 C-Atomen oder Halogen,
$X^{11}$ H, Alkyl mit 1 bis 3 C-Atomen oder Halogen,
$R^{11}$ bis $R^{14}$ unabhängig voneinander unfluoriertes Alkyl oder unfluoriertes Alkoxy jeweils mit 1 bis 15 C-Atomen, unfluoriertes Alkenyl, unfluoriertes Alkenyloxy oder unfluoriertes Alkoxyalkyl jeweils mit 2 bis 15 C-Atomen, oder Cycloalkyl, Alkylcycloalkyl, Cycloalkenyl, Alkylcycloalkenyl, Alkylcycloalkylalkyl oder Alkycycloalkenylalkyl) jeweils mit bis zu 15 C-Atomen, und alternativ einer von $R^{13}$ und $R^{14}$ oder beide auch H,

bedeuten.

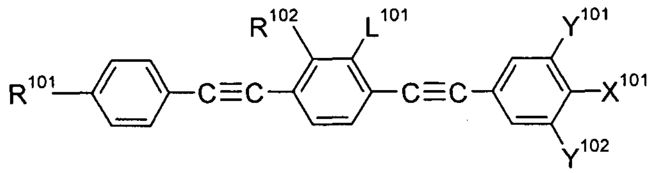

X

5. Flüssigkristallmedium nach mindestens einem der Ansprüche 1 bis 4, **dadurch gekennzeichnet, dass** die Komponente A eine oder mehrere Verbindungen ausgewählt aus der Gruppe der Verbindungen der Formeln I-1 bis I-4

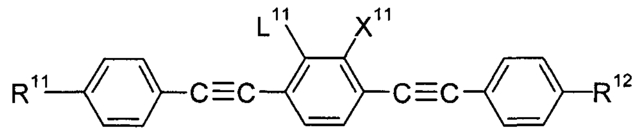

I-1

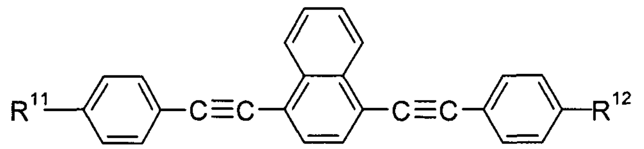

I-2

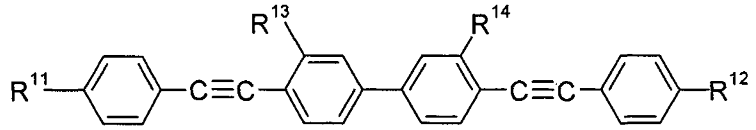

I-3

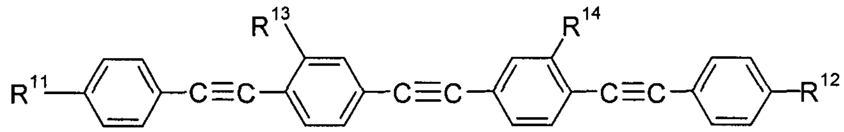

I-4

worin die Parameter die in Anspruch 4 unter Formel I gegebenen Bedeutungen haben, enthält.

6. Flüssigkristallmedium nach mindestens einem der Ansprüche 1 bis 5, **dadurch gekennzeichnet, dass** die Komponente F eine oder mehrere Verbindungen der Formel I-2 und/oder der Formel I-3 und/oder der Formel I-4, wie in Anspruch 5 angegeben, enthält.

7. Flüssigkristallmedium nach mindestens einem der Ansprüche 1 bis 6, **dadurch gekennzeichnet, dass** die Komponente F eine oder mehrere Verbindungen der Formel I-1, wie in Anspruch 5 angegeben, enthält, worin $X^{11}$ H bedeutet.

8. Flüssigkristallmedium nach mindestens einem der Ansprüche 1 bis 7, **dadurch gekennzeichnet, dass** die Komponente F eine oder mehrere Verbindungen der Formel I-1, wie in Anspruch 5 angegeben, enthält, worin $X^{11}$ F bedeutet.

9. Flüssigkristallmedium nach mindestens einem der Ansprüche 1 bis 8, **dadurch gekennzeichnet, dass** es neben einer Komponente A zusätzlich eine oder mehrere Komponenten ausgewählt aus der Gruppe der folgenden Komponenten, Komponenten B bis E enthält

- einer stark dielektrisch positiven Komponente, Komponente B, die eine dielektrische Anisotropie von 10 oder mehr aufweist,
- einer stark dielektrisch negativen Komponente, Komponente C, die eine dielektrische Anisotropie mit einem Betrag von 5 oder mehr aufweist,
- einer Komponente, Komponente D, die eine dielektrische Anisotropie im Bereich von mehr als -5 und von weniger als 10 aufweist und aus Verbindungen mit sieben oder mehr fünf- oder sechsgliedrigen Ringen besteht,

und

- eine Komponente, Komponente E, die ebenfalls eine dielektrische Anisotropie im Bereich von mehr als -5,0 und von weniger als 10,0 aufweist und aus Verbindungen mit bis zu sechs fünf- oder sechsgliedrigen Ringen besteht.

**10.** Flüssigkristallmedium nach Anspruch 9, **dadurch gekennzeichnet, dass** es eine Komponente B enthält.

**11.** Flüssigkristallmedium nach mindestens einem der Ansprüche 9 und 10 **dadurch gekennzeichnet, dass** es eine Komponente D enthält.

**12.** Flüssigkristallmedium nach einem oder mehreren der Ansprüche 1 bis 11, **dadurch gekennzeichnet, dass** es eine oder mehrere Verbindungen der Formel VI

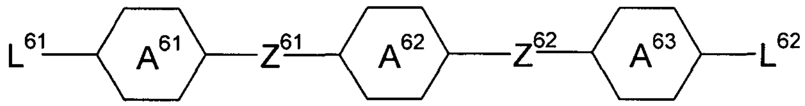 VI

worin

$L^{61}$ $R^{61}$ und, im Fall, dass $Z^{61}$ und/oder $Z^{62}$ *trans-* -CH=CH-oder *trans-* -CF=CF- bedeutet, alternativ auch $X^{61}$,
$L^{62}$ $R^{62}$ und, im Fall, dass $Z^{61}$ und/oder $Z^{62}$ *trans-* -CH=CH-oder *trans-* -CF=CF-, bedeutet, alternativ auch $X^{62}$,
$R^{61}$ und $R^{62}$ unabhängig voneinander H, unfluoriertes Alkyl oder unfluoriertes Alkoxy mit 1 bis 17 C-Atomen oder unfluoriertes Alkenyl, unfluoriertes Alkenyloxy oder unfluoriertes Alkoxyalkyl mit 2 bis 15 C-Atomen,
$X^{61}$ und $X^{62}$ unabhängig voneinander F oder Cl, -CN, -NCS, $-SF_5$, fluoriertes Alkyl oder Alkoxy mit 1 bis 7 C-Atomen oder fluoriertes Alkenyl, Alkenyloxy oder Alkoxyalkyl mit 2 bis 7 C-Atomen, oder -NCS,

einer von

$Z^{61}$ und $Z^{62}$ *trans-* -CH=CH-, *trans-* -CF=CF- oder -C=C- bedeutet und der andere unabhängig davon *trans-* -CH=CH-, *trans*--CF=CF- oder eine Einfachbindung bedeutet, und

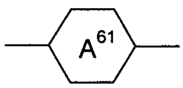 bis 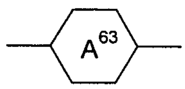

unabhängig voneinander

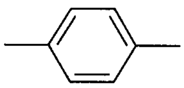 , 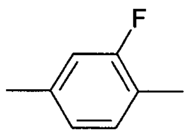 , 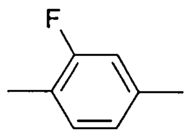 ,

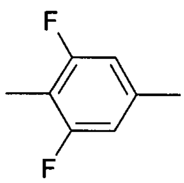 , 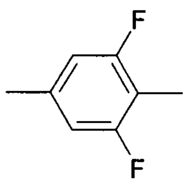 , 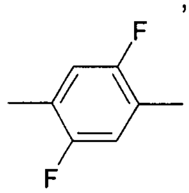 ,

oder

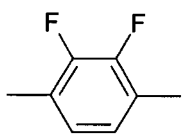 ,

bedeuten,
enthält.

**13.** Verfahren zur Herstellung eines Flüssigkristallmediums nach einem oder mehreren der Ansprüche 1 bis 12, **dadurch gekennzeichnet, dass** eine oder mehrere Verbindungen der Formel X, wie in Anspruch 1 angegeben, mit einer oder mehreren weiteren Verbindungen und/oder mit einem oder mehreren Additiven gemischt werden.

**14.** Verwendung eines Flüssigkristallmediums nach einem oder mehreren der Ansprüche 1 bis 12 in einem Bauteil für die Hochfrequenztechnik.

**15.** Bauteil für die Hochfrequenztechnik, **dadurch gekennzeichnet, dass** es ein Flüssigkristallmedium nach einem oder mehreren der Ansprüche 1 bis 12 enthält.

**16.** Bauteil nach Anspruch 15, **dadurch gekennzeichnet, dass** es sich um einen Phasenschieber handelt.

**17.** Mikrowellenantennenarray, **dadurch gekennzeichnet, dass** es ein oder mehrere Bauteile nach einem oder mehreren der Ansprüche 15 und 16 enthält.

**18.** Verfahren zum Abstimmen eines Mikrowellenantennenarrays, **dadurch gekennzeichnet, dass** das ein Bauteil nach einem oder mehreren der Ansprüche 15 und 16 elektrisch angesteuert wird.

**19.** Verbindung der Formel X

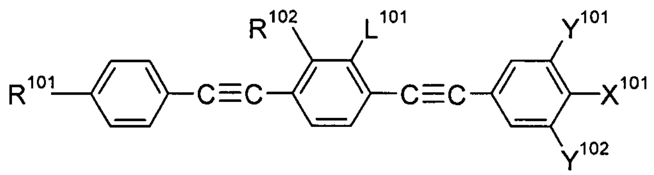

X

worin die Parameter die in Anspruch 1 unter Formel X gegebenen Bedeutungen haben.

**20.** Verfahren zur Herstellung einer Verbindung der Formel X

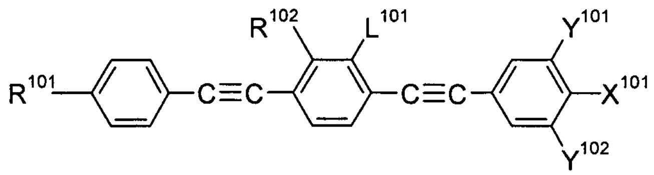

X

worin die Parameter die in Anspruch 1 unter Formel X gegebenen Bedeutungen haben, **dadurch gekennzeichnet, dass** ein Halogenbenzolderivat mit einem Ethinylbenzolderivat mit Hilfe eines Palladiumkatalysators gekoppelt wird.

**21.** Verwendung einer Verbindung der Formel X

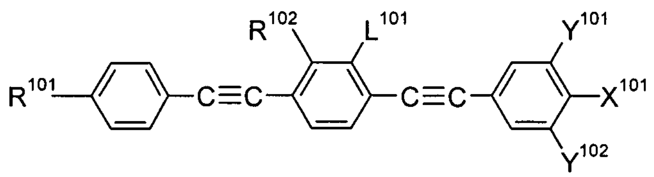

X

worin die Parameter die in Anspruch 1 unter Formel X gegebenen Bedeutungen haben, in einer Flüssigkristallmischung.

## Claims

1. Liquid-crystal medium, **characterised in that** it comprises a component A which comprises one or more compounds of the formula X,

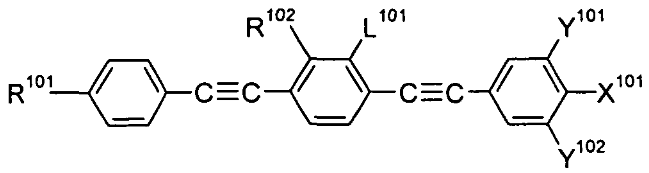

X

in which

$L^{101}$ denotes alkyl having 1 to 6 C atoms, cycloalkyl having 3 to 6 C atoms, cycloalkenyl having 4 to 6 C atoms or halogen,
$X^{101}$ denotes halogenated alkyl, alkenyl, alkoxy or alkenyloxy having 1, 2 or 3 C atoms, CN, NCS, $SF_5$ or halogen,
$Y^{101}$ and $Y^{102}$, independently of one another, denote H, F or Cl,
$R^{101}$ to $R^{102}$, independently of one another, denote unfluorinated alkyl or unfluorinated alkoxy, each having 1 to 15 C atoms, unfluorinated alkenyl, unfluorinated alkenyloxy or unfluorinated alkoxyalkyl, each having 2 to 15 C atoms, or cycloalkyl, alkylcycloalkyl, cycloalkenyl, alkylcycloalkenyl, alkylcycloalkylalkyl or alkylcycloalkenylalkyl, each having up to 15 C atoms.

2. Liquid-crystal medium according to Claim 1, **characterised in that** component A comprises one or more compounds of the formula X-2

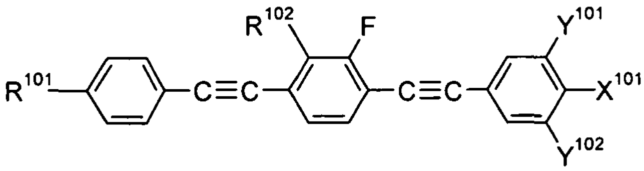

X-2

in which the parameters have the meanings given in Claim 1 under formula X.

3. Liquid-crystal medium according to at least one of Claims 1 and 2, **characterised in that** it additionally comprises one or more compounds of the formula X-1

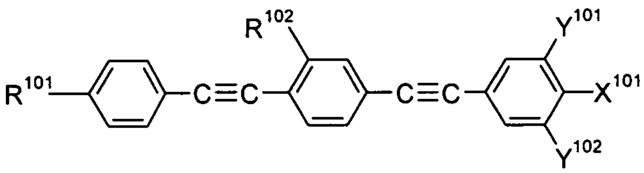

X-1

in which the parameters have the meanings given in Claim 1 under formula X.

4. Liquid-crystal medium according to at least one of Claims 1 to 3, **characterised in that** it comprises a component F which comprises one or more compounds of the formula I

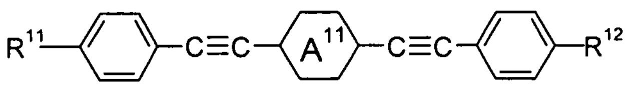

I

in which

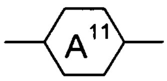 denotes 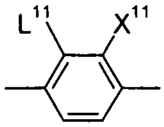, 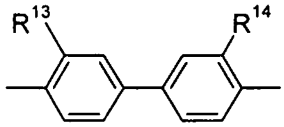,

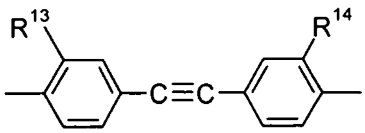 or 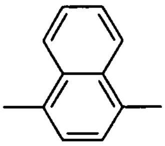,

$L^{11}$ denotes alkyl having 1 to 6 C atoms, cycloalkyl having 3 to 6 C atoms, cycloalkenyl having 4 to 6 C atoms or halogen,
$X^{11}$ denotes H, alkyl having 1 to 3 C atoms or halogen,
$R^{11}$ to $R^{14}$, independently of one another, denote unfluorinated alkyl or unfluorinated alkoxy, each having 1 to 15 C atoms, unfluorinated alkenyl, unfluorinated alkenyloxy or unfluorinated alkoxyalkyl, each having 2 to 15 C atoms, or cycloalkyl, alkylcycloalkyl, cycloalkenyl, alkylcycloalkenyl, alkylcycloalkylalkyl or alkylcycloalkenylalkyl, each having up to 15 C atoms, and alternatively one of $R^{13}$ and $R^{14}$ or both also denote H.

**5.** Liquid-crystal medium according to at least one of Claims 1 to 4, **characterised in that** component A comprises one or more compounds selected from the group of the compounds of the formulae I-1 to I-4

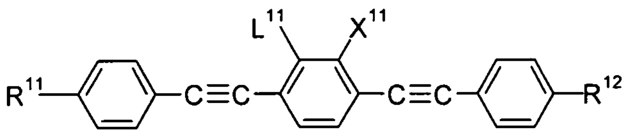 I-1

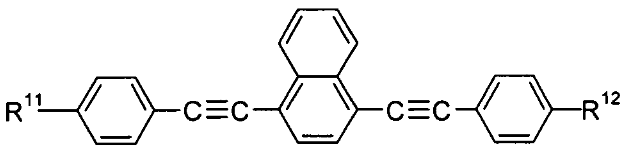 I-2

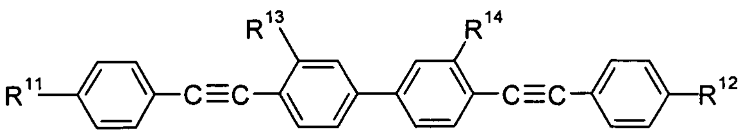 I-3

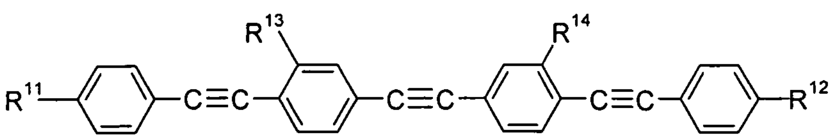 I-4

in which the parameters have the meanings given in Claim 4 under formula I.

**6.** Liquid-crystal medium according to at least one of Claims 1 to 5, **characterised in that** component F comprises one or more compounds of the formula I-2 and/or of the formula I-3 and/or of the formula I-4, as indicated in Claim 5.

**7.** Liquid-crystal medium according to at least one of Claims 1 to 6, **characterised in that** component F comprises one or more compounds of the formula I-1, as indicated in Claim 5, in which $X^{11}$ denotes H.

**8.** Liquid-crystal medium according to at least one of Claims 1 to 7, **characterised in that** component F comprises one or more compounds of the formula I-1, as indicated in Claim 5, in which $X^{11}$ denotes F.

**9.** Liquid-crystal medium according to at least one of Claims 1 to 8, **characterised in that**, besides a component A, it additionally comprises one or more components selected from the group of the following components, components B to E:

- a strongly dielectrically positive component, component B, which has a dielectric anisotropy of 10 or more,
- a strongly dielectrically negative component, component C, which has a dielectric anisotropy having a value of 5 or more,
- a component, component D, which has a dielectric anisotropy in the range from more than -5 to less than 10 and consists of compounds having seven or more five- or six-membered rings,
- a component, component E, which likewise has a dielectric anisotropy in the range from more than -5.0 to less than 10.0 and consists of compounds having up to six five- or six-membered rings.

**10.** Liquid-crystal medium according to Claim 9, **characterised in that** it comprises a component B.

**11.** Liquid-crystal medium according to at least one of Claims 9 and 10, **characterised in that** it comprises a component D.

**12.** Liquid-crystal medium according to one or more of Claims 1 to 11, **characterised in that** it comprises one or more compounds of the formula VI

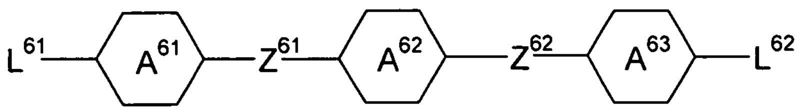

VI

in which

$L^{61}$ denotes $R^{61}$ and, in the case where $Z^{61}$ and/or $Z^{62}$ denote *trans* -CH=CH- or *trans* -CF=CF-, alternatively also denotes $X^{61}$,
$L^{62}$ denotes $R^{62}$ and, in the case where $Z^{61}$ and/or $Z^{62}$ denote *trans* -CH=CH- or *trans* -CF=CF-, alternatively also denotes $X^{62}$,
$R^{61}$ and $R^{62}$, independently of one another, denote H, unfluorinated alkyl or unfluorinated alkoxy having 1 to 17 C atoms or unfluorinated alkenyl, unfluorinated alkenyloxy or unfluorinated alkoxyalkyl having 2 to 15 C atoms,
$X^{61}$ and $X^{62}$, independently of one another, denote F or Cl, -CN, -NCS, $-SF_5$, fluorinated alkyl or alkoxy having 1 to 7 C atoms or fluorinated alkenyl, alkenyloxy or alkoxyalkyl having 2 to 7 C atoms, or -NCS,

one of

$Z^{61}$ and $Z^{62}$ denotes *trans* -CH=CH-, *trans* -CF=CF- or -C=C- and the other, independently thereof, denotes *trans* -CH=CH-, *trans* -CF=CF- or a single bond, and

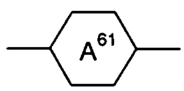 to 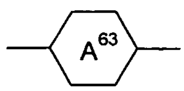,

independently of one another, denote

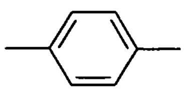, 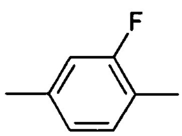, 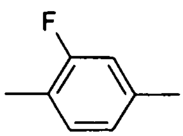,

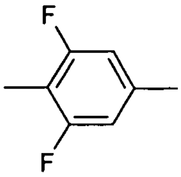,
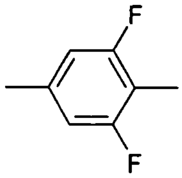,
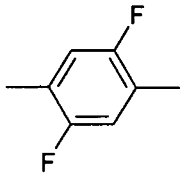

or

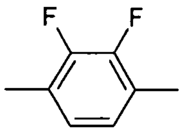

**13.** Process for the preparation of a liquid-crystal medium according to one or more of Claims 1 to 12, **characterised in that** one or more compounds of the formula X, as indicated in Claim 1, are mixed with one or more further compounds and/or with one or more additives.

**14.** Use of a liquid-crystal medium according to one or more of Claims 1 to 12 in a component for high-frequency technology.

**15.** Component for high-frequency technology, **characterised in that** it contains a liquid-crystal medium according to one or more of Claims 1 to 12.

**16.** Component according to Claim 15, **characterised in that** it is a phase shifter.

**17.** Microwave antenna array, **characterised in that** it comprises one or more components according to one or more of Claims 15 and 16.

**18.** Process for tuning a microwave antenna array, **characterised in that** the component according to one or more of Claims 15 and 16 is electrically addressed.

**19.** Compound of the formula X

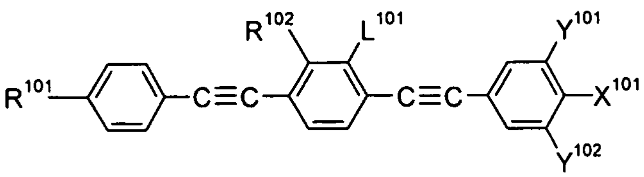

X

in which the parameters have the meanings given in Claim 1 under formula X.

**20.** Process for the preparation of a compound of the formula X

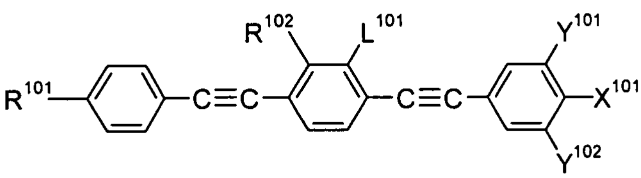

X

in which the parameters have the meanings given in Claim 1 under formula X, **characterised in that** a halobenzene derivative is coupled to an ethynylbenzene derivative with the aid of a palladium catalyst

**21.** Use of a compound of the formula X

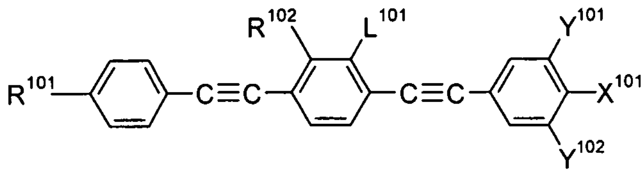

X

in which the parameters have the meanings given in Claim 1 under formula X, in a liquid-crystal mixture.

## Revendications

1. Milieu cristallin liquide, **caractérisé en ce qu'**il comprend un composant A, lequel comprend un ou plusieurs composé(s) de la formule X :

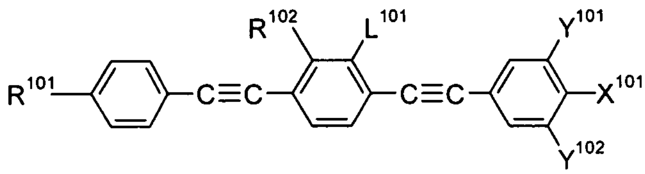

X

dans laquelle :

$L^{101}$ représente alkyle comportant 1 à 6 atome(s) de C, cycloalkyle comportant 3 à 6 atomes de C, cycloalkényle comportant 4 à 6 atomes de C ou halogène,
$X^{101}$ représente alkyle, alkényle, alcoxy ou alkényloxy halogéné comportant 1, 2 ou 3 atome(s) de C, CN, NCS, $SF_5$ ou halogène,
$Y^{101}$ et $Y^{102}$ représentent, indépendamment l'un de l'autre, H, F ou Cl,
$R^{101}$ à $R^{102}$ représentent, indépendamment les uns des autres, alkyle non fluoré ou alcoxy non fluoré dont chacun comporte 1 à 15 atome(s) de C, alkényle non fluoré, alkényloxy non fluoré ou alcoxyalkyle non fluoré dont chacun comporte 2 à 15 atomes de C, ou cycloalkyle, alkylcycloalkyle, cycloalkényle, alkylcycloalkényle, alkylcycloalkylalkyle ou alkylcycloalkénylalkyle dont chacun comporte jusqu'à 15 atomes de C.

2. Milieu cristallin liquide selon la revendication 1, **caractérisé en ce que** le composant A comprend un ou plusieurs composé(s) de la formule X-2 :

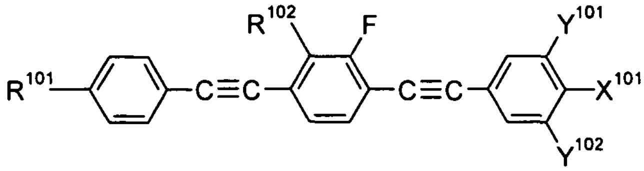

X-2

dans laquelle les paramètres présentent les significations données selon la revendication 1 sous la formule X.

3. Milieu cristallin liquide selon au moins l'une des revendications 1 et 2, **caractérisé en ce qu'**il comprend de façon additionnelle un ou plusieurs composé(s) de la formule X-1 :

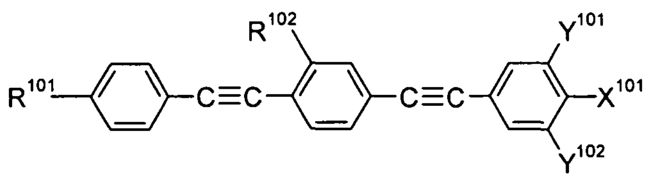

X-1

dans laquelle les paramètres présentent les significations données selon la revendication 1 sous la formule X.

**4.** Milieu cristallin liquide selon au moins l'une des revendications 1 à 3, **caractérisé en ce qu'**il comprend un composant F, lequel comprend un ou plusieurs composé(s) de la formule I :

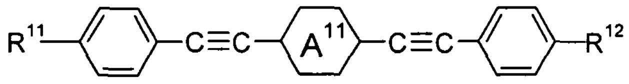

I

dans laquelle :

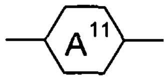

représente

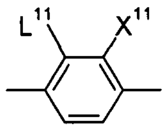

,

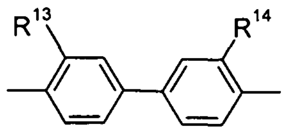

,

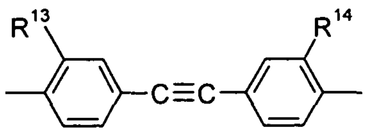

ou

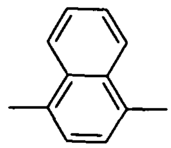

,

$L^{11}$ représente alkyle comportant 1 à 6 atome(s) de C, cycloalkyle comportant 3 à 6 atomes de C, cycloalkényle comportant 4 à 6 atomes de C ou halogène,
$X^{11}$ représente H, alkyle comportant 1 à 3 atome(s) de C ou halogène,
$R^{11}$ à $R^{14}$ représentent, indépendamment les uns des autres, alkyle non fluoré ou alcoxy non fluoré dont chacun comporte 1 à 15 atome(s) de C, alkényle non fluoré, alkényloxy non fluoré ou alcoxyalkyle non fluoré dont chacun comporte 2 à 15 atomes de C, ou cycloalkyle, alkylcycloalkyle, cycloalkényle, alkylcycloalkényle, alkylcycloalkylalkyle ou alkylcycloalkénylalkyle dont chacun comporte jusqu'à 15 atomes de C, et à titre d'alternative, l'un de $R^{13}$ et $R^{14}$ ou les deux représente(nt) également H.

**5.** Milieu cristallin liquide selon au moins l'une des revendications 1 à 4, **caractérisé en ce que** le composant A comprend un ou plusieurs composé(s) choisi(s) parmi le groupe des composés des formules I-1 à I-4 :

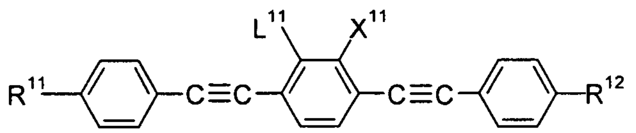

I-1

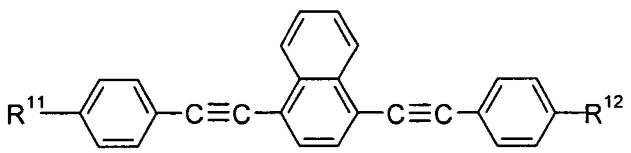

I-2

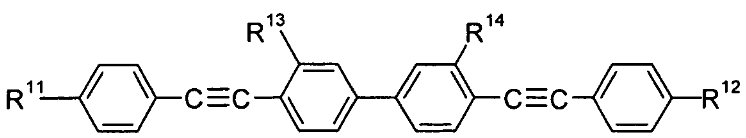

I-3

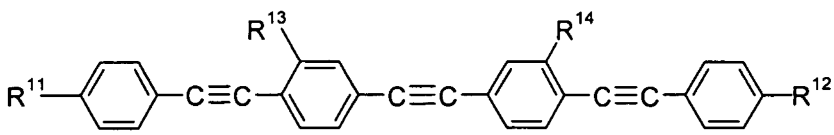

I-4

dans lesquelles les paramètres présentent les significations données selon la revendication 4 sous la formule I.

6. Milieu cristallin liquide selon au moins l'une des revendications 1 à 5, **caractérisé en ce que** le composant F comprend un ou plusieurs composé(s) de la formule I-2 et/ou de la formule I-3 et/ou de la formule I-4, comme indiqué selon la revendication 5.

7. Milieu cristallin liquide selon au moins l'une des revendications 1 à 6, **caractérisé en ce que** le composant F comprend un ou plusieurs composé(s) de la formule I-1, comme indiqué selon la revendication 5, dans laquelle $X^{11}$ représente H.

8. Milieu cristallin liquide selon au moins l'une des revendications 1 à 7, **caractérisé en ce que** le composant F comprend un ou plusieurs composés de la formule I-1, comme indiqué selon la revendication 5, dans laquelle $X^{11}$ représente F.

9. Milieu cristallin liquide selon au moins l'une des revendications 1 à 8, **caractérisé en ce que**, en plus d'un composant A, il comprend de façon additionnelle un ou plusieurs composant(s) choisi(s) parmi le groupe des composants qui suivent, soit les composants B à E :

- un composant fortement diélectriquement positif, soit le composant B, lequel présente une anisotropie diélectrique d'une valeur de 10 ou plus,
- un composant fortement diélectriquement négatif, soit le composant C, lequel présente une anisotropie diélectrique d'une valeur de 5 ou plus,
- un composant, soit le composant D, lequel présente une anisotropie diélectrique dans la plage qui va de plus de -5 à moins de 10 et est constitué par des composés comportant sept ou plus de sept cycles à cinq ou six éléments,
- un composant, soit le composant E, lequel présente pareillement une anisotropie diélectrique dans la plage qui va de plus de -5,0 à moins de 10,0 et est constitué par des composés comportant jusqu'à six cycles à cinq ou six éléments.

10. Milieu cristallin liquide selon la revendication 9, **caractérisé en ce qu'**il comprend un composant B.

11. Milieu cristallin liquide selon au moins l'une des revendications 9 et 10, **caractérisé en ce qu'**il comprend un composant D.

12. Milieu cristallin liquide selon une ou plusieurs des revendications 1 à 11, **caractérisé en ce qu'**il comprend un ou plusieurs composé(s) de la formule VI :

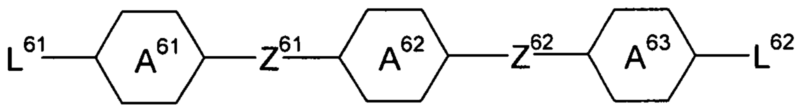

VI

dans laquelle :

$L^{61}$ représente $R^{61}$ et, dans le cas où $Z^{61}$ et/ou $Z^{62}$ représente(nt) *trans* -CH=CH- ou *trans* -CF=CF-, il représente à titre d'alternative également $X^{61}$,
$L^{62}$ représente $R^{62}$ et, dans le cas où $Z^{61}$ et/ou $Z^{62}$ représente(nt) *trans* -CH=CH- ou *trans* -CF=CF-, il représente à titre d'alternative également $X^{62}$,
$R^{61}$ et $R^{62}$ représentent, indépendamment l'un de l'autre, H, alkyle non fluoré ou alcoxy non fluoré comportant 1 à 17 atome(s) de C ou alkényle non fluoré, alkényloxy non fluoré ou alcoxyalkyle non fluoré comportant 2 à 15 atomes de C,
$X^{61}$ et $X^{62}$ représentent, indépendamment l'un de l'autre, F ou Cl, -CN, -NCS, -$SF_5$, alkyle ou alcoxy fluoré comportant 1 à 7 atome(s) de C ou alkényle, alkényloxy ou alcoxyalkyle fluoré comportant 2 à 7 atomes de C, ou -NCS,

l'un de

$Z^{61}$ et $Z^{62}$ représente *trans* -CH=CH-, *trans* -CF=CF- ou -C=C- et l'autre, indépendamment de celui-ci, représente

*trans* -CH=CH-, *trans* -CF=CF- ou une liaison simple, et

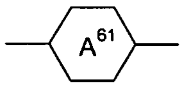 à 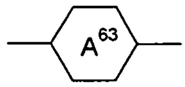 ,

représentent, indépendamment les uns des autres,

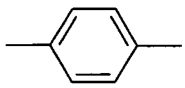 , 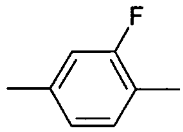 , 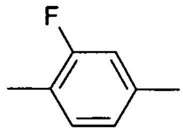 ,

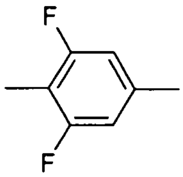 , 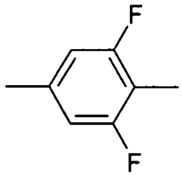 , 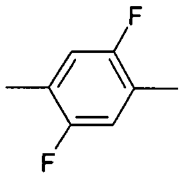

ou

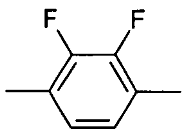 .

**13.** Procédé pour la préparation d'un milieu cristallin liquide selon une ou plusieurs des revendications 1 à 12, **caractérisé en ce qu'**un ou plusieurs composé(s) de la formule X, comme indiqué selon la revendication 1, est/sont mélangé(s) avec un ou plusieurs autre(s) composé(s) et/ou avec un ou plusieurs additif(s).

**14.** Utilisation d'un milieu cristallin liquide selon une ou plusieurs des revendications 1 à 12 dans un composant pour une technologie hautes fréquences.

**15.** Composant pour une technologie hautes fréquences, **caractérisé en ce qu'**il contient un milieu cristallin liquide selon une ou plusieurs des revendications 1 à 12.

**16.** Composant selon la revendication 15, **caractérisé en ce qu'**il s'agit d'un déphaseur.

**17.** Antenne réseau micro-ondes, **caractérisée en ce qu'**elle comprend un ou plusieurs composant(s) selon une ou plusieurs des revendications 15 et 16.

**18.** Procédé pour accorder une antenne réseau micro-ondes, **caractérisé en ce que** le composant selon une ou plusieurs des revendications 15 et 16 est adressé électriquement.

**19.** Composé de la formule X :

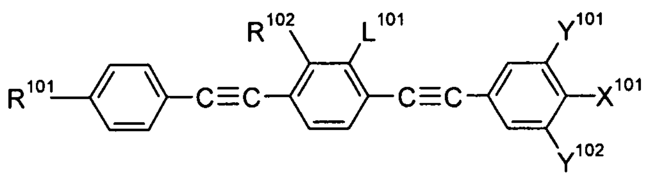 X

dans laquelle les paramètres présentent les significations données selon la revendication 1 sous la formule X.

**20.** Procédé pour la préparation d'un composé de la formule X :

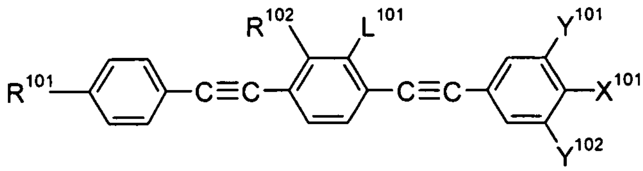

X

dans laquelle les paramètres présentent les significations données selon la revendication 1 sous la formule X, **caractérisé en ce qu'**un dérivé d'halobenzène est couplé à un dérivé d'éthynylbenzène à l'aide d'un catalyseur de palladium.

**21.** Utilisation d'un composé de la formule X :

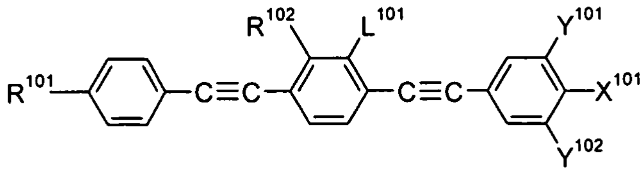

X

dans laquelle les paramètres présentent les significations données selon la revendication 1 sous la formule X, dans un mélange de cristaux liquides.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19907941 A1
- DE 10120024 A1
- EP 0968988 A1
- US 5356558 A
- JP 2003207631 A
- DE 102004029429 A
- JP 2005120208 A


### In der Beschreibung aufgeführte Nicht-Patentliteratur


- **WU, S.-T. ; HSU, C.-S. ; SHYU, K.-F.** *Appl. Phys. Lett.,* 1999, vol. 74 (3), 344-346
- **HSU, C. S. ; SHYU, K. F. ; CHUANG, Y. Y. ; WU, S.-T.** *Liq. Cryst.,* 2000, vol. 27 (2), 283-287
- **Z. ZHANG et al.** *Liquid Crystals,* 2009, vol. 37 (1), 69-76
- **K. LIU et al.** *Liquid Crystals,* 2001, vol. 28 (10), 1463-1467
- **DABROWSKI, R. ; KULA, P. ; GAUZA, S. ; DZIADISZEK, J. ; URBAN, S. ; WU, S.-T.** *IDRC,* 2008, vol. 08, 35-38
- **A. GAEBLER ; A. MOESSINGER ; F. GOELDEN et al.** Liquid Crystal-Reconfigurable Antenna Concepts for Space Applications at Microwave and Millimeter Waves. *International Journal of Antennas and Propagation,* 2009, vol. 2009, 1-7
- **A. PENIRSCHKE ; S. MÜLLER ; P. SCHEELE ; C. WEIL ; M. WITTEK ; C. HOCK ; R. JAKOBY.** Cavity Perturbation Method for Characterization of Liquid Crystals up to 35 GHz. *European Microwave Conference - Amsterdam,* 545-548
- Direct Simulation of Material Permittivities using an Eigen-Susceptibility Formulation of the Vector Variational Approach. **A. GAEBLER ; F. GOELDEN ; S. MÜLLER ; A. PENIRSCHKE ; R. JAKOBY.** 12MTC 2009 - International Instrumentation and Measurement Technology Conference. IEEE, 2009, 463-467
- Single compounds and mixtures for microwave applications, Dielectric, microwave studies on selected systems. **A. LAPANIK.** Dissertation. Technische Universität Darmstadt, 2009
- Merck Liquid Crystals, Physical Properties of Liquid Crystals. Merck KGaA, November 1997
- Cavity Perturbation Method for Characterization of Liquid Crystals up to 35GHz. European Microwave Conference - Amsterdam. 545-548
- Direct Simulation of Material Permittivites ... **A. GAEBLER et al.** 12MTC 2009 - International Instrumentation and Measurement Technology Conference. IEEE, 2009, 463-467
- **A. PENIRSCHKE et al.** *European Microwave Conference - Amsterdam,* 545-548
- **HSU, C. S. ; SHYU, K. F. ; CHUANG, Y. Y. ; WU, S.-T.** *Liq. Cryst.,* 2000, vol. 27 (2), 283-287